(19) Europäisches Patentamt
European Patent Office
Office européen des brevets

(11) **EP 4 602 981 A1**

(12) **EUROPEAN PATENT APPLICATION**
published in accordance with Art. 153(4) EPC

(43) Date of publication:
**20.08.2025 Bulletin 2025/34**

(21) Application number: **23876610.9**

(22) Date of filing: **08.10.2023**

(51) International Patent Classification (IPC):
**A47J 27/00** (2006.01)        **A47J 36/00** (2006.01)

(52) Cooperative Patent Classification (CPC):
**A47J 27/00; A47J 36/00**

(86) International application number:
**PCT/CN2023/123360**

(87) International publication number:
**WO 2024/078408 (18.04.2024 Gazette 2024/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **13.10.2022  CN 202211255667**
**13.10.2022  CN 202211255359**
**13.10.2022  CN 202211255984**
**08.11.2022  CN 202211394032**
**28.12.2022  CN 202211702898**

(71) Applicant: **Tineco Intelligent Technology Co., Ltd.**
**Suzhou, Jiangsu 215168 (CN)**

(72) Inventors:
• **LIU, Kai**
**Suzhou, Jiangsu 215168 (CN)**
• **SUN, Haoxuan**
**Suzhou, Jiangsu 215168 (CN)**
• **NIU, Baoguo**
**Suzhou, Jiangsu 215168 (CN)**
• **PANG, Jiawei**
**Suzhou, Jiangsu 215168 (CN)**
• **WANG, Jialiang**
**Suzhou, Jiangsu 215168 (CN)**
• **CHENG, Rongyang**
**Suzhou, Jiangsu 215168 (CN)**
• **MA, Xiaolin**
**Suzhou, Jiangsu 215168 (CN)**
• **MA, Liangliang**
**Suzhou, Jiangsu 215168 (CN)**
• **GUAN, Yufeng**
**Suzhou, Jiangsu 215168 (CN)**
• **LI, Yunfeng**
**Suzhou, Jiangsu 215168 (CN)**

(74) Representative: **Renaudo, Adrien Hanouar**
**Patendibüroo Käosaar OÜ**
**Tähe 94**
**50107 Tartu (EE)**

(54) **COOKING APPARATUS AND FEEDING DEVICE**

(57)    Provided are a cooking device and a feeding apparatus. The cooking device includes a feeding apparatus. The feeding apparatus includes a seasoning box assembly (1a) and a feeding box assembly (2a); the seasoning box assembly (1a) includes a frame (11a) and at least one seasoning box (12a) sequentially arranged on the rack (11a) in an X-axis direction; the top of the seasoning box (12a) is higher than the top of the frame (11a); the feeding box assembly (2a) includes a housing (21a) mounted on the frame (11a), at least one feeding box (22a) located at the top of the housing (21a), and a motion apparatus, which is located in an inner cavity of the housing (21a) and is configured to drive the feeding box (22a) to move in the X-axis direction; and the motion apparatus includes a motion mechanism (23a) controlled by a driving mechanism, where projections of the motion mechanism (23a) and the seasoning box (12a) on a vertical plane parallel to an X-axis partially overlap with the driving mechanism (24a), respectively. **In** this way, the structure of the feeding apparatus is compact, and moreover, the overall height of the feeding apparatus can be reduced while the volume of the seasoning box (12a) is not reduced, or alternatively the volume of the seasoning box (12a) is increased while the overall height of the feeding apparatus is not increased.

EP 4 602 981 A1

FIG. 3

**Description**

**CROSS-REFERENCE TO RELATED APPLICATIONS**

The present disclosure refers to Chinese Patent Application No. 202211255359.4, filed on October 13, 2022, and entitled "Cooking Device and Feeding Apparatus", Chinese Patent Application No. 202211255984.9, filed on October 13, 2022, and entitled "Feeding Apparatus and Material storage container", Chinese Patent Application No. 202211255667.7, filed on October 13, 2022, and entitled "Cooking Device and Feeding Apparatus", Chinese Patent Application No. 202211394032.5, filed on November 08, 2022, and entitled "Feeding Method of Cooking Device and Cooking Device", and Chinese Patent Application No. 202211702898.8, filed on December 28, 2022, and entitled "Feeding Apparatus for Cooking Apparatus and Cooking System", which are hereby incorporated by reference in their entireties.

**TECHNICAL FIELD**

The embodiments of the present disclosure relate to the field of cooking, and in particular to a cooking device; and the present disclosure also relates to a feeding apparatus for feeding.

**BACKGROUND**

In order to meet people's different needs for various cooking scenarios, related home appliances are constantly updated and cooking device is gradually becoming intelligent. For example, stir-frying machines, cooking machines, high speed blenders, smart rice cookers and other products.

The current cooking machine puts seasonings into the pot through an automatic seasoning box, and puts dishes into the pot through an automatic dish-putting machine. However, the existing automatic seasoning box and automatic dish-putting machine are large in size, not compact in layout, occupy too much space, and are not suitable for use in a kitchen with a small space.

The current cooking devices such as stir-fry machines may include a feeding apparatus and a cooking assembly, the feeding apparatus is used to provide ingredients and/or seasonings to the cooking assembly. Specifically, the feeding apparatus includes a material storage container such as a dish box. After feeding, there is a problem that ingredients and/or seasonings still remain in the material storage container, resulting in that the ingredients and/or seasonings cannot be fully put into the cooking assembly. Furthermore, when the ingredients and/or seasonings stored in the material storage container are liquid, there is a problem of liquid splashing when pouring, which affects the user experience.

The current cooking machine puts seasoning into the pot through an automatic feeding box and puts dishes into the pot through a feeding mechanism. Therefore, it is necessary to set an electromagnet on the feeding arm to adsorb the feeding box onto the feeding arm by the electromagnet. Also, since the feeding arm needs to rotate during the feeding process, the life of the electromagnet power supply line will be greatly reduced during use, and the user needs to frequently repair the feeding mechanism, thereby reducing the user experience.

For intelligent cooking devices such as stir-fry machines, the feeding apparatus therein will provide ingredients and/or seasonings to the cooking container when in use. However, during the feeding process, the ingredients and/or seasonings may splash out of the cooking container, thereby resulting in a waste of ingredients and/or seasonings and causing pollution to the external environment.

With the improvement of living standards, people's demand for kitchen appliances is getting higher and higher. From smart rice cookers to smart kitchens, they are all designed to meet modern people's demand for smart kitchen appliances. Cooking machines as smart home appliances came into being. A cooking machine is usually equipped with a feeding system, which feeds the ingredients to be cooked in a dish box into the cooking pot of the cooking machine for cooking.

The current feeding system usually uses an electromagnet to absorb the magnet at the bottom of the dish box so that the dish box is fixed to the feeding system, which is convenient for the feeding system to perform feeding operations. However, due to the inevitable processing errors and assembly errors of the electromagnets on the feeding system, the electromagnet is prone to deformation, skewness and other problems, which means that the electromagnet cannot reliably adsorb the dish box and the dish box are prone to fall off the feeding system.

**SUMMARY**

In order to solve the problems existing in the prior art, the present disclosure provides a cooking device and a feeding apparatus.

A cooking device provided in the present disclosure includes a feeding apparatus, where the feeding apparatus includes:

a seasoning box assembly, where the seasoning box assembly includes a frame and at least one seasoning box arranged in sequence on the frame along an X-axis direction; a top of the seasoning box is higher than a top of the frame;

a feeding box assembly, wherein the feeding box assembly comprises a housing mounted on the frame, at least one feeding box located on the top of the housing, and a motion apparatus located in an inner cavity of the housing and constructed to drive the feeding box to move along the X-axis direction; the motion apparatus comprises a motion mechanism controlled by a driving mechanism; and projections of the motion mechanism and the seasoning box on a vertical plane parallel to the X-axis respectively partially overlap with the driving mechanism.

A feeding apparatus provided in the present disclosure includes:

a seasoning box assembly, where the seasoning box assembly includes a frame and at least one seasoning box arranged in sequence on the frame along an X-axis direction; a top of the seasoning box is higher than a top of the frame;

a feeding box assembly, where the feeding box assembly includes a housing mounted on the frame, at least one feeding box located on a top of the housing, and a motion apparatus located in an inner cavity of the housing and constructed to drive the feeding box to move along the X-axis direction; the motion apparatus includes a motion mechanism controlled by a driving mechanism; projections of the motion mechanism and the seasoning box on a vertical plane parallel to the X-axis respectively partially overlap with the driving mechanism.

For the cooking device disclosed in the present disclosure, projections of the motion mechanism and the seasoning box in the feeding apparatus on a vertical plane parallel to the X-axis respectively partially overlap with the driving mechanism, which not only makes the structure of the feeding apparatus compact, but also can reduce the overall height of the feeding apparatus without reducing the volume of the seasoning box, or increase the volume of the seasoning box without increasing the overall height of the feeding device.

The present disclosure provides a feeding apparatus for supplying materials to a cooking assembly, which includes a bearing assembly, at least two material storage containers and a feeding assembly. The bearing assembly includes a driving piece and a bearing piece, the driving piece is connected to the bearing piece and is able to drive the bearing piece to move along a first direction; at least two material storage containers arranged on the bearing piece along the first direction, and the material storage containers have a discharge port; the feeding assembly has a driving part and a feeding part, the driving part is connected to the feeding part, and the feeding part is used to drive the material storage containers to move relative to the bearing piece, to supply material from the discharge port to the cooking assembly.

where, the material storage containers are provided with a guide part, the guiding part is located on a side of the discharge port close to the cooking assembly and comprises a guide section and an anti-backflow section arranged in sequence, the anti-backflow section extends from the guide section in a direction away from the discharge port, to form a bend at a junction of the guide section and the anti-backflow section, and a bending angle of the bend is greater than or equal to 90°.

Correspondingly, the present disclosure also provides a material storage container, which includes a discharge port, a guide section and an anti-backflow section. The guide section is arranged at the discharge port, for forming a Coanda effect; the anti-backflow section is arranged at an end of the guide section, and the anti-backflow section extends from the guide section in a direction away from the discharge port to form a bend at a junction of the guide section and the anti-backflow section.

The present disclosure has the following beneficial effects: the present disclosure provides a feeding apparatus and a material storage container, where the material storage container is provided with a guide part, the guide part is located on a side of the discharge port close to the cooking assembly, and includes a guide section and an anti-backflow section arranged in sequence. Through the Coanda effect, the guide section guides the liquid food to flow adjacent to it, thereby reducing the liquid splashing when the liquid food leaves the material storage container from the discharge port. At the same time, the anti-backflow section prevents the liquid food from flowing back and causing residue in the material storage container.

In some embodiments, a contraction section contracting toward the middle is formed at the discharge port, and when in use, the liquid food will gather toward the middle, reducing liquid splashing that may occur when contacting the cooking assembly.

In addition, the bearing assembly of the feeding apparatus and the material storage container form a matching gap at the front position close to the cooking assembly, and the matching gap can guide the material storage container to slide down and realize automatic correction of the position of the material storage container.

A cooking device provided in the present disclosure includes a feeding apparatus, the feeding apparatus includes a frame, a feeding box and a feeding mechanism, and the feeding mechanism is configured to drive the feeding box to feed; the feeding mechanism includes:

a feeding arm, where the feeding arm is connected to the frame in a rotation way;

an electromagnet, where the electromagnet is arranged on the feeding arm and is configured to adsorb the feeding box when being powered;

a conductive apparatus, where the conductive apparatus includes a rotor and a stator being connected in a rotation way and electrically conductive, the stator is fixed on the frame, the rotor is constructed to rotate synchronously with the feeding arm; the rotor is provided with a conductive wire rotating synchronously with the rotor and the feeding arm, the conductive wire is constructed to extend from a position connected with the rotor to a position connected with the electromagnet.

According to the present disclosure, a feeding apparatus is provided, including a frame, a feeding box and a feeding mechanism, where the feeding mechanism is configured to drive the feeding box to feed;
the feeding mechanism includes:

a feeding arm, where the feeding arm is connected to the frame in a rotation way;

an electromagnet, where the electromagnet is arranged on the feeding arm and configured to adsorb the feeding box when powered;

a conductive apparatus, where the conductive apparatus includes a rotor and a stator being connected in a rotation way and electrically conductive, the stator is fixed on the frame, the rotor is constructed to rotate synchronously with the feeding arm; the rotor is provided with a conductive wire rotating synchronously with the rotor and the feeding arm, and the conductive wire is constructed to extend from a position connected with the rotor to a position connected with the electromagnet.

According to the present disclosure, a feeding apparatus is provided, including a frame, a feeding box, a tray and a feeding mechanism, where the tray is arranged on the top of the frame, the feeding box is arranged on the tray, the tray is provided with a feeding hole, a blocking edge is arranged at an end of the feeding hole facing a feeding direction, and the feeding mechanism is configured to drive the feeding box to feed through the feeding hole;
the feeding mechanism includes a feeding arm connected to the frame in a rotation way; the feeding arm includes a hinge section and an adsorption section; the hinge section is constructed to be in an arch shape bending in a direction away from the feeding box, and is constructed to avoid the blocking edge when the feeding arm rotates to a feeding position.

The cooking device disclosed in the present disclosure avoids the life attenuation of the wire due to repeated bending, greatly prolongs the service life of the feeding mechanism, and the user does not need to frequently repair the feeding mechanism, thereby improving the user experience.

The present disclosure provides a feeding method for a cooking device, where there are a first stage and a second stage in a feeding process, a feeding assembly drives a material storage container to flip at an absolute angle of $\delta$ in the first stage, the feeding assembly drives the material storage container to flip at an absolute angle of $\theta$ in the second stage, and $\delta$ is less than $\theta$;
where, a speed at which the feeding assembly drives the material storage container to flip in the first stage is $W_1$, a speed at which the feeding assembly drives the material storage container to flip in the second stage is $W_2$, and $W_2$ is greater than $W_1$.

Correspondingly, the present disclosure also provides a cooking device, which includes a feeding apparatus, where the feeding apparatus includes a body and a connecting piece, the body has a matching part; and the connecting piece has a limiting part and a connecting part, where the limiting part is used to cooperate with the matching part to achieve positioning between the connecting piece and the body; and the connecting part is used to cooperate with a cooking container to achieve positioning between the connecting piece and the cooking container.

The present disclosure has the following beneficial effects: the present disclosure provides a feeding method for a cooking device and a cooking device, where the relative position between the connecting piece and the body is limited by the cooperation of the limiting part and the matching part, and the relative position between the connecting piece and the cooking container is limited by the setting of the connecting part, thereby limiting the relative position relationship between the cooking container and the body, and the feeding apparatus can feed the cooking container at a preset angle, thereby reducing the outward splashing of food and/or seasoning due to inaccurate positioning. The feeding method of the cooking device also helps to reduce splashing and reduce the residue of ingredients and/or seasonings in the material storage container.

The present disclosure provides a feeding apparatus applied to a cooking apparatus. The feeding apparatus includes an apparatus body. The feeding apparatus also includes a feeding piece, arranged on the apparatus body in a flippable way. The feeding apparatus also includes a movable magnetic assembly, movably arranged on the feeding piece. The feeding apparatus also includes a material holding piece, used for holding materials, where the material holding piece has a target magnetic part. The target magnetic part is configured to be able to be adsorbed on the movable magnetic assembly, so that the material holding piece is adsorbed on the material feeding piece and is able to flip with the material feeding piece to feed the material in the material holding piece into the cooking apparatus.

Correspondingly, the present disclosure also provides a cooking system, including a cooking apparatus and a feeding apparatus as described in the above embodiments, the feeding apparatus including: an apparatus body; a feeding piece, arranged on the apparatus body in a flippable way; a movable magnetic assembly, movably arranged on the feeding piece; and a material holding piece, used for holding materials, wherein the material holding piece has a target magnetic part; where, the target magnetic part is configured to be able to be adsorbed on the movable magnetic assembly, so that the material holding piece is adsorbed on the material feeding piece and is able to be turned over with the material feeding piece to feed materials in the material holding piece into the cooking apparatus.

The beneficial effect of the present disclosure is that, different from the prior art, the present disclosure provides a feeding apparatus and a cooking system applied to a cooking apparatus. The feeding apparatus includes a feeding piece, which can be turned over and is also provided with a movable magnetic assembly. The material holding piece for holding materials has a target magnetic assembly, which is configured to be adsorbed on the movable magnetic assembly, so that the material holding piece is adsorbed on the feeding piece and can be turned over with the feeding piece to put the material in the material holding piece into the cooking apparatus. The movable magnetic assembly can be movably arranged on the feeding piece. The movable magnetic assembly can adaptively adjust its own posture under the action of magnetic force to adsorb the material piece. Even if the movable magnetic assembly has processing errors and assembly errors, it can still reliably adsorb the material piece, thereby reducing the risk of the material piece falling off.

Other features and advantages of the present disclosure will become apparent from the following detailed description of exemplary embodiments of the present disclosure with reference to the accompanying drawings.

## BRIEF DESCRIPTION OF THE DRAWINGS

The accompanying drawings, which are incorporated in and constitute a part of this specification, illustrate embodiments consistent with the present disclosure and, together with the description, and serve to explain the principles of the present disclosure.

In order to more clearly illustrate the embodiments of the present disclosure or the technical solutions in the prior art, the drawings required for use in the embodiments or the description of the prior art will be briefly introduced below. Obviously, for ordinary technicians in this field, other drawings can be obtained based on these drawings without paying any creative labor.

FIG. 1 is a perspective schematic diagram of a feeding apparatus provided in an embodiment of the present disclosure;

FIG. 2 is a perspective schematic diagram of a seasoning box assembly provided in an embodiment of the present disclosure;

FIG. 3 is a cross-sectional schematic diagram of a feeding apparatus provided in an embodiment of the present disclosure;

FIG. 4 is a partial cross-sectional schematic diagram of a feeding apparatus provided in an embodiment of the present disclosure;

FIG. 5 is a schematic diagram of the internal structure of a feeding box assembly provided in an embodiment of the present disclosure;

FIG. 6 is a schematic diagram of the internal structure of a feeding box, a tray and a feeding apparatus provided in an embodiment of the present disclosure;

FIG. 7 is a perspective schematic diagram of a motion mechanism provided by an embodiment of the present disclosure;

FIG. 8 is a cross-sectional schematic diagram of a synchronous belt assembly provided in an embodiment of the present disclosure;

FIG. 9 is a schematic diagram of the bottom surface of the feeding box assembly provided in an embodiment of the present disclosure;

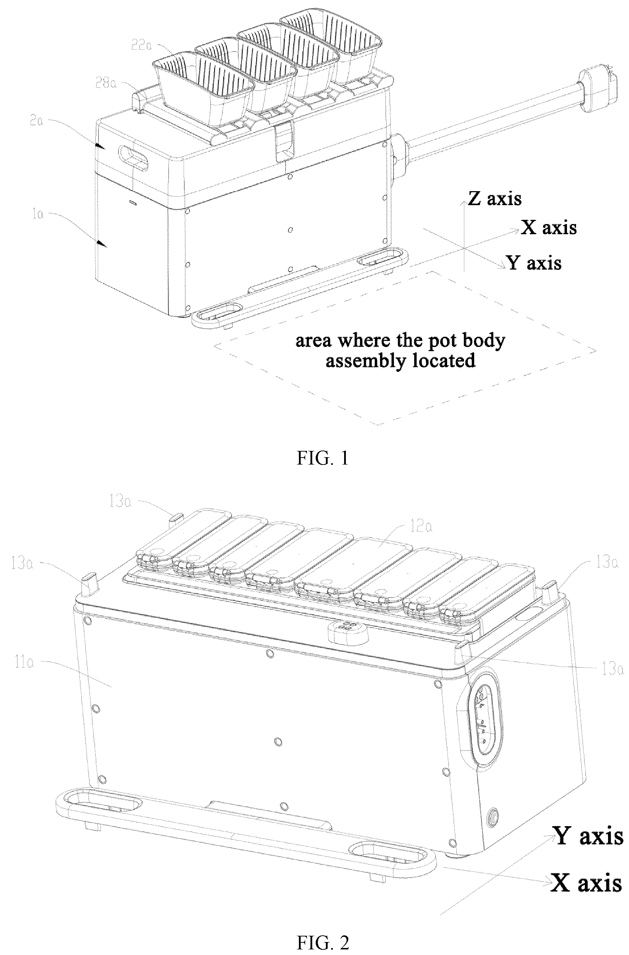

The corresponding relationship between the name of each assembly and the reference number in FIGs. 1 to 9 is as follows:

1a, seasoning box assembly; 11a, frame; 12a, seasoning box; 13a, limiting protrusion; 14a, delivering mechanism; 15a, seasoning box area; 16a, pipeline area; 17a, weighing mechanism; 2a, feeding box assembly; 21a, housing; 211a, avoidance area; 212a, extension area; 213a, limit groove; 22a, feeding box; 23a, motion mechanism; 231a, synchronous belt assembly; 2311a, synchronous belt; 2312a, pulley; 2313a, pulley bracket; 2314a, rotating shaft; 2315a, bearing; 23151a, flange edge; 232a, magnetic bracket; 24a, driving mechanism; 25a, transmission shaft; 26a, feeding apparatus; 27a, feeding rotating mechanism; 28a, tray; 281a, guide groove; a-the central axis of the motion mechanism in the vertical direction;

b-the central axis of the seasoning box in the vertical direction;
c-the central axis of the feeding box in the vertical direction; and
d-the central axis of the driving mechanism in the vertical direction.

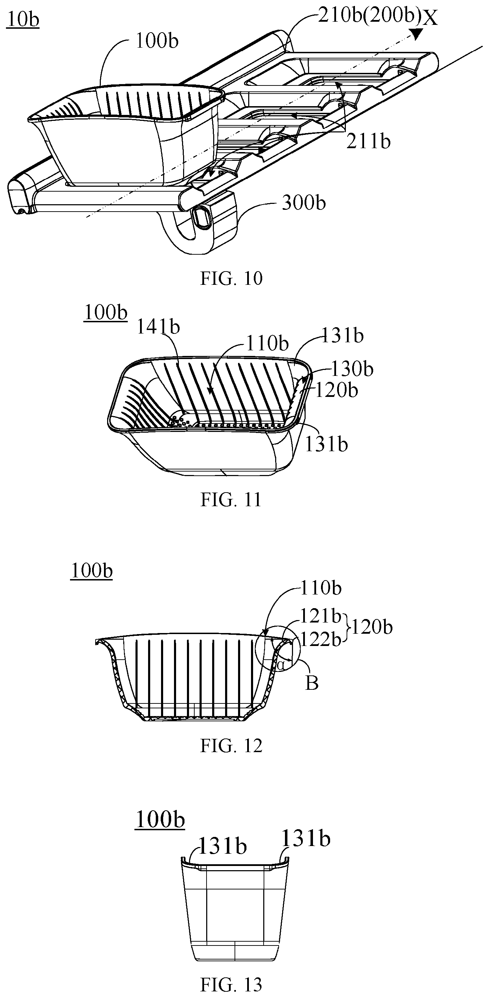

FIG. 10 exemplarily shows a schematic structural diagram of a feeding apparatus;
FIG. 11 exemplarily shows a schematic structural diagram of a material storage container;
FIG. 12 exemplarily shows a side cross-sectional view of a material storage container;
FIG. 13 exemplarily shows a front view of a material storage container;

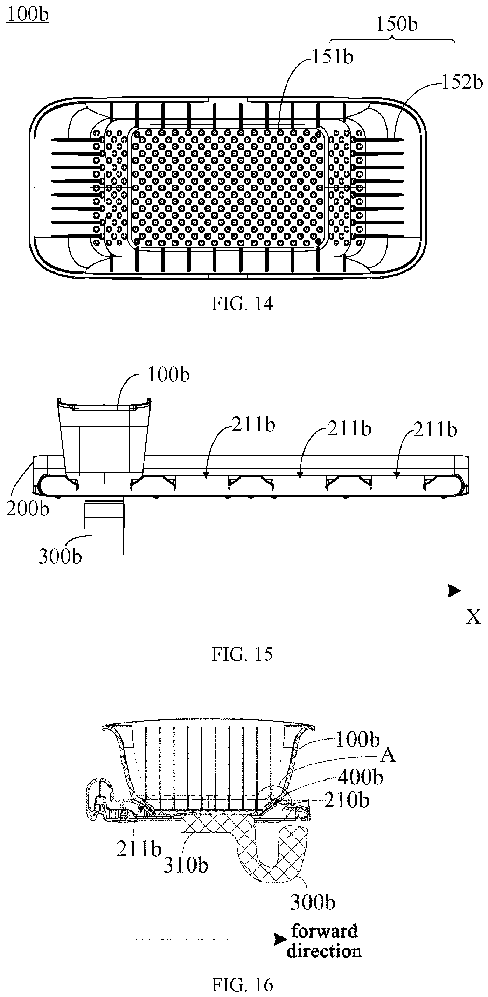

FIG. 14 exemplarily shows a top view of a material storage container;
FIG. 15 exemplarily shows a front view of a feeding apparatus;
FIG. 16 exemplarily shows a side cross-sectional view of a feeding apparatus;

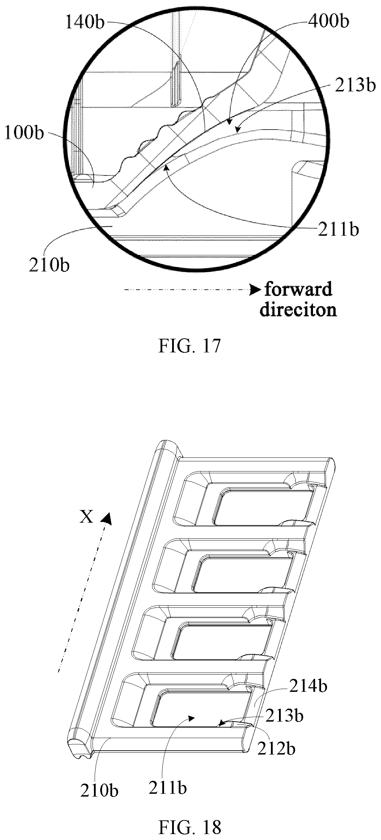

FIG. 17 exemplarily shows a partial enlarged view A of FIG. 16;
FIG. 18 exemplarily shows a schematic structural diagram of a bearing in a feeding apparatus;

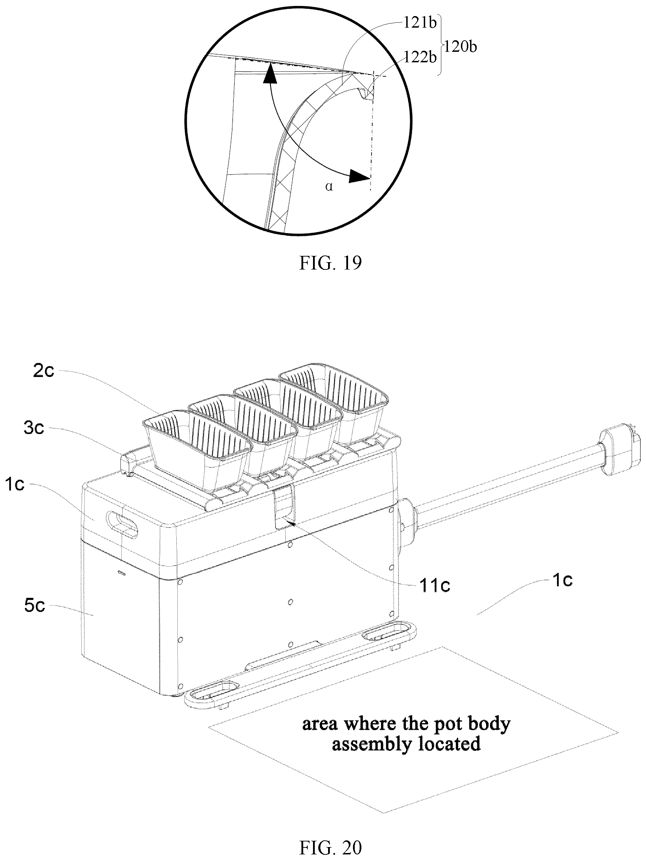

FIG. 19 exemplarily shows a partial enlarged view B of FIG. 12;
The corresponding relationship between the name of each assembly and the reference number in FIGs. 10 to 19 is as follows:
10b, feeding apparatus; 100b, material storage container; 110b, discharge port; 120b, guide part; 121b, guide section; 122b, anti-backflow section; 130b, discharge channel; 131b, contraction section; 140b, matching surface; 150b, concave-convex structure; 151b, convex part; 152b, guide rib; 200b, bearing assembly; 210b, bearing piece; 211b, receiving groove; 212b, extension part; 213b, guide surface; 214b, reinforcing connection part; 300b, feeding assembly; 310b, feeding part; 400b, matching gap.
FIG. 20 is a perspective schematic diagram of a feeding device provided in an embodiment of the present disclosure;

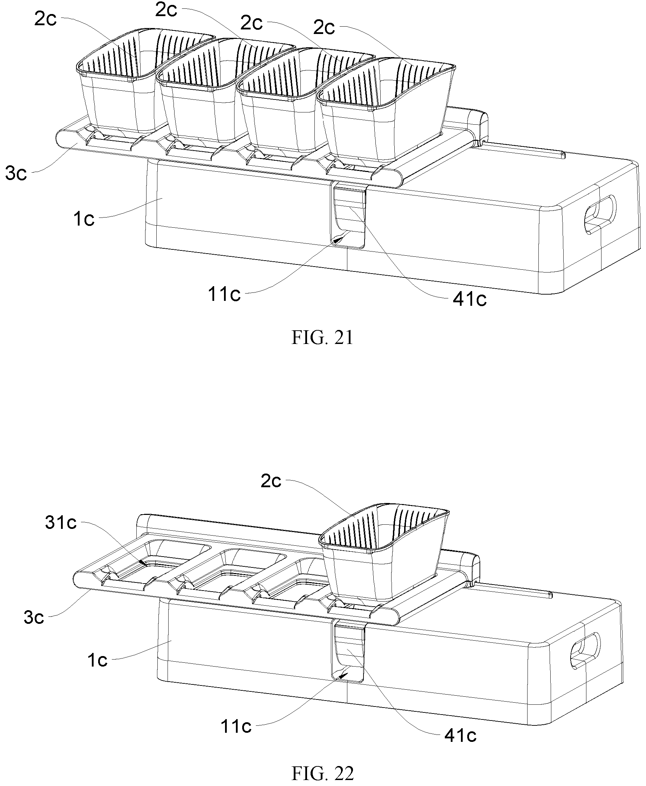

FIG. 21 is a partial perspective schematic diagram of a feeding device provided in an embodiment of the present disclosure;
FIG. 22 is a partial perspective schematic diagram of a feeding device provided in an embodiment of the present disclosure;

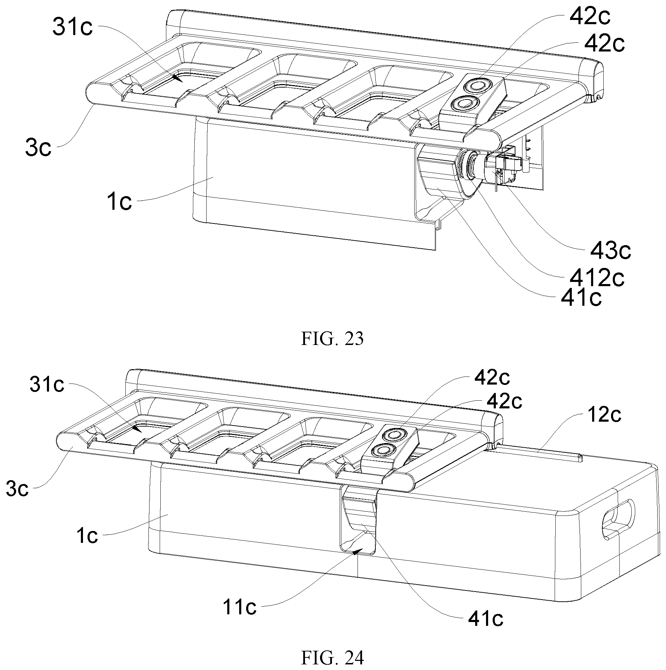

FIG. 23 is a schematic diagram of a partial internal structure of a feeding device provided in an embodiment of the present disclosure;
FIG. 24 is a partial perspective schematic diagram of a feeding device provided in an embodiment of the present disclosure;

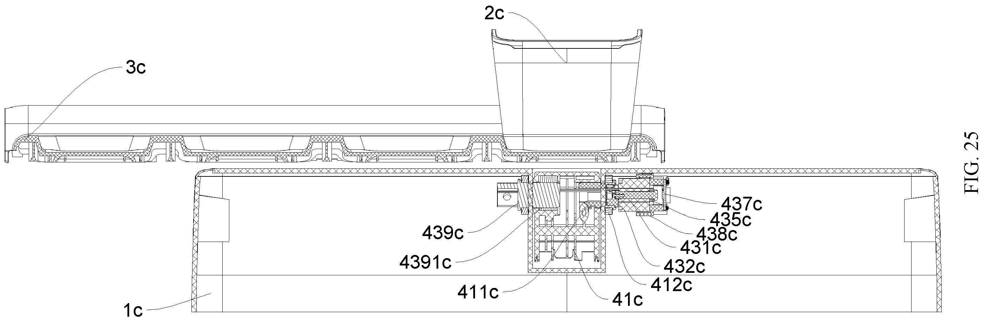

FIG. 25 is a cross-sectional schematic diagram of a feeding device provided in an embodiment of the present disclosure;

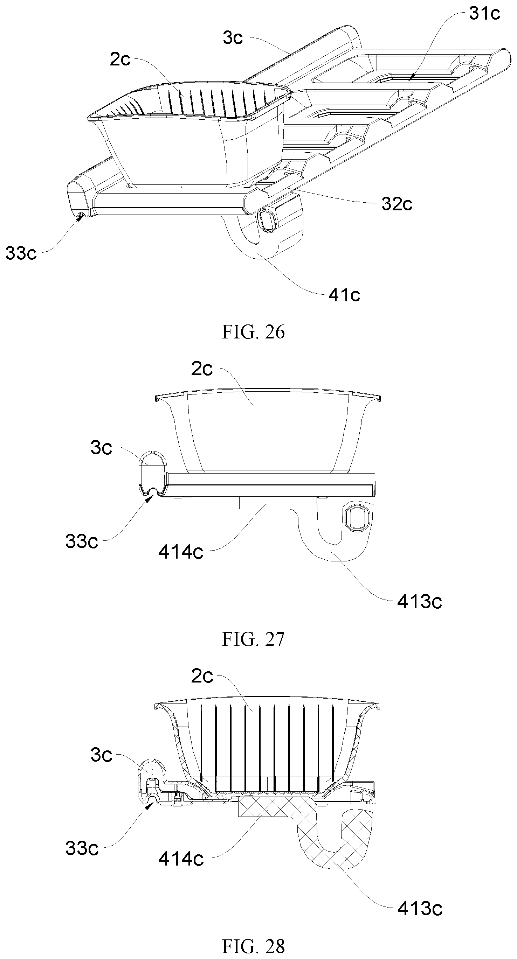

FIG. 26 is a perspective schematic diagram of a feeding box, a tray and a feeding arm provided in an embodiment of the present disclosure;
FIG. 27 is a side view of a feeding box, a tray and a feeding arm provided in an embodiment of the present disclosure;
FIG. 28 is a cross-sectional schematic diagram of a feeding box, a tray and a feeding arm provided in an embodiment of the present disclosure;

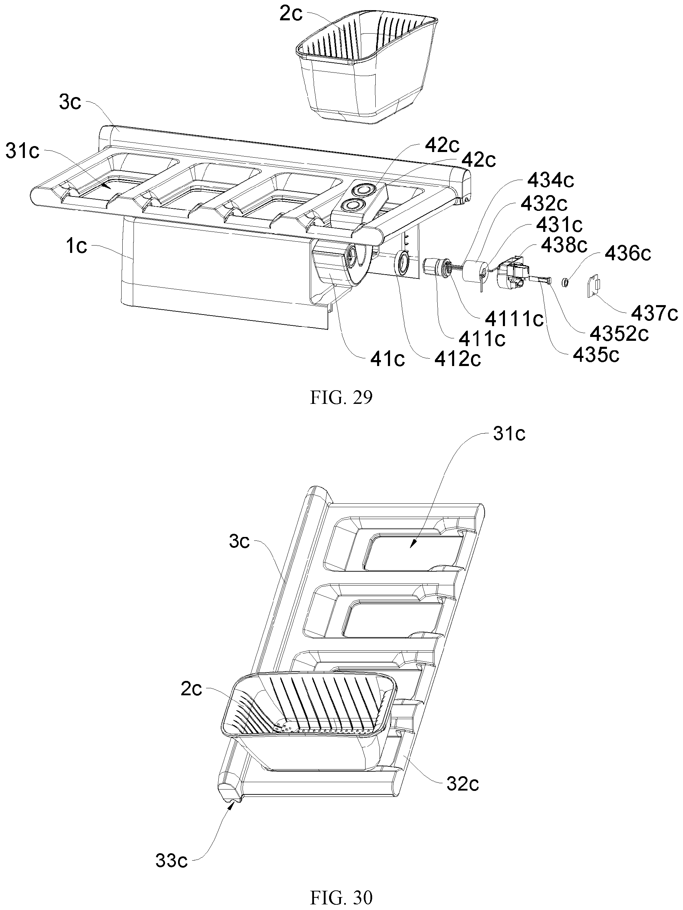

FIG. 29 is a partial exploded schematic diagram of a feeding device provided in an embodiment of the present disclosure;
FIG. 30 is a perspective schematic diagram of a feeding box and a tray provided in an embodiment of the present disclosure;

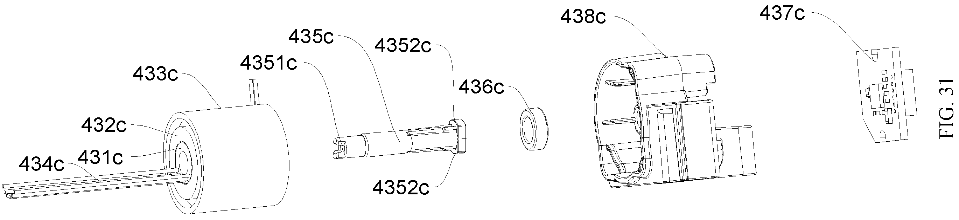

FIG. 31 is an exploded schematic diagram of a conductive apparatus provided in an embodiment of the present disclosure;

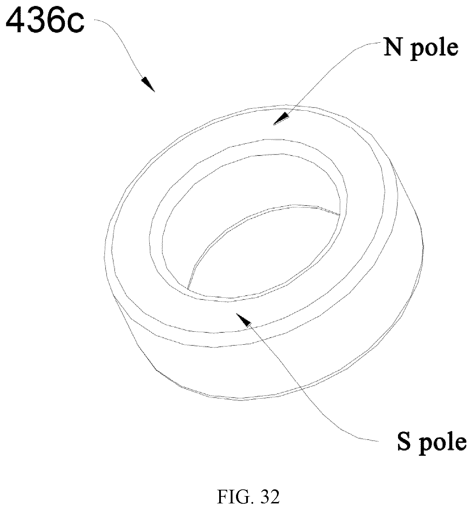

FIG. 32 is a perspective schematic diagram of an annular magnet provided in an embodiment of the present disclosure;

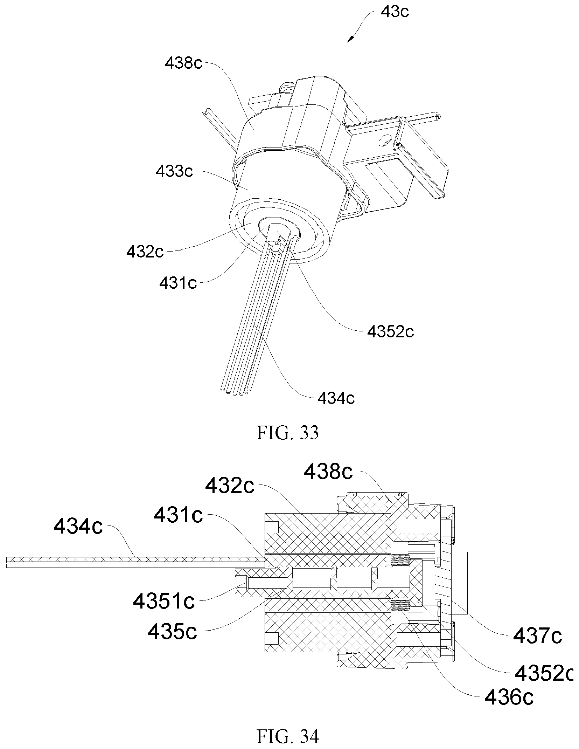

FIG. 33 is a perspective schematic diagram of a conductive apparatus provided in an embodiment of the present disclosure;
FIG. 34 is a cross-sectional schematic diagram of a conductive apparatus provided in an embodiment of the present disclosure;

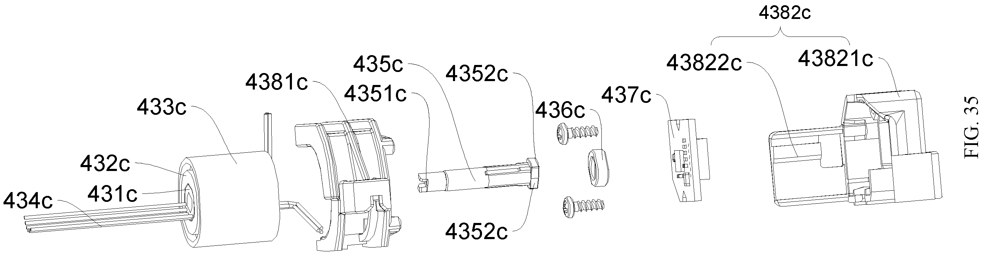

FIG. 35 is an exploded schematic diagram of another conductive apparatus provided by an embodiment of the present disclosure;

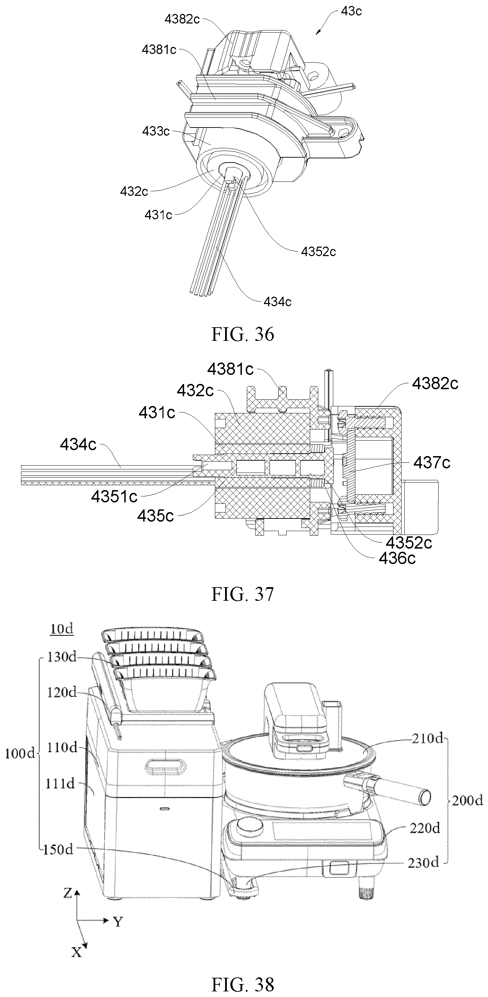

FIG. 36 is a perspective schematic diagram of another conductive apparatus provided by an embodiment of the present disclosure;
FIG. 37 is a cross-sectional schematic diagram of another conductive apparatus provided by an embodiment of the present disclosure;
The corresponding relationship between the name of each assembly and the reference number in FIGs. 20 to 37 is as follows:
1c, frame; 11c, feeding arm groove; 12c, guide bar; 2c, feeding box; 3c, tray; 31c, feeding hole; 32c, blocking edge;

33c, guide groove; 41c, feeding arm; 411c, hinge shaft; 4111c, second clamping end; 412c, bearing; 413c, hinge section; 414c, adsorption section; 42c, electromagnet; 43c, conductive apparatus; 431c, rotor; 432c, stator; 433c, insulating housing; 434c, wire; 435c, pin shaft; 4351c, first clamping end; 4352c, flange; 436c, annular magnet; 437c, angle detection unit; 438c, connecting bracket; 4381c, first bracket body; 4382c, second bracket body; 43821c, connecting section; 43822c, mounting section; 439c, driving motor; 4391c, output shaft; 5c, seasoning box assembly.

FIG. 38 exemplarily shows a schematic structural diagram of a cooking device;

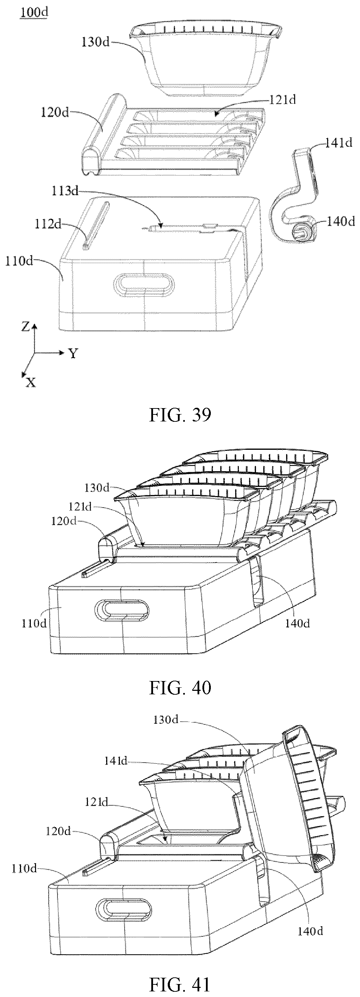

FIG. 39 exemplarily shows an exploded schematic diagram of the body of the feeding apparatus;

FIG. 40 exemplarily shows a schematic diagram of a material storage container in a first position;

FIG. 41 exemplarily shows a schematic diagram of a material storage container in a second position;

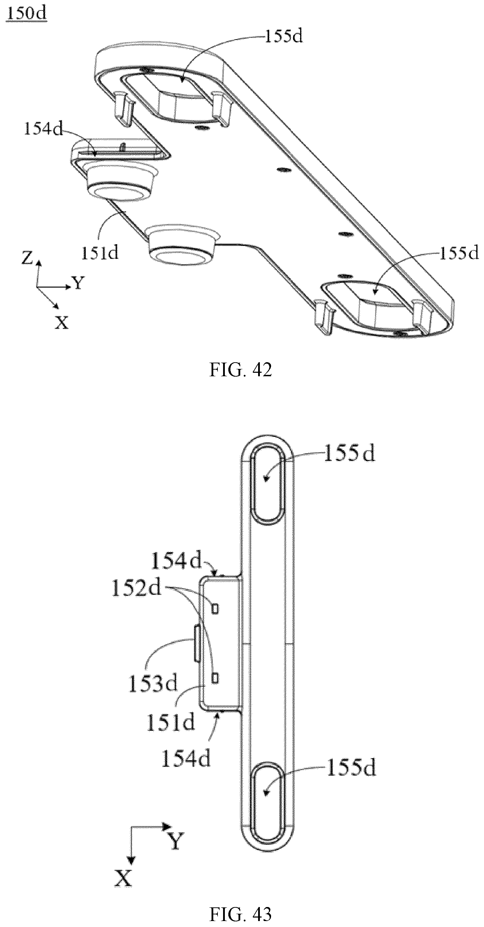

FIG. 42 exemplarily shows a schematic structural diagram of a connecting piece;

FIG. 43 exemplarily shows a top view of a connecting piece;

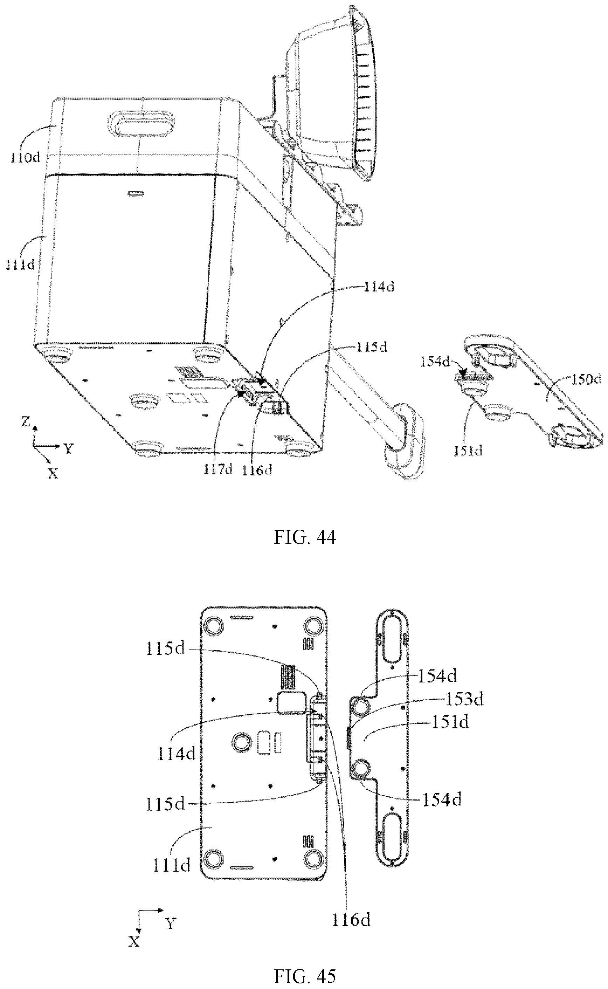

FIG. 44 exemplarily shows a schematic structural diagram of a body and a connecting piece of a feeding apparatus separated from each other;

FIG. 45 exemplarily shows a schematic diagram of a state where a limiting part and a matching part are separated;

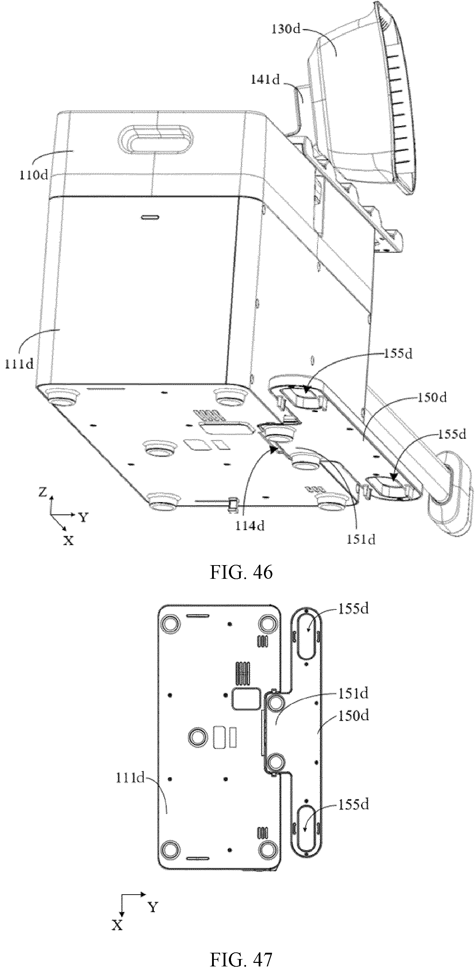

FIG. 46 exemplarily shows a schematic structural diagram of a body of a feeding apparatus and a connecting piece;

FIG. 47 exemplarily shows a schematic diagram of a limiting part and a matching part in a matching state;

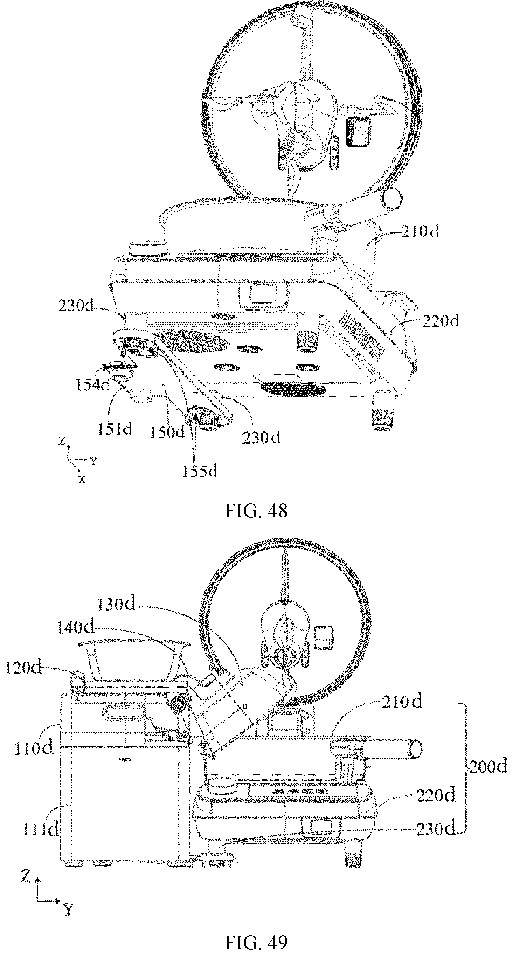

FIG. 48 exemplarily shows a schematic diagram of a cooperation between a cooking container and a connecting piece;

FIG. 49 exemplarily shows a schematic diagram of a state where a material storage container is flipped to a maximum flip angle;

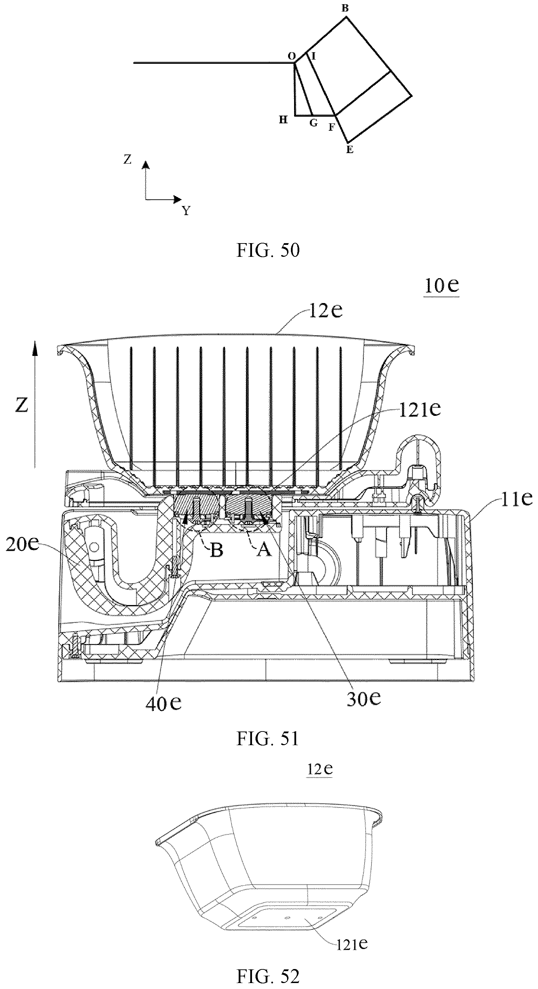

FIG. 50 exemplarily shows a schematic diagram of the positional relationship in FIG. 49;

The corresponding relationship between the name of each assembly and the reference number in FIGs. 38 to 50 is as follows:

10d, cooking device; 100d, feeding apparatus; 110d, base; 111d, support part; 112d, guide rail; 113d, first opening; 114d, first matching part; 115d, limiting buckle; 116d, second matching part; 117d, third matching part; 120d, bearing piece; 121d, bearing position; 130d, material storage container; 140d, feeding assembly; 141d, feeding part; 150d, connecting piece; 151d, first limiting part; 152d, second limiting part; 153d, third limiting part; 154d, limiting slide rail; 155d, connecting part; 200d, cooking container; 210d, pot body; 220d, base; 230d, adapter.

FIG. 51 is a schematic cross-sectional view of an embodiment of a feeding apparatus applied to a cooking apparatus according to the present disclosure;

FIG. 52 is a schematic structural diagram of an embodiment of a material holding piece of the present disclosure;

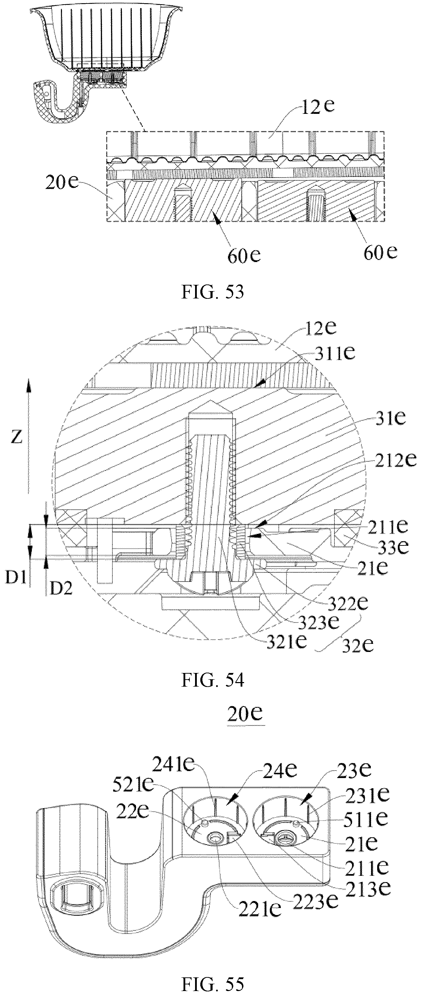

FIG. 53 is a schematic diagram of the structure of the material holding piece adsorbed on the material feeding piece in the prior art;

FIG. 54 is a schematic diagram of the structure of the feeding apparatus A area shown in FIG. 51;

FIG. 55 is a schematic structural diagram of an embodiment of a feeding piece of the present disclosure;

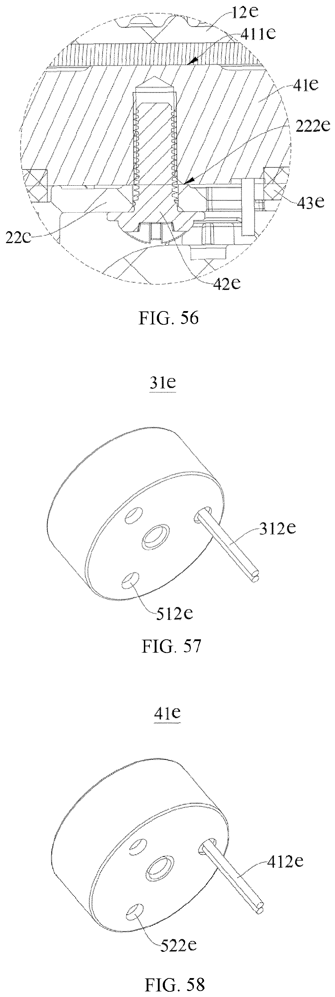

FIG. 56 is a schematic diagram of the structure of the feeding apparatus B area shown in FIG. 51;

FIG. 57 is a schematic structural diagram of an embodiment of a movable magnetic assembly of the present disclosure;

FIG. 58 is a schematic structural diagram of an embodiment of a fixed magnetic assembly of the present disclosure;

The corresponding relationship between the name of each assembly and the reference number in FIGs. 51 to 58 is as follows:

10e feeding apparatus; 11e apparatus body; 12e material holding piece; 121e target magnetic part; 20e feeding piece; 21e first mounting part; 211e first mounting hole; 212e third surface; 213e first wire passing hole; 22e second mounting part; 221e second mounting hole; 222e fourth surface; 223e second wire passing hole; 23e first mounting groove; 231e first protrusion; 24e second mounting groove; 241e second protrusion; 30e movable magnetic assembly; 31e movable magnetic part; 311e first surface; 312e first wire; 32e connecting piece; 321e connecting part; 322e limiting part; 323e adjusting sleeve; 33e elastic supporting piece; 40e fixed magnetic assembly; 41e fixed magnetic part; 411e second surface; 412e second wire; 42e fastener piece; 43e sealing piece; 511e first anti-rotation column; 512e first anti-rotation hole; 521e second anti-rotation column; 522e second anti-rotation hole.

## DETAILED DESCRIPTION OF EXAMPLE EMBODIMENTS

Various exemplary embodiments of the present disclosure will now be described in detail with reference to the accompanying drawings. It should be noted that the relative arrangement of assemblies and steps, the numerical expressions and numerical values set forth in these embodiments do not limit the scope of the present disclosure unless specifically stated otherwise.

The following description of at least one exemplary embodiment is merely illustrative in nature and is in no way intended to limit the present disclosure, its application, or uses.

**EP 4 602 981 A1**

Technologies, methods, and equipment known to ordinary technicians in the relevant art may not be discussed in detail, but where appropriate, the technologies, methods, and equipment should be considered as part of the specification.

It should be noted that like reference numerals and letters refer to similar items in the following figures, and therefore, once an item is defined in one figure, it need not be further discussed in subsequent figures.

The specific embodiments of the present disclosure are described below in conjunction with the accompanying drawings.

In this document, "upper", "lower", "front", "back", "left", "right", etc. are only used to indicate the relative position relationship between related parts, rather than to limit the absolute positions of these related parts.

In this document, "first", "second", etc. are only used to distinguish each other, and do not indicate the importance and order, or the premise of each other's existence.

In this document, "equal", "same", etc. are not strictly limited in a mathematical and/or geometric sense, but also include errors that can be understood by those skilled in the art and are allowed in manufacturing or use.

The present disclosure provides a cooking device, comprising a feeding apparatus and a pot body assembly, where the feeding apparatus is used to provide cooking materials such as seasonings and ingredients to the pot body assembly. The feeding apparatus mainly includes a seasoning box assembly and a feeding box assembly. The seasoning box assembly is used to provide seasonings such as water, salt, soy sauce, vinegar, and oil into the pot body assembly, and the feeding box assembly is used to put meat, vegetables, and other ingredients into the pot body assembly.

Before cooking, the user injects various seasonings into the seasoning box assembly in advance, and then puts the ingredients into the feeding box assembly; during the cooking process, the cooking device is able to automatically add the seasonings into the pot body assembly, and put the ingredients on the feeding box assembly into the pot body assembly, and then process the ingredients into dishes through operations such as stir-frying and heating.

Specifically, the seasoning box assembly includes a frame, at least one seasoning box arranged in sequence on the frame, and a feeding mechanism, the feeding mechanism is used to transport the seasoning in the seasoning box to the pot body assembly, the top of the seasoning box is higher than the top of the frame, that is, the seasoning box protrudes from the top of the frame. The feeding box assembly includes a housing mounted on the frame, at least one feeding box located on the top of the housing, and a motion apparatus and a feeding apparatus located in the inner cavity of the housing, where the motion apparatus is used to drive the feeding box to move on the top of the housing, the movement direction of the feeding box and the arrangement direction of the seasoning box are in the same direction, and the feeding apparatus is used to drive the feeding box located on the top thereof to flip toward the pot body assembly, thereby putting the food in the feeding box into the pot body assembly. The motion apparatus includes a driving mechanism and a motion mechanism controlled by the driving mechanism, and the projections of the motion mechanism and the seasoning box on a vertical plane parallel to the X-axis partially overlap with of the driving mechanism, so that the motion mechanism, the seasoning box and the driving mechanism can be staggered in the vertical direction.

In the cooking device disclosed herein, the top of the seasoning box is higher than the top of the frame and extends to partially overlap with the driving mechanism in the feeding box assembly in the height direction, which makes it possible to increase the volume of the seasoning box and reduce the frequency of replenishing the seasoning box, thereby improving the user experience. From another perspective, the overall height of the feeding apparatus is reduced without reducing the volume of the seasoning box, thereby reducing the space occupied by the entire feeding apparatus and making the structure of the entire feeding apparatus more compact, which is more in line with the public's demand for miniaturization of equipment.

For ease of understanding, the specific structure and working principle of the cooking device and the feeding apparatus disclosed herein are described in detail below in conjunction with an embodiment with reference to FIGs. 1 to 9.

As shown in FIG. 1, the present disclosure provides a feeding apparatus, which is applied to a cooking device. In addition to the feeding apparatus, the cooking device also includes a pot body assembly, and the pot body assembly includes a pot body, a heating apparatus, a stirring apparatus and other structures. The feeding apparatus is used to provide cooking materials such as seasonings and ingredients into the pot body.

Specifically, as shown in FIG. 1, the feeding apparatus mainly includes a seasoning box assembly 1a and a feeding box assembly 2a. The seasoning box assembly 1a is used to provide water, salt, soy sauce, vinegar, oil and other seasonings into the pot body assembly, and the feeding box assembly 2a is used to put meat, vegetables and other ingredients into the pot body assembly.

Before cooking, the user injects various seasonings into the seasoning box assembly 1a in advance, and then puts the ingredients into the feeding box assembly 2a; during the cooking process, the cooking device can automatically add the seasonings into the pot body assembly, and put the ingredients on the feeding box assembly 2a into the pot body assembly, and then process the ingredients into dishes through operations such as stir-frying and heating.

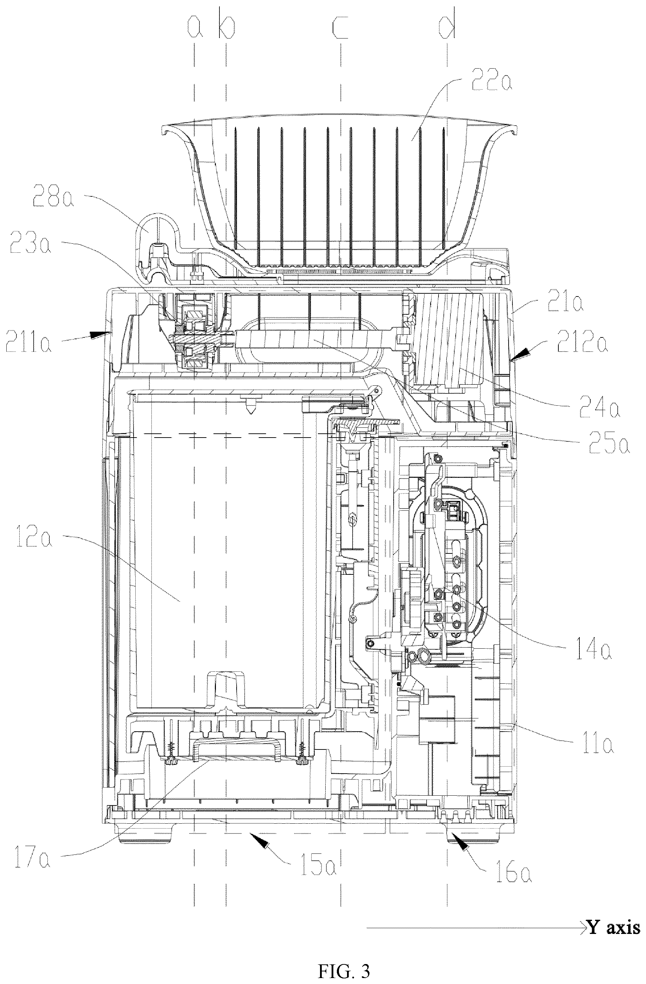

As shown in FIGs. 2 and 3, the seasoning box assembly 1a includes a frame 11a, at least one seasoning box 12a sequentially arranged on the frame 11a, and a delivering mechanism 14a for conveying the seasoning in the seasoning box 12a to the pot body assembly. Specifically, the delivering mechanism 14a can be composed of a feeding pipeline and a feeding pump. The two ends of the feeding pipeline are respectively connected to the seasoning box 12a and the pot body

9

assembly. The feeding pump transports the seasoning in the seasoning box 12a to the pot body assembly through the feeding pipeline.

As shown in FIG. 3, in one embodiment of the present disclosure, the frame 11a includes a seasoning box area 15a on a side away from the pot body assembly and a pipeline area 16a on a side adjacent to the pot body assembly. The seasoning box 12a is arranged in the seasoning box area 15a, and the delivering mechanism 14a is disposed in the pipeline area 16a. Furthermore, in order to facilitate installation and removal of the seasoning box 12a, as shown in FIG. 2, the seasoning box area 15a is provided with a receiving groove, and at least one seasoning box 12a is arranged in the receiving groove along the X-axis direction. Specifically, the receiving groove is located at a side away from the pot body assembly, an opening is provided at the top, and the seasoning box 12a protrudes from the top of the receiving groove. In one embodiment of the present disclosure, there are at least two seasoning boxes 12a, and each seasoning box 12a is arranged in the receiving groove along the X-axis direction. Specifically, as shown in FIG. 2, there may be eight seasoning boxes, which are arranged in the receiving groove along the X-axis direction, and the lengths of the seasoning boxes in the X-axis direction may be the same or different. In order to maximize the volume of the seasoning box 12a, as shown in FIGs. 2 and 3, in one embodiment of the present disclosure, the top of the seasoning box 12a extends out from the receiving groove and is higher than the end surface of the frame 11a. Since the volume occupied by the delivering mechanism 14a is relatively small, the feeding pipeline and the feeding pump are both arranged inside the frame 11a, rather than higher than the end surface of the frame 11a.

As shown in FIGs. 3, 4 and 5, the feeding box assembly 2a includes a housing 21a installed on the frame 11a, at least one feeding box 22a located on the top of the housing 21a, and a motion apparatus and a feeding apparatus 26a located in the inner cavity of the housing 21a, where the motion apparatus is used to drive the feeding box 22a to move on the top of the housing 21a, and the feeding apparatus 26a is used to drive the feeding box 22a located on the top thereof to flip toward the pot body assembly, thereby putting the food in the feeding box 22a into the pot body assembly. The movement direction of the feeding box 22a is also the X-axis direction, and the feeding apparatus as a whole extends along the X-axis direction. When it is necessary to increase the seasoning box 12a or the number of seasoning boxes 12a, it can be continued to be added along the X-axis direction.

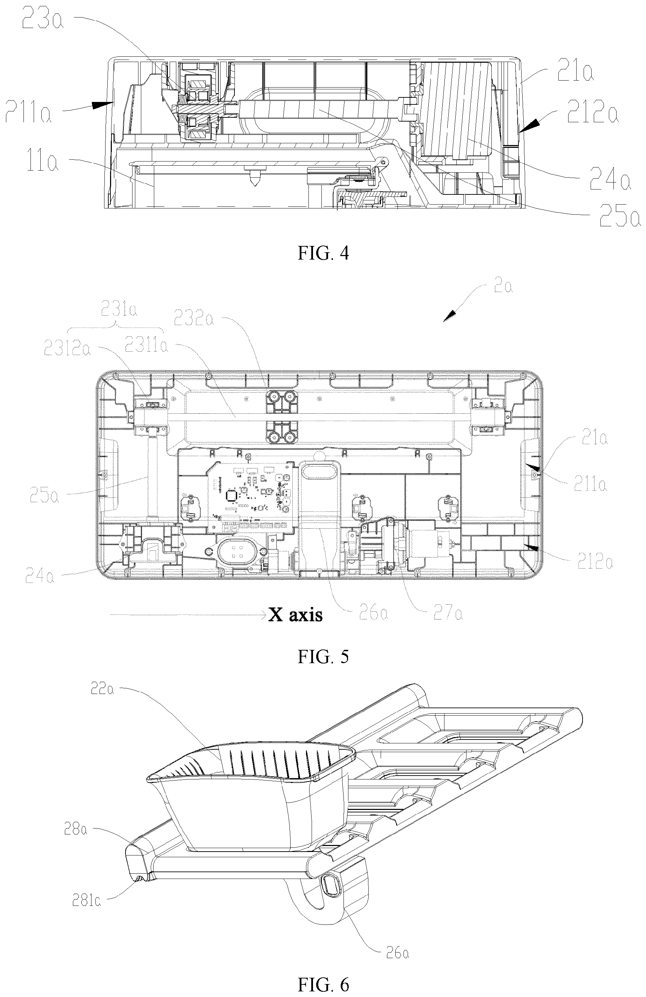

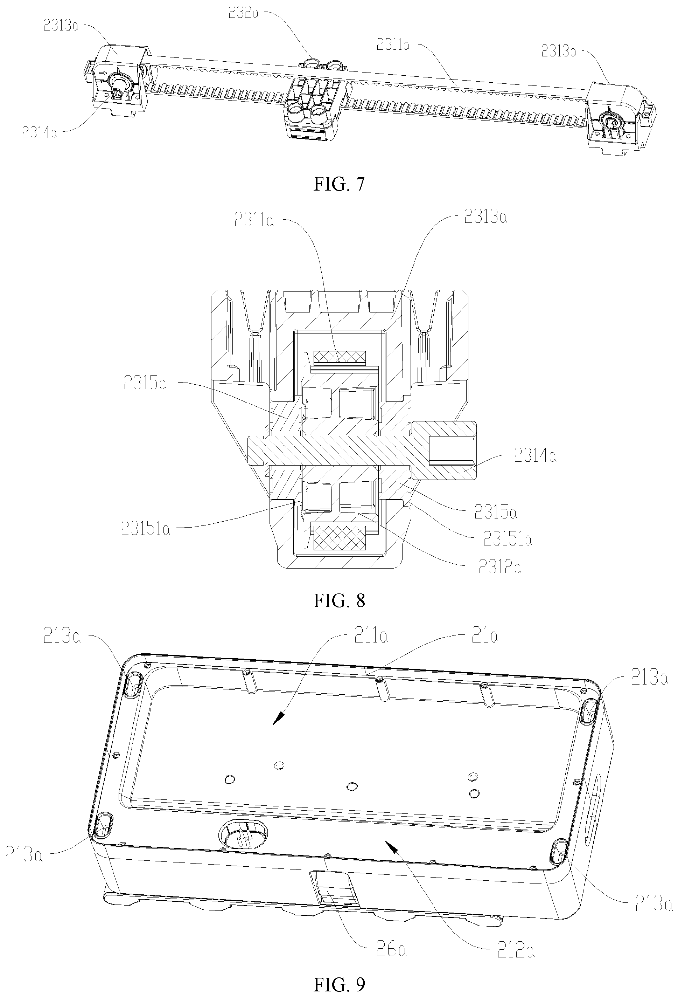

In order to facilitate the motion apparatus to drive multiple feeding boxes 22a, as shown in FIGs. 3 and 6, the feeding box assembly 2a also includes a tray 28a, and the feeding box 22a is placed on the tray 28a. A guide groove 281a is provided at the bottom of the tray 28a, and a guide bar (not shown in the figure) matching the guide groove 281a is provided on the top of the housing 21a, and the guide groove 281a and the guide bar both extend along the X-axis direction. In this way, the motion apparatus can drive the tray 28a and the feeding box 22a on the tray 28a to move along the X-axis direction. As shown in FIGs. 4 and 5, the motion apparatus includes a motion mechanism 23a controlled by a driving mechanism 24a. Specifically, as shown in FIG. 7, in one embodiment of the present disclosure, the motion mechanism 23a includes a synchronous belt assembly 231a and a magnetic bracket 232a. The synchronous belt assembly 231a is driven by the driving mechanism 24a to drive the magnetic bracket 232a to move along the X-axis direction on the housing 21a. The driving structure can be a driving motor or other device. The magnetic bracket 232a is provided with a bracket magnet, and the tray and the bracket magnet attract each other, so that when the synchronous belt assembly 231a drives the magnetic bracket 232a to move, it can drive the tray 28a to move along the X-axis direction on the housing 21a. Specifically, as shown in FIGs. 3 and 5, the tray 28a is arranged above the top of the housing 21a, and the magnetic bracket 232a is arranged in the inner cavity of the housing 21a. The two are not in direct contact, but are driven by magnetic attraction.

Specifically, as shown in FIGs. 7 and 8, in one embodiment of the present disclosure, the synchronous belt assembly 231a includes a synchronous belt 2311a, a pulley 2312a a pulley bracket 2313a, and a rotating shaft 2314a that rotatably connects the pulley 2312a to the pulley bracket 2313a. It also includes two bearings 2315a located on two sides of the pulley 2312a, the two bearings 2315a are sleeved on the rotating shaft 2314a, the outer rings of the two bearings 2315a are fixed on the pulley bracket 2313a, and the inner rings are fixed to the rotating shaft 2314a. The two bearings 2315a can provide support for the rotating shaft 2314a, thereby ensuring that the pulley 2312a remains separated relative to the pulley bracket 2313a, and the rotating shaft 2314a can be rotatably connected relative to the pulley bracket 2313a. As shown in FIG. 7, one end of at least the rotating shaft 2314a is provided with a fixing opening, and one end of the transmission shaft 25a is inserted into the fixing opening on the rotating shaft 2314a, thereby achieving the purpose of transmission connection between the rotating shaft 2314a and the output shaft of the driving mechanism 24a through the transmission shaft 25a.

As shown in FIG. 8, in one embodiment of the present disclosure, the bearing 2315a is a flange bearing, and the flange edge 23151a of the flange bearing outer ring of the flange bearing and the normal bearing abuts against the side wall of the pulley bracket 2313a. In this way, the two flange bearings can clamp and limit the pulley 2312a from two sides to prevent the pulley 2312a from shaking left and right inside the pulley bracket 2313a, thereby reducing the friction between the pulley 2312a and the pulley bracket 2313a. Since the flange bearing is provided with a flange edge, the flange bearing can only be installed from the side provided with the flange edge 23151a to the side not provided with the flange edge 23151a. Taking the direction in FIG. 8 as an example, the installation order of the various parts is: left flange bearing - pulley 2312a - right flange bearing - rotating shaft 2314a.

As shown in FIG. 5, the feeding apparatus 26a is arranged in the inner cavity of the housing 21a. The feeding apparatus 26a can rotate relative to the housing 21a, thereby driving the feeding box 22a located on the top thereof to flip toward the side where the pot body assembly is located, thereby putting the food in the feeding box 22a into the pot body assembly.

A feeding box magnet or ferromagnet can be arranged in the feeding box 22a, and the feeding apparatus 26a can be provided with an electromagnet suction cup. When the feeding apparatus 26a drives the feeding box 22a to flip toward the side where the pot body assembly is located, the electromagnet suction cup can adsorb the feeding box 22a on the feeding apparatus 26a, thereby preventing the feeding box 22a from falling into the pot body during the flipping process.

In order to drive the feeding apparatus 26a to rotate, as shown in FIG. 5, the feeding box assembly 2a is further provided with a feeding rotating mechanism 27a, the feeding box assembly 2a is arranged on a side of the feeding apparatus 26a and can drive the feeding apparatus 26a to rotate.

In order to ensure that when each feeding box 22a moves above the feeding apparatus, the tray and each feeding box above remain above the housing and do not slide off the housing 21a, the feeding apparatus 26a needs to be arranged in the middle of the housing 21a in the X-axis direction. In this way, as shown in FIG. 5, the feeding rotating mechanism 27a, the feeding apparatus 26a and the driving mechanism 24a are distributed in sequence in the X-axis direction, that is, the feeding rotating mechanism 27a and the driving mechanism 24a are respectively located on two sides of the feeding apparatus 26a. In this way, it can be ensured that the feeding apparatus 26a is arranged in the middle of the body, and the space in the housing 21a can be effectively utilized, so that the arrangement of each structure is more reasonable to prevent space waste. As shown in FIGs. 3 and 4, the projections of the motion mechanism 23a and the seasoning box 12a on the vertical plane parallel to the X-axis partially overlap with the driving mechanism 24a. In this way, the volume of the seasoning box 12a can be increased, and the frequency of refilling the seasoning box 12a is reduced, thereby improving the user experience. From another perspective, the overall height of the feeding device is reduced without reducing the volume of the seasoning box 12a, or the volume of the seasoning box 12a is increased without increasing the overall height of the feeding device.

Further, as shown in FIGs. 3, and 5, the housing 21a includes an avoidance area 211a corresponding to the seasoning box 12a, and an extension area 212a that cooperates with the top of the frame 11a and extends downwardly relative to the avoidance area 211a. The avoidance area 211a is located on the side away from the pot body assembly, and the extension area 212a is located on the side close to the pot body assembly, that is, in the Y-axis direction perpendicular to the X-axis, the extension area 212a is located on the side close to the pot body assembly relative to the avoidance area 211a. The seasoning box 12a extends upward into the cavity of the avoidance area 211a, the motion mechanism 23a including the synchronous belt assembly 231a and the magnetic bracket 232a is located at a position corresponding to the avoidance area 211a in the inner cavity of the housing 21a, the driving mechanism 24a is arranged at a position corresponding to the extension area 212a in the inner cavity of the housing 21a, and the pipeline area 16a is located at a corresponding position below the extension area 212a, that is, the delivering mechanism 14a is located below the driving mechanism 24a. Since the top of the seasoning box 12a extends out from the receiving groove and is higher than the end surface of the frame 11a, when the feeding box assembly 2a is placed on the frame 11a, the cavity below the avoidance area 211a is aligned with the seasoning box 12a, and the seasoning box 12a extends into the avoidance area 211a so that the projection of the seasoning box 12a on the vertical plane parallel to the X-axis can partially overlap with the driving mechanism 24a.

As shown in FIGs. 2 and 9, in one embodiment of the present disclosure, the upper end surface of the frame 11a is rectangular, a limiting protrusion 13a is provided at each corner of the upper end surface of the frame 11a, and a limiting groove 213a matching each limiting protrusion 13a is provided at the bottom of the corresponding housing 21a. When the feeding box assembly 2a is placed on the seasoning box assembly 1a, the limiting protrusion 13a is inserted into the limiting groove 213a, thereby realizing the relative fixation of the feeding box assembly 2a and the seasoning box assembly 1a, and by providing the limiting protrusion 13a and the limiting groove 213a, the contact surface between the feeding box assembly 2a and the seasoning box assembly 1a can be reduced, thereby reducing the flatness requirement of the feeding box assembly 2a and the seasoning box assembly 1a, and reducing the difficulty of manufacturing and processing.

As shown in FIG. 3, in one embodiment of the present disclosure, the central axis a of the motion mechanism 23a in the vertical direction, the central axis b of the seasoning box 12a in the vertical direction, the central axis c of the feeding box 22a in the vertical direction and the central axis d of the driving mechanism 24a in the vertical direction are arranged sequentially in the Y-axis direction.

Taking the direction in FIG. 3 as a reference, the motion mechanism 23a of the present disclosure extends in the X-axis direction and is configured to drive the feeding box 22a to move in the X-axis direction. The feeding apparatus 26a extends in the Y-axis direction and is configured to flip the feeding box 22a with the X-axis as the rotation axis. When the central axis a of the motion mechanism 23a is located on the left side of the central axis b of the seasoning box 12a, and the central axis b of the seasoning box 12a is located on the left side of the central axis c of the feeding box 22a, space can be reserved for the feeding apparatus 26a to be arranged, ensuring that the feeding apparatus 26a can cooperate with the center position of the seasoning box 12a and providing sufficient space for the rotation of the feeding apparatus 26a. Since the driving mechanism 24a is located in the extension area 212a, and the seasoning box 12a and the motion mechanism 23a are located in the avoidance area 211a, the central axis d of the driving mechanism 24a is located on the right side of the central axis of each above-mentioned structure, which ensures that the seasoning box 12a has sufficient size in the Y-axis direction, thereby increasing the volume of the seasoning box 12a.

As shown in FIGs. 3 and 4, in one embodiment of the present disclosure, in the Y-axis direction, the distance between the driving mechanism 24a and the synchronous belt assembly 231a is greater than the width of each seasoning box 12a. That is, the length of the transmission shaft 25a is greater than the width of each seasoning box 12a, so that sufficient arrangement space can be reserved for the seasoning box 12a and the feeding apparatus 26a, thereby increasing the width of the seasoning box 12a and the length of the feeding apparatus 26a in the Y-axis direction.

Furthermore, as shown in FIGs. 3 and 4, in one embodiment of the present disclosure, the transmission shaft 25a between the driving mechanism 24a and the synchronous belt assembly 231a extends from a position above the avoidance area 211a to the extension area 212a, so that it can effectively ensure that the distance between the driving mechanism 24a and the synchronous belt assembly 231a is greater than the width of each seasoning box 12a.

As shown in FIG. 5, the feeding rotating mechanism 27a is also located in the extension area 212a, so that the feeding rotating mechanism 27a can be made taller in the vertical direction, thereby reducing the limitation on the size of the feeding rotating mechanism 27a.

As shown in FIGs. 5 and 6, in one embodiment of the present disclosure, the rotation axis of the feeding apparatus 26a extends in the X-axis direction and is located on the side close to the pot body assembly relative to the central axis d of the feeding box 22a. The free end of the feeding apparatus 26a is configured to extend in the avoidance area 211a to correspond to the center position of the feeding box 22a, so that when the feeding apparatus 26a starts to drive the feeding box 22a to rotate, the center of gravity of the feeding box 22a can fall on the feeding apparatus 26a, thereby further preventing the feeding box 22a from sliding off the feeding apparatus 26a, ensuring that the feeding apparatus 26a can work normally.

As shown in FIG. 3, in one embodiment of the present disclosure, the seasoning box assembly 1a further includes a weighing mechanism 17a, which is configured to obtain the weight of the seasoning box 12a, and the weighing mechanism 17a is disposed below the seasoning box 12a; gaps are formed between two sides of the seasoning box 12a and the frame 11a, and between the top of the seasoning box 12a and the feeding box assembly 2a. In this way, the seasoning box 12a will not interfere with other structures, ensuring that the weight result obtained by the weighing mechanism 17a is more accurate.

The present disclosure further provides a feeding apparatus, the structure and function of which refer to the aforementioned feeding apparatus and will not be described in detail here.

Application scenario 1

The present disclosure provides a cooking device, including a feeding apparatus and a pot body assembly, where the feeding apparatus is used to provide cooking materials such as seasonings and ingredients to the pot body assembly. The feeding apparatus mainly includes a seasoning box assembly 1a and a feeding box assembly 2a. The seasoning box assembly 1a is used to provide water, salt, soy sauce, vinegar, oil and other seasonings into the pot body assembly, and the feeding box assembly 2a is used to put meat, vegetables and other ingredients into the pot body assembly.

The seasoning box assembly 1a includes a frame 11a and at least one seasoning box 12a arranged in sequence on the frame 11a. The top of the seasoning box 12a extends out of the receiving groove and is higher than the end surface of the frame 11a. The feeding box assembly 2a includes a housing 21a installed on the frame 11a, at least one feeding box 22a located on the top of the housing 21a, and a motion apparatus located in the inner cavity of the housing 21a, where the motion apparatus is used to drive the feeding box 22a to move on the top of the housing 21a, and the motion apparatus includes a motion mechanism 23a controlled by a driving mechanism 24a.

The projections of the motion mechanism 23a and the seasoning box 12a on the vertical plane parallel to the X-axis partially overlap with the driving mechanism 24a. In this way, the volume of the seasoning box 12a can be increased, and the frequency of refilling the seasoning box 12a is reduced, thereby improving the user experience. From another perspective, the overall height of the feeding apparatus is reduced without reducing the volume of the seasoning box 12a, or the volume of the seasoning box 12a is increased without increasing the overall height of the feeding apparatus.

Application scenario 2

The present disclosure provides a cooking device, including a feeding apparatus and a pot body assembly. The feeding apparatus includes a seasoning box assembly 1a and a feeding box assembly 2a.

The seasoning box assembly 1a includes a frame 11a and at least one seasoning box 12a arranged in sequence on the frame 11a. The top of the seasoning box 12a extends out of the receiving groove and is higher than the end surface of the frame 11a. The frame 11a includes a seasoning box area 15a at a side away from the pot body assembly and a pipeline area 16a at a side adjacent to the pot body assembly. The seasoning box 12a is arranged in a receiving groove of the seasoning box area 15a.

The feeding box assembly 2a includes a housing 21a installed on the frame 11a, at least one feeding box 22a located on the top of the housing 21a, and a motion apparatus located in the inner cavity of the housing 21a, where the motion apparatus is used to drive the feeding box 22a to move on the top of the housing 21a, and the motion apparatus includes a motion mechanism 23a controlled by a driving mechanism 24a. The housing 21a includes an avoidance area 211a corresponding to the seasoning box 12a, and an extension area 212a matched with the top of the frame 11a and extending downward relative to the avoidance area 211a. The avoidance area 211a is located at a side away from the pot body assembly, and the extension area 212a is located at a side close to the pot body assembly. The seasoning box 12a extends upward into the cavity of the avoidance area 211a, and the motion mechanism 23a including the synchronous belt assembly 231a and the magnetic bracket 232a is located at a position corresponding to the avoidance area 211a in the inner cavity of the housing 21a, the driving mechanism 24a is arranged at a position corresponding to the extension area 212a in the inner cavity of the housing 21a, and the pipeline area 16a is located at a corresponding position below the extension area 212a.

Since the top of the seasoning box 12a extends out from the receiving groove and is higher than the end surface of the frame 11a, when the feeding box assembly 2a is placed on the frame 11a, the cavity below the avoidance area 211a is aligned with the seasoning box 12a, and the seasoning box 12a extends into the avoidance area 211a so that the projection of the seasoning box 12a on the vertical plane parallel to the X-axis can partially overlap with of the driving mechanism 24a.

Referring to FIG. 10, an embodiment of the present disclosure provides a feeding apparatus 10b, which is used to provide ingredients and/or seasonings to a cooking assembly (not shown). The cooking assembly includes a cooking container, the cooking container can be a wok, a frying pan, a boiling pot, etc., but this embodiment does not limit it. In the embodiment of the present disclosure, the feeding apparatus 10b mainly includes a material storage container 100b, a bearing assembly 200b and a feeding assembly 300b.

The material storage container 100b is used to store ingredients for cooking. The ingredients include but are not limited to solid ingredients such as scallion segments, potato cubes, potato shreds, minced meat, and chicken greens, as well as liquid ingredients such as milk and egg liquid. Of course, in other embodiments, the material storage container 100b can also be used to store cooking seasonings, including but not limited to water, oil, salt or brine, soy sauce, dark soy sauce, light soy sauce, chili oil, vinegar and mixtures thereof, etc., which are not limited in this embodiment.

Generally, due to actual cooking requirements, the number of the material storage containers 100b is set to at least two. Of course, it is understandable that in some embodiments, the number of the material storage container 100b may be only one, and this embodiment does not limit it. Exemplarily, the specific number of the material storage containers 100b can be set to 3, 4, 5, 7, 9, etc. corresponding to the number of required ingredients and/or seasonings, and this embodiment does not limit this. Furthermore, the volume and capacity of each of the material storage containers 100b can be set as required, and this embodiment does not limit them.

Please refer to FIG. 11, which shows a schematic structural diagram of the material storage container 100b in some embodiments. An opening is provided on the upper side of the material storage container 100b, and the opening serves as a discharge port 110b of the material storage container 100b. When in use, the ingredients and/or seasonings are provided to the cooking assembly through the discharge port 110b through the function of the feeding assembly 300b (details will be described later). Of course, the opening may also be used to allow food and/or seasoning to enter the material storage container 100b, which is not limited in this embodiment.

Referring to FIG. 12, the material storage container 100b is provided with a guide part 120b, the guide part 120b is located at a side of the discharge port 110b close to the cooking assembly and includes a guide section 121b and an anti-backflow section 122b which are sequentially arranged. The guide section 121b includes at least one arc-shaped section protruding toward the inner side of the material storage container 100b. According to the Coanda effect, when the fluid passes through the guide section 121b, it will deviate from the original flow direction and flow along the surface of the guide section 121b instead. Therefore, by setting the guide section 121b, the liquid food can be guided to flow along the guide section 121b, thereby reducing the liquid splashing caused by the liquid food leaving the material storage container 100b from the discharge port 110b.

The anti-backflow section 122b extends from the guide section 121b in a direction away from the discharge port 110b. Exemplarily, in the illustrated direction shown in FIG. 12, the anti-backflow section 122b is arranged on the lower side of the end of the guide section 121b and extends downward, and a bend is formed at the junction of the guide section 121b and the anti-backflow section 122b, and the bending angle of the bend is greater than or equal to 90°.

At the junction of the guide section 121b and the anti-backflow section 122b, the angle between the tangent directions of the two is the bending angle of the bend. Exemplarily, referring to FIG. 12 in combination with FIG. 19, the angle $\alpha$ between the tangent direction of the end of the guide section 121b and the tangent direction of the head end of the anti-backflow section 122b is the aforementioned bending angle, and here, the angle $\alpha$ is set at an obtuse angle. In the process of flipping the material storage container 100b to pour the food inside into the cooking assembly, especially when the material storage container 100b is flipped back to its original position after pouring, the liquid food leaving the guide section 121b will contact the anti-backflow section 122b and move toward the cooking assembly along the anti-backflow section 122b. Here, the anti-backflow section 122b can be provided to prevent part of the residual liquid from flowing back to the guide section 121b after pouring and falling back into the material storage container 100b. It can be understood that in other embodiments, the angle $\alpha$ can also be set to a right angle, and this embodiment does not limit it. Here, the anti-backflow section 122b extends in a direction close to the cooking assembly, thereby helping to guide the liquid food toward the cooking assembly while achieving the anti-backflow effect. However, when the angle $\alpha$ is set to an acute angle, since its extension direction and the direction in which the liquid food moves toward the material storage container 100b are located on both sides of the end of the guide section 121b, it will not have a better guiding effect.

It can be understood that in the above embodiment, the discharge port 110b is arranged on the upper side of the material storage container 100b, and the anti-backflow section 122b is arranged on the lower side of the end of the guide section 121b. However, in other embodiments, the discharge port 110b may not be disposed on the upper side of the material storage container 100b. For example, it may be disposed on a side of the material storage container 100b close to the cooking assembly, etc. This embodiment does not limit this. Furthermore, the anti-backflow section 122b only needs to be arranged at the end of the guide section 121b and located in a path that does not block the movement of liquid food from the guide section 121b to the cooking assembly. It is not limited to being disposed at the lower side of the guide section 121b, and this embodiment does not limit it.

Here, when the liquid food moves from the discharge port 110b to the cooking assembly, due to the different flow rates of the liquid food in different areas, it will cause a large liquid splash when the liquid food is poured into the cooking assembly. In particular, the flow velocity of the liquid food on both sides of the discharge port 110b is relatively large, so the liquid food on both sides will form a turbulent flow and first contact the cooking assembly, while part of the liquid food between the two sides has not yet moved to the position of contacting the cooking assembly, and then a gap will be formed between the liquid food on both sides, causing the liquid food to splash out in the middle gap when it just contacts the cooking assembly.

To this end, in some embodiments, please refer to FIG. 11, a discharge channel 130b is formed at the discharge port 110b, and the guide part 120b is located at the outlet of the discharge channel 130b. The inner wall of the material storage container 100b has a contraction section 131b contracting from the edge to the middle on two sides of the outlet of the material storage flow channel. The contraction section 131b is preferably configured to be arc-shaped to facilitate guiding the movement of liquid food and minimize the formation of turbulence. Please refer to FIGs. 11 and 13. The two contraction sections 131b on the left and right sides make the discharge channel 130b have a tendency to contract toward the middle along the direction approaching the cooking assembly. Here, due to this arrangement, liquid food will be gathered toward the middle, reducing the splashing of liquid that may be generated when it comes into contact with the cooking assembly. When pouring liquid food, the travel of the liquid food on two sides of the discharge channel 130b is greater than that in the middle, so that the liquid food on two sides of the material storage channel and the liquid food in the middle can roughly contact the cooking assembly at the same time, thereby reducing the problem of middle gaps and liquid splashing caused by different flow rates of liquid food.

Please refer to FIG. 14. In some embodiments, a concave-convex structure 150b is further arranged in the material storage container 100b. Exemplarily, the concave-convex structure 150b includes a convex part 151b and a guide rib 152b, where a plurality of the convex parts 151b are arranged at intervals on the bottom wall of the material storage container 100b. Specifically, in FIG. 14, the surface of the convex part 151b is arc-shaped, and is arranged in a staggered array. Of course, in other embodiments, the shape and arrangement of the convex part 151b may also be different, and this embodiment does not limit this. A plurality of guide ribs 152b are arranged at intervals on the side wall of the material storage container 100b, and the guide ribs 152b extend from the bottom wall of the material storage container 100b to the discharge port 110b. In this embodiment, the guide ribs 152b extend upward from the bottom wall of the material storage container 100b.

Here, if the inner wall of the material storage container 100b is arranged to be a plane, the food is easy to adhere to the inner wall of the material storage container 100b. In the embodiment of the present disclosure, by providing the convex part 151b and the guide rib 152b and other concave-convex structures 150b on the inner wall of the material storage container 100b, the food cannot be completely fitted with the inner wall of the material storage container 100b. Specifically, when the food is in the material storage container 100b, due to the arrangement of the concave-convex structure 150b, an air cavity is formed between the food and the inner wall of the material storage container 100b, which helps to avoid vacuum adsorption between the food and the inner wall of the material storage container 100b. Furthermore, a plurality of dot-shaped convex parts 151b are provided on the bottom wall of the material storage container 100b, so that the area of the air cavity on the bottom wall of the material storage container 100b is larger, and the food is less likely to adhere to the bottom wall. The guide rib 152b is provided on the side wall of the material storage container 100b. Air cavity is formed between the guide rib 152b to prevent food from adhering. Compared with the guide rib 152b extending in other directions, the guide rib 152b extending toward the discharge port 110b has less resistance to food movement and help guide the food to move toward the discharge port 110b to facilitate discharge.

Of course, it is understandable that in other embodiments, the specific configuration of the concave-convex structure 150b may be different from the aforementioned example. The concave-convex structure 150b only needs to be provided to reduce the contact area between the food and the material storage container 100b and prevent the food from adhering to the side wall and bottom wall of the material storage container 100b. For example, the bottom wall and the side wall of the material storage container 100b may be provided with the convex part 151b, or the bottom wall and the side wall of the material storage container 100b may be provided with guide rib 152b, etc., which are not limited in this embodiment.

Please refer to FIG. 10 again, the bearing assembly 200b is mainly used to carry and accommodate the material storage container 100b. Here, the bearing assembly 200b includes a bearing piece 210b and a driving piece (not shown).

A plurality of receiving grooves 211b are arranged on the bearing piece 210b. Each of the receiving grooves 211b is used to accommodate one of the material storage containers 100b. Usually, the number of the receiving grooves 211b is on a one-to-one correspondence to the number of the material storage containers 100b. The driving piece is connected to the bearing piece 210b to drive the bearing piece 210b to move. The driving piece may be a motor, a cylinder or other equipment, which is not limited in this embodiment.

For example, in the embodiment shown in FIG. 10, the number of the receiving grooves 211b is four, and each receiving groove 211b is used to contain one material storage container 100b. Here, in order to ensure that the material storage container 100b can be stably placed on the bearing piece 210b, the shape of the receiving groove 211b is adapted to the shape of the material storage container 100b so as to position the material storage container 100b in the receiving groove 211b. Here, the driving piece is used to drive the bearing piece 210b to move along a first direction X, and in conjunction with FIG. 15, a plurality of the receiving grooves 211b is sequentially arranged along the first direction X. It can be understood that, here, the first direction X is a straight line direction, and in other embodiments, the first direction X may also be a circumferential direction, etc., which is not limited in this embodiment.

Please continue to refer to FIG. 16. The feeding assembly 300b has a driving part (not shown) and a feeding part 310b. The driving part is connected to the feeding part 310b to provide driving force for the movement of the feeding part 310b. Here, the driving part can be a motor or a cylinder, etc., which is not limited in this embodiment.

The feeding part 310b is used to drive the material storage container 100b to move relative to the bearing piece 210b so as to supply materials to the cooking assembly through the material outlet 110b. Specifically, in some embodiments, please continue to refer to FIG. 16, the feeding part 310b is arranged on the lower side of the bearing piece 210b, and the lower side of the receiving groove 211b passes through the bearing piece 210b, and the feeding part 310b is in contact with the bottom of the material storage container 100b located in the receiving groove 211b. Here, the feeding part 310b and the material storage container 100b cooperate with each other through a detachable structure, such as a magnetic matching structure, a snap-fit structure, etc., which is not limited in this embodiment. When driven by the driving piece, the material storage container 100b moves along the first direction X with the bearing piece 210b. For the material storage container 100b moved to the upper side of the feeding part 310b, the feeding part 310b can be detachably connected to the material storage container 100b, and then drive the material storage container 100b to flip over and realize the feeding to the cooking assembly.

Specifically, during use, in an initial state, the material storage container 100b is located at the first position shown in FIG. 16, and the material storage container 100b is located in the receiving groove 211b. Here, the direction in which the material storage container 100b approaches the cooking assembly is the forward direction, and accordingly, the side of the material storage container 100b close to the cooking assembly is the front side, and the side away from the cooking assembly is the rear side. The feeding part 310b can drive the rear side of the material storage container 100b to rotate upward so that the material storage container 100b moves to the second position. In the second position, the food in the material storage container 100b can be poured forward from the front side of the discharge port 110b into the cooking assembly, that is, the feeding part 310b can drive the material storage container 100b to rotate clockwise relative to the first position shown in FIG. 16 to reach the second position, and realize the feeding at the second position.

As mentioned above, in order to more stably accommodate the material storage container 100b, the shape and size of the receiving groove 211b are adapted to the material storage container 100b. However, since the material storage container 100b will move under the drive of the feeding part 310b, if the shape and size of the receiving groove 211b are completely consistent with the shape and size of the material storage container 100b, when the material storage container 100b falls back into the receiving groove 211b under the drive of the feeding part 310b, if an error in position accuracy occurs, the material storage container 100b will not be able to accurately fall back into the receiving groove 211b. Therefore, in some embodiments, a matching gap 400b is formed between the material storage container 100b and the receiving groove 211b on a side of the material storage container 100b close to the cooking assembly (i.e., the front side in this embodiment).

Specifically, referring to FIG. 18, in the embodiment of the present disclosure, an extension part 212b is provided on the bearing piece 210b, and an arc-shaped guide surface 213b is provided on the extension part 212b. The guide surface 213b is located on a side of the receiving groove 211b close to the cooking assembly. Of course, in other embodiments, the receiving groove 211b may be provided with an inner wall located at the front side and the guide surface 213b may be formed on the inner wall at the front side thereof, or the guide surface 213b may be formed by other means, and this embodiment does not limit this. Please refer to FIG. 17. Corresponding to the guide surface 213b, a matching surface 140b is provided at the bottom of the material storage container 100b close to the cooking assembly. The matching gap 400b is located between the guide surface 213b and the matching surface 140b. Furthermore, along the direction approaching the cooking assembly, that is, along the forward direction, the matching gap 400b gradually increases, and then along the forward direction, the constraint of the receiving groove 211b on the material storage container 100b becomes looser. When the position where the material storage container 100b falls back is different from the preset position, since the guide surface 213b and the matching surface 140b are not completely tightly matched, the material storage container 100b can still slide into the receiving groove 211b through the guidance of the guide surface 213b on the matching surface 140b to achieve automatic correction, so that the material storage container 100b is not easily stuck outside the receiving groove 211b due to precision errors when falling back. Furthermore, when the feeding part drives the material storage container 100b to flip forward, the gradually increasing matching gap 400b prevents the material storage container 100b from interfering with the bearing piece 210b, thereby ensuring smooth movement of the material storage container 100b.

Here, the side surfaces except the front side are contoured with the material storage container 100b, so that when the material storage container 100b is located in the receiving groove 211b, the bottom areas of the other side surfaces of the material storage container 100b are in contact with the inner walls of the material storage container 100b, and the material storage container 100b only has the freedom to move toward the front side. Therefore, while the material storage container 100b can be easily dropped back into the receiving groove 211b, the receiving groove 211b can effectively limit the position of the material storage container 100b.

Here, in the embodiment shown in FIG. 17, the guide surface 213b and the matching surface 140b are both arc surfaces, so that when the guide surface 213b and the matching surface 140b are in contact, the arc surface can be used to guide the material storage container 100b to fall back into the receiving groove 211b. Of course, it is understandable that in other embodiments, a better guiding effect can be achieved if one of the guide surface 213b and the matching surface 140b is a curved surface.

Furthermore, it is understandable that, in other embodiments, the matching gap 400b may not gradually increase in the direction approaching the cooking assembly. For example, the matching gap 400b may be roughly maintained at a certain value, which is not limited in this embodiment.

Since the supporting frame is provided with a receiving groove 211b, and in some embodiments the receiving groove 211b vertically penetrates the bearing piece 210b, this may result in the bearing piece 210b having poor strength and being easily damaged. Therefore, in some embodiments, please refer to FIG. 18, the bearing piece 210b is provided with a reinforcing connection part 214b on the side close to the cooking assembly, and the reinforcing connection part 214b sequentially closes a side of a plurality of the receiving grooves 211b along the first direction X close to the cooking assembly, thereby helping to enhance the rigidity of the bearing piece 210b and reduce the bending deformation that may occur to the bearing piece 210b during use.

Correspondingly, an embodiment of the present disclosure further provides a material storage container 100b, the material storage container 100b includes a discharge port 110b, a guide section 121b and an anti-backflow section 122b. The guide section 121b is arranged at the discharge port 110b to form a Coanda effect; the anti-backflow section 122b is arranged at the end of the guide section 121b, and the anti-backflow section 122b extends from the guide section 121b in a direction away from the discharge port 110b to form a bend at the junction of the guide section 121b and the anti-backflow section 122b.

In some embodiments, the bending angle of the bend is greater than or equal to 90° to achieve better diversion and backflow prevention effects.

In some embodiments, the discharge port 110b is located on the upper side of the material storage container 100b, the guide section 121b is an arc-shaped section protruding toward the inner side of the material storage container 100b, and the anti-backflow section 122b is located on the lower side of the end of the guide section 121b. In some embodiments, a discharge channel 130b is formed at the discharge port 110b, and the discharge channel 130b gradually shrinks toward the middle in a direction away from the material storage container 100b.

In some embodiments, a concave-convex structure 150b is arranged in the material storage container 100b.

In some embodiments, the concave-convex structure 150b includes a convex part 151b and a guide rib 152b, where the convex part 151b is arranged on the bottom wall of the material storage container 100b; the guide rib 152b is arranged on the side wall of the material storage container 100b, and the guide rib 152b extends from the bottom wall of the material storage container 100b to the discharge port 110b.


Application Example 1


In application example 1, a material storage container 100b is provided, and an opening is arranged on the upper side of the material storage container 100b, and the opening is used as a discharge port 110b. After the material storage container 100b is turned over at a certain angle, the food stored in the material storage container 100b can be poured outward from the discharge port 110b. Here, at the end of the discharge port 110b, there is provided an arc-shaped guide section 121b protruding toward the inner side of the material storage container 100b, and the guide section 121b is used to form a Coanda effect to guide the fluid in the material storage container 100b to flow outward.

Application Example 2

In application example 2, a material storage container 100b is provided, which is substantially the same as the material storage container 100b provided in application example 1. The difference is that an anti-backflow section 122b is further provided at the end of the guide section 121b, and the end of the anti-backflow section 122b has a corner, so that the angle between the end of the arc-shaped section of the guide section 121b and the tangent of the anti-backflow section 122b is a right angle. Of course, in other examples, the angle can also be an obtuse angle.

Application Example 3

In application example 3, a material storage container 100b is provided, which is substantially the same as the material storage container 100b provided in application example 2. The difference is that the discharge channel 130b formed at the discharge port 110b gradually shrinks toward the middle in a direction away from the material storage container 100b.

Application Example 4

In application example 4, a material storage container 100b is provided, which is substantially the same as the material storage container 100b provided in application example 2 or 3. The difference is that an array of dot-shaped convex parts 151b are provided on the bottom wall of the material storage container 100b, and parallel-arranged, long-strip guide ribs 152b are provided on the side walls of the material storage container 100b, and the guide ribs 152b extend from the bottom wall of the material storage container 100b to the discharge port 110b.

Application Example 5

In application example 5, a feeding apparatus 10b is provided. The feeding apparatus 10b is used to feed materials to a cooking assembly and includes a material storage container 100b provided in any one of the aforementioned application examples 1 to 4. Here, the feeding apparatus 10b includes a bearing piece 210b, and the bearing piece 210b is provided with a receiving groove 211b for receiving the material storage container 100b. The inner wall of the receiving groove 211b close to the cooking assembly is provided with an arc-shaped guide surface 213b protruding close to the side of the material storage container 100b. Corresponding to the guide surface 213b, a matching surface 140b is provided at the bottom of the material storage container 100b on the side close to the cooking assembly. The matching surface 140b is an arc surface that is concave toward the side away from the receiving groove 211b. Here, the guide surface 213b and the matching surface 140b cooperate to form a matching gap 400b, and the matching gap 400b gradually increases along the direction approaching the cooking assembly.

The present disclosure provides a cooking device, including a feeding apparatus and a pot assembly, where the feeding apparatus is used to provide food materials to the pot assembly. Specifically, before cooking, the user puts the ingredients into the feeding apparatus; during the cooking process, the cooking device can automatically put the ingredients on the feeding box assembly into the pot body assembly, and then process the ingredients into dishes through operations such as stir-frying and heating.

The feeding apparatus includes a frame, a feeding box and a feeding mechanism. The frame is used to install various mechanisms required for the feeding apparatus. The feeding box is used to place food. The feeding mechanism is arranged in the frame and is used to drive the feeding box located on the top thereof to flip toward the pot body assembly, thereby putting the food in the feeding box into the pot body assembly.

Specifically, the feeding mechanism includes a feeding arm, an electromagnet and a conductive apparatus, where the feeding arm is rotatably connected to a frame; the electromagnet is arranged on the feeding arm, and can generate magnetic force when powered on, adsorbing the magnet on the feeding box, so that the feeding box can be adsorbed on the feeding arm; the conductive apparatus is used to energize the electromagnet on the feeding arm, where the conductive apparatus at least includes a rotor and a stator that are rotatably connected and electrically conductive, the stator is fixed on the frame, the rotor can rotate synchronously with the feeding arm, a wire that rotates synchronously with the rotor and the feeding arm is arranged on the rotor, and the wire can extend from a position connected to the rotor to a position connected to the electromagnet.

In this way, since the wire extends from the position connected with the rotor to the position connected with the electromagnet, the stator can be electrically connected to the outside world, and the external power source can supply power to the electromagnet through the conductive apparatus. During the feeding process, when the corresponding feeding box moves to the position corresponding to the feeding arm, the electromagnet is connected to the external power supply through the conductive apparatus and started, thereby adsorbing the feeding box on the feeding arm. The feeding arm then rotates and pushes the feeding box to the side where the pot body assembly is located, and then the food in the feeding box will be poured into the pot body assembly. During the rotation of the feeding arm, the rotor and the wire in the conductive apparatus can rotate synchronously with the feeding arm, while the stator will remain fixed. The rotor and the stator can maintain electrical conduction during the relative rotation, thereby continuously supplying power to the electromagnet to prevent the feeding box from slipping off the feeding arm.

It can be seen that for the cooking device disclosed in the present invention, during the feeding process, the wire in the feeding device can remain relatively still with the electromagnet and will not bend repeatedly, thereby avoiding the life attenuation of the wire due to repeated bending, greatly extending the service life of the feeding mechanism, and users do not need to frequently repair the feeding mechanism, thereby improving the user experience.

For ease of understanding, the specific structure and working principle of the cooking device and feeding apparatus disclosed herein are described in detail below in conjunction with an embodiment with reference to FIGs. 20 to 37.

As shown in FIG. 20, the present disclosure provides a feeding apparatus, which is applied to a cooking device. In addition to the feeding apparatus, the cooking device also includes a pot body assembly. The pot body assembly includes a pot body, a heating apparatus, a stirring apparatus and other structures. The feeding apparatus is at least used to provide food into the pot body.

As shown in FIGs. 21 and 22, the feeding apparatus includes a frame 1c, a feeding box 2c and a feeding mechanism. The frame 1c is used to install various mechanisms required for the feeding apparatus, the feeding box 2c is used to place food, and the feeding mechanism is arranged in the frame 1c, and is used to drive the feeding box 2c located on the top thereof to flip toward the pot body assembly, thereby putting the food in the feeding box 2c into the pot body assembly.

As shown in FIG. 20, in one embodiment of the present disclosure, the feeding apparatus may further include a seasoning box assembly 5c, and the seasoning box assembly 5c is used to provide seasonings such as water, salt, soy sauce, vinegar, and oil into the pot body assembly.

Before cooking, the user injects various seasonings into the seasoning box assembly 5c in advance, and then puts the ingredients into the feeding box 2c assembly; during the cooking process, the cooking device can automatically add the seasonings into the pot body assembly, and put the ingredients on the feeding box 2c assembly into the pot body assembly, and then process the ingredients into dishes through operations such as stir-frying and heating.

As shown in FIG. 23, the feeding mechanism includes a feeding arm 41c, an electromagnet 42c and a conductive apparatus 43c. The feeding arm 41c is rotatably connected to the frame 1c. Specifically, as shown in FIGs. 24 and 25, a feeding arm groove 11c is opened on the frame 1c and extends to the top of the frame 1c. The feeding arm 41c is arranged in the feeding arm groove 11c. A hinge shaft 411c is arranged on the feeding arm 41c. The hinge shaft 411c passes through the groove wall of the feeding arm groove 11c. The feeding arm 41c is hinged to the frame 1c through the hinge shaft 411c.

As shown in FIGs. 23 and 25, in one embodiment of the present disclosure, the feeding mechanism also includes a bearing 412c, the inner ring of the bearing 412c is sleeved on the end of the hinge shaft 411c passing through the feeding arm 41c, and the outer ring of the bearing 412c is fixed in a bearing seat (not shown in the figure) provided on the inner wall of the feeding arm groove 11c. The bearing seat can provide support for the hinge shaft 411c through the bearing 412c, and the bearing 412c can ensure that the hinge shaft 411c and the frame 1c can be relatively rotatably connected.

In order to drive the feeding arm 41c to rotate, as shown in FIG. 25, in one embodiment of the present disclosure, the feeding mechanism further includes a driving motor 439c, and the driving motor 439c is arranged at one end of the feeding arm 41c. Moreover, the output shaft 4391c of the driving motor 439c penetrates the groove wall of the feeding arm groove 11c and is connected to the feeding arm 41c, so that when powered on, the output shaft 4391c of the driving motor 439c can drive the feeding arm 41c to rotate.

As shown in FIGs. 23 and 24, the electromagnet 42c is arranged on the feeding arm 41c, and the electromagnet 42c can adsorb the feeding box 2c when powered on. The feeding box 2c can be made of magnetic materials such as iron. Specifically, as shown in FIGs. 27 and 28, in one embodiment of the present disclosure, in one embodiment of the present disclosure, the feeding arm 41c includes a hinge section 413c and an adsorption section 414c, one end of the hinged end is fixedly connected to the output shaft 4391c of the drive motor 439c and the hinged shaft 411c, and the other end is fixedly connected to the adsorption section 414c, and the electromagnet 42c is arranged on the adsorption section 414c. As shown in FIG. 28, the cross section of the adsorption section 414c is in a straight line shape, and can fit well with the bottom of the feeding box 2c, thereby tightly adsorbing the feeding box 2c and the adsorption section 414c. As shown in FIGs. 23, 24 and 29, in one embodiment of the present disclosure, at least two electromagnets 42c are provided in the extension direction of the adsorption section 414c. By arranging at least two electromagnets 42c in the extension direction of the adsorption section 414c, the feeding box 2c and the adsorption section 414c can be adsorbed more firmly.

The conductive apparatus 43c is used to supply power to the electromagnet 42c on the feeding arm 41c. As shown in FIGs. 25 and 29, the conductive apparatus 43c includes a rotor 431c and a stator 432c that are rotatably connected and electrically conductive. The stator 432c is fixed on the frame 1c, and the rotor 431c can rotate synchronously with the feeding arm 41c; a wire 434c is provided on the rotor 431c, which rotates synchronously with the rotor 431c and the feeding arm 41c, and the wire 434c extends from a position connected to the rotor 431c to a position connected to the electromagnet 42c. As shown in FIGs. 25 and 29, in one embodiment of the present disclosure, the rotor 431c rotates in the inner cavity of the stator 432c, and in another embodiment of the present disclosure, the stator 432c can be arranged on the inner side of the rotor 431c, and the rotor 431c rotates on the outer side of the stator 432c.

Since the wire 434c extends from the position connected to the rotor 431c to the position connected to the electromagnet 42c, the stator 432c can be electrically connected to the outside world, and the external power source can supply power to the electromagnet 42c through the conductive apparatus 43c. During the feeding process, when the feeding box 2c moves to the position corresponding to the feeding arm 41c, the electromagnet 42c is connected to the external power supply through the conductive apparatus 43c and then started, thereby adsorbing the feeding box 2c on the feeding arm 41c, and then the feeding arm 41c rotates and pushes the feeding box 2c to deflect toward the side where the pot body assembly is located, and the food in the feeding box 2c will be poured into the pot body assembly. During the rotation of the feeding arm 41c, the rotor 431c and the wire 434c in the conductive apparatus 43c can rotate synchronously with the feeding arm 41c, while the stator 432c will remain fixed. The rotor 431c and the stator 432c can maintain electrical conduction during the relative rotation, thereby continuously supplying power to the electromagnet 42c to prevent the feeding box 2c from slipping off the feeding arm 41c.

It can be seen that for the cooking device disclosed in the present invention, during the feeding process, the wire 434c in the feeding apparatus can remain relatively still with the electromagnet 42c and will not bend repeatedly, thereby avoiding the life degradation of the wire 434c due to repeated bending, greatly extending the service life of the feeding mechanism, and the user does not need to frequently repair the feeding mechanism, thereby improving the user experience.

In order to achieve the delivery of multiple ingredients, as shown in FIG. 30, in one embodiment of the present disclosure, the feeding apparatus also includes a tray 3c and a motion mechanism (not shown in the figure) arranged on the top of the frame 1c, and the tray 3c is provided with at least two positions for accommodating feeding boxes 2c, and each feeding box 2c is arranged on the tray 3c. The motion mechanism is arranged in the frame 1c, and can drive the tray 3c to move above the frame 1c, so as to move different feeding boxes 2c to above the feeding arm 41c respectively. As shown in FIG. 30, a feeding hole 31c through which a feeding arm 41c passes is provided on the tray 3c. The feeding arm 41c can extend from the feeding hole 31c, thereby pushing the feeding box 2c to leave the tray 3c and flip it in the direction of the pot body assembly, thereby putting the food in the feeding box 2c into the pot body assembly.

In order to enable the tray 3c to move in a preset direction, as shown in FIG. 30, a guide groove 33c is provided at the bottom of the tray 3c, and as shown in FIG. 24, a guide bar 12c matching the guide groove 33c is provided at the top of the frame 1c, and the guide groove 33c and the guide bar 12c both extend along the preset direction. In this way, the motion apparatus can drive the tray 3c and the feeding box 2c on the tray 3c to reciprocate along the preset direction, so that each feeding box 2c can move to the top of the feeding arm 41c and then feed.

As shown in FIGs. 26 and 30, a blocking edge 32c is provided at one end of the feeding hole 31c facing the feeding direction. The blocking edge 32c can make the tray 3c as a whole grid-like, thereby improving the overall strength of the tray 3c. Correspondingly, as shown in FIGs. 27 and 28, the hinge section 413c is in the shape of an arch that bends away from the feeding box 2c, and can avoid the blocking edge 32c when the feeding arm 41c rotates to the feeding position, so that the rotation angle of the feeding arm 41c will not be affected by the blocking edge 32c, and can rotate at least 90°, ensuring that the food in the feeding box 2c can be poured out cleanly.

As shown in FIGs. 27 and 28, in one embodiment of the present disclosure, the rotation axis of the feeding arm 41c is located directly below the blocking edge 32c. In this way, the feeding arm 41c as a whole will not protrude from the side of the frame 1c, and the rotation axis of the feeding arm 41c can be as close to the outside as possible, thereby leaving space for the adsorption section 414c of the feeding arm 41c, thereby increasing the contact area between the adsorption section 414c and the feeding box 2c.

In order to prevent the stator 432c from being connected to other conductive structures and causing leakage, as shown in FIG. 31, in one embodiment of the present disclosure, an insulating housing 433c is provided on the stator 432c, and the conductive apparatus 43c is fixedly connected to the frame 1c through the insulating housing 433c.

In order to realize the synchronous rotation of the rotor 431c and the conducting wire 434c with the feeding arm 41c, as shown in FIGs. 29 and 31, in one embodiment of the present disclosure, the conductive apparatus 43c also includes a pin shaft 435c, and the pin shaft 435c is arranged to pass through the rotor 431c, and the pin shaft 435c is provided with a first clamping end 4351c on the side close to the feeding arm 41c, and the hinge shaft 411c is provided with a second clamping end 4111c which is clamped with the first clamping end 4351c on the side close to the rotor 431c, and one of the first clamping end 4351c and the second clamping end 4111c is a clamping groove extending along the radial direction of the conductive apparatus 43c, and the other is a clamping part matching the clamping groove. Since the clamping part and the clamping groove are engaged with each other, when the hinge shaft 411c on the feeding arm 41c rotates, the rotor 431c and the wire 434c can be driven to rotate synchronously, thereby ensuring that the wire 434c and the electromagnet 42c remain relatively still and avoiding repeated bending of the wire 434c.

In one embodiment of the present disclosure, a magnetic piece is provided on the rotor 431c, and the magnetic piece can rotate synchronously with the feeding arm 41c. The feeding mechanism also includes an angle detection unit 437c, which is arranged at a position corresponding to the magnetic piece and can obtain the rotation angle of the rotor 431c. Specifically, as shown in FIGs. 25, 29 and 31, in one embodiment of the present disclosure, the magnetic piece is an annular magnet 436c, which is arranged at the end of the rotor 431c away from the feeding arm 41c, and the angle detection unit 437c is arranged on the outer side of the rotor 431c away from the feeding arm 41c, and is arranged opposite to the annular magnet 436c.

During the rotation of the annular magnet 436c, the magnetic field detected by the angle detection unit 437c will change. The angle detection unit 437c can obtain the rotation angle of the feeding arm 41c through the change of the magnetic field, and then can timely control the feeding arm 41c to stop or reverse, to prevent the feeding arm 41c from excessively rotating and causing a collision between the feeding arm 41c and the blocking edge 32c, thereby preventing the feeding arm 41c from pushing the entire tray 3c away from the frame 1c.

As shown in FIG. 32, in order to ensure that the magnetic field detected by the angle detection unit 437c can change during the rotation of the annular magnet 436c, the two radial ends of the annular magnet 436c are respectively an N pole and an S pole.

As shown in FIG. 31, in one embodiment of the present disclosure, a flange 4352c is provided on the side of the pin shaft 435c away from the feeding arm 41c, and the annular magnet 436c is sleeved on the pin shaft 435c, with one end abutting against the flange 4352c and the other end abutting against the rotor 431c. It can be seen that the structure of fixing the annular magnet 436c and the pin shaft 435c by the flange 4352c is simple and the processing cost is low.

In order to achieve relative fixation between the conductive apparatus 43c and the angle detection unit 437c, as shown in FIGs. 33 and 34, in one embodiment of the present disclosure, the feeding mechanism also includes a connecting bracket 438c, and the conductive apparatus 43c and the angle detection unit 437c are respectively arranged on the connecting bracket 438c, so that the angle detection unit 437c is arranged relative to the magnetic piece, and a gap is formed between the angle detection unit 437c and the magnetic piece. Since a gap is formed between the angle detection unit 437c and the magnetic piece, the rotation virtual position and friction damping problems existing in the contact angle detection mechanism can be avoided. In addition, by using the magnetic field to detect the rotation angle, the error of the obtained angle result can be reduced and the accuracy of the obtained angle result can be improved.

As shown in FIGs. 31, 33 and 34, in one embodiment of the present disclosure, the connecting bracket 438c is an integrated structure, the conductive apparatus 43c is installed on one side of the connecting bracket 438c, and the angle detection unit 437c is installed on the other side of the connecting bracket 438c. After the conductive apparatus 43c and the angle detection unit 437c are installed at corresponding positions on the connecting bracket 438c, the angle detection unit 437c and the magnetic piece can be kept opposite to each other with a gap.

In another embodiment of the present disclosure, the connecting bracket 438c includes a first bracket body 4381c and a second bracket body 4382c, the conductive apparatus 43c is arranged on the first bracket body 4381c, the angle detection unit 437c is arranged on the second bracket body 4382c, and the first bracket body 4381c and the second bracket body 4382c are constructed to be detachably connected. Specifically, as shown in FIGs. 35, 36 and 37, the first bracket body 4381c is arc-shaped, and the second bracket body 4382c is divided into a square connecting section 43821c and a mounting section 43822c extended from the connecting section 43821c. The insulating housing 433c of the conductive apparatus 43c is installed in the arc-shaped interior of the first bracket body 4381c, and the angle detection unit 437c is installed on the connecting section 43821c of the second bracket body 4382c. The second bracket body 4382c is detachably connected to the first bracket body 4381c through the mounting section 43822c, and the distance and relative angle between the annular magnet 436c and the angle detection unit 437c can be adjusted by adjusting the mounting position to adapt to the installation requirements of different angle detection units 437c.

The present disclosure further provides a feeding apparatus. The structure and function of the feeding apparatus are as mentioned above and will not be described in detail here. The present disclosure also provides a feeding apparatus, including a frame 1c, a feeding box 2c, a tray 3c and a feeding mechanism, where the tray 3c is arranged on the top of the frame 1c, the feeding box 2c is arranged on the tray 3c, a feeding hole 31c is arranged on the tray 3c, a blocking edge 32c is arranged at one end of the feeding hole 31c facing the feeding direction, and the feeding mechanism is configured to drive the feeding box 2c to feed through the feeding hole 31c;

The feeding mechanism includes a feeding arm 41c rotatably connected to the frame 1c; the feeding arm 41c includes a hinge section 413c and an adsorption section 414c; the hinge section 413c is constructed to be an arch bent away from the feeding box 2c, and is constructed to avoid the blocking edge 32c when the feeding arm 41c rotates to the feeding position.

The specific structure and function of the above-mentioned feeding apparatus are as mentioned above and will not be repeated here.

Application scenario 3

The present disclosure provides a cooking device, including a feeding apparatus and a pot assembly, where the feeding apparatus is used to provide food materials to the pot assembly. Specifically, before cooking, the user puts the ingredients into the feeding apparatus; during the cooking process, the cooking device can automatically put the ingredients on the feeding box 2c assembly into the pot body assembly, and then process the ingredients into dishes through operations such as stir-frying and heating.

The feeding apparatus includes a frame 1c, a feeding box 2c and a feeding mechanism.

The frame 1c is used to install various mechanisms required for the feeding apparatus. The feeding box 2c is used to place food. The feeding mechanism is arranged in the frame 1c and is used to drive the feeding box 2c located on the top thereof to flip toward the pot body assembly, thereby putting the food in the feeding box 2c into the pot body assembly.

Specifically, the feeding mechanism includes a feeding arm 41c, an electromagnet 42c and a conductive apparatus 43c, where the feeding arm 41c is rotatably connected to the frame 1c; the electromagnet 42c is arranged on the feeding arm 41c, and can generate magnetic force when energized to adsorb the magnet on the feeding box 2c, so that the feeding box 2c can be adsorbed on the feeding arm 41c; the conductive apparatus 43c is used to energize the electromagnet 42c on the feeding arm 41c, where the conductive apparatus 43c at least includes a rotor 431c and a stator 432c that are rotatably connected and electrically conductive, the stator 432c is fixed on the frame 1c, the rotor 431c can rotate synchronously with the feeding arm 41c, and a wire 434c is arranged on the rotor 431c to rotate synchronously with the rotor 431c and the feeding arm 41c, and the wire 434c can extend from a position connected to the rotor 431c to a position connected to the electromagnet 42c.

In this way, since the wire 434c extends from the position connected to the rotor 431c to the position connected to the electromagnet 42c, the stator 432c can be electrically connected to the outside world, and the external power source can supply power to the electromagnet 42c through the conductive apparatus 43c. During the feeding process, when the feeding box 2c is in the feeding box 2c, the electromagnet is started after being connected to the external power supply through the conductive apparatus 43c, so that the feeding box 2c is adsorbed on the feeding arm 41c, and then the feeding arm 41c rotates and pushes the feeding box 2c to deflect to the side where the pot body assembly is located, and then the food in the feeding box 2c will be poured into the pot body assembly. During the rotation of the feeding arm 41c, the rotor 431c and the wire 434c in the conductive apparatus 43c can rotate synchronously with the feeding arm 41c, while the stator 432c will remain fixed. The rotor 431c and the stator 432c can maintain electrical conduction during the relative rotation, thereby continuously supplying power to the electromagnet 42c to prevent the feeding box 2c from slipping off the feeding arm 41c.

For the cooking device disclosed in the present invention, during the feeding process, the wire 434c in the feeding apparatus can remain relatively still with the electromagnet 42c and will not bend repeatedly, thereby avoiding the life attenuation of the wire 434c due to repeated bending, greatly extending the service life of the feeding mechanism, and the user does not need to frequently repair the feeding mechanism, thereby improving the user experience.

Application scenario 4

The present disclosure provides a cooking device, including a feeding apparatus and a pot body assembly, where the feeding apparatus is used to provide cooking materials such as seasonings and ingredients to the pot body assembly. The feeding apparatus includes a frame 1c, a feeding box 2c and a feeding mechanism, and the feeding mechanism includes a feeding arm 41c, an electromagnet 42c, a conductive apparatus 43c and an angle detection unit 437c, where the feeding arm 41c is rotatably connected to the frame 1c; the electromagnet 42c is arranged on the feeding arm 41c, and can adsorb the feeding box 2c on the feeding arm 41c when powered on; the conductive apparatus 43c is used to energize the electromagnet 42c on the feeding arm 41c.

The magnetic piece is arranged on the rotor 431c of the conductive apparatus 43c, and the magnetic piece can rotate synchronously with the feeding arm 41c. The angle detection unit 437c is arranged at a position corresponding to the magnetic piece, and can obtain the rotation angle of the feeding arm 41c by detecting the change of the magnetic field. Then, the feeding arm 41c can be controlled to stop or reverse in time to prevent the feeding arm 41c from colliding with the blocking edge 32c due to excessive rotation of the feeding arm 41c, thereby preventing the feeding arm 41c from pushing the entire tray 3c away from the frame 1c.

Please refer to FIG. 38. An embodiment of the present disclosure provides a cooking device 10d, which includes a feeding apparatus 100d, and the feeding apparatus 100d is used to provide seasoning to a cooking container 200d. The feeding apparatus 100d includes a body and a connecting piece 150d. The connecting piece 150d is arranged on the body and is used to cooperate with the cooking container 200d to fix the relative position between the cooking container 200d and the feeding apparatus 100d, thereby facilitating the feeding apparatus 100d to feed the cooking container 200d in a preset manner.

Here, in order to facilitate the description of the structure of the feeding apparatus 100d itself and its positional relationship with other assemblies, a first direction X, a second direction Y and a third direction Z that are perpendicular to each other are defined in the embodiment of the present disclosure, and a plane perpendicular to the first direction X is defined as a reference plane. Typically, the third direction Z is set to be a vertical direction, but this embodiment does not limit this.

Typically, the body mainly includes a base 110d, a bearing piece 120d, a driving assembly (not shown) and a feeding assembly 140d (see FIG. 39).

The base 110d is mainly used to carry and assemble other assemblies. Here, generally, the base 110d is used to arrange the bearing piece 120d on one side of the third direction Z. When the third direction Z is a vertical direction, that is, the upper side of the base 110d is used to set the bearing piece 120d. Here, the base 110d is provided with a support part 111d on the other side of the third direction Z, and the support part 111d supports one side of the base 110d for cooperating with the bearing piece 120d to a sufficient height. Of course, the interior of the base 110d and its support part 111d may also be used to accommodate other assemblies, such as the material storage container 130d and the feeding assembly 140d for feeding food materials, and the support part 111d may be provided with a feeding assembly for seasoning, which is not limited in this embodiment.

Here, the bearing piece 120d is mainly used to place the material storage container 130d. For example, please refer to FIG. 39. Four bearing positions 121d are arranged on the bearing piece 120d along the first direction X, and each of the bearing positions 121d is used to place one material storage container 130d. It can be understood that, in other embodiments, the number of the bearing positions 121d can be set according to actual needs, and is not limited to four. For example, it can be two, five, eight, etc. This embodiment does not limit it, but usually, for actual cooking needs, the number of bearing positions 121d is greater than or equal to two.

Here, the material storage container 130d is used to store ingredients and/or seasonings for cooking, and when in use, the number and position of the material storage container 130d correspond one-to-one to the number and position of the bearing position 121d.

Here, the upper part of the material storage container 130d may be provided with an opening for allowing food materials and/or seasonings to enter and exit. It is understandable that, in some embodiments, the material storage container 130d is regarded as a part of the feeding apparatus 100d, but in other embodiments, the material storage container 130d may also be separated from the base 110d, the bearing piece 120d, etc. of the material storage container 130d and sold separately, that is, it is not regarded as one of the assemblies of the feeding apparatus 100d, and this embodiment does not constitute an undue limitation to it.

Here, the ingredients include but are not limited to solid ingredients such as scallion segments, potato cubes, potato shreds, minced meat, and chicken greens, as well as liquid ingredients such as milk and egg liquid. Of course, in other embodiments, the material storage container 130d can also be used to store cooking seasonings, including but not limited to water, oil, salt or brine, soy sauce, dark soy sauce, light soy sauce, chili oil, vinegar and mixtures thereof, etc., which are not limited in this embodiment.

The driving assembly is used to drive the bearing piece 120d to move, so that the material storage container 130d carried by the bearing piece 120d can move accordingly. When the material storage container 130d is moved to a preset position, the food materials and/or seasonings can be put from the material storage container 130d into the cooking container 200d through the feeding assembly 140d and the like.

Here, the driving assembly may be a motor or the like, which is arranged in the base 110d and is connected to the bearing piece 120d via a transmission piece such as a gear, so as to drive the bearing piece 120d to move along the first direction X. Alternatively, in other embodiments, the driving assembly may include two magnetic pieces that are magnetically attracted to each other, one magnetic piece is arranged on the bearing piece 120d, and the other magnetic piece is connected to the motor or cylinder or other driving piece of the driving assembly so that it can be driven by the motor or cylinder or other driving piece and drive the other magnetic piece and the bearing piece 120d to move along the first direction X. Of course, the structure of the driving assembly is not limited to the above, and the example description of this embodiment does not unduly limit the driving assembly.

Here, please refer to FIG. 39. A guide rail 112d is also provided on the bearing piece 120d along the first direction X. The bearing piece 120d is engaged with the guide rail 112d and can move along the first direction X. The provision of the guide rail 112d helps to improve the stability of the bearing piece 120d during movement and the accuracy of the movement direction, so that the bearing piece 120d and the material storage container 130d thereon can better move to the desired position.

In some embodiments, a feeding assembly 140d is provided on the base 110d in the middle of the first direction X. Here, please continue to refer to FIG. 39. An opening groove is provided on the base 110d, and the opening groove is used to accommodate the feeding assembly 140d. The opening groove penetrates the base 110d along the third direction Z close to the bearing piece 120d and forms a first opening 113d on the bearing surface. The position of the first opening 113d and the feeding assembly 140d in the third direction Z corresponds to each other.

Here, the feeding assembly 140d has a driving part (not shown) and a feeding part 141d, and the driving part is connected to the feeding part 141d to provide driving force for the movement of the feeding part 141d. Here, the driving part can be a motor or a cylinder, etc. and is transmission-connected to the feeding part 141d to drive the feeding part 141d to move. This embodiment does not specifically limit the driving part.

The feeding part 141d is used to drive the material storage container 130d to move relative to the bearing piece 120d so that the material storage container 130d and the cooking assembly can be fed with materials. Specifically, in some embodiments, the third direction Z is a vertical direction, the feeding part 141d is located at the lower side of the bearing piece 120d, and a second opening (not shown in the figure) is provided at the bearing position 121d and passes through the bearing piece 120d along the third direction Z. The feeding part 141d can pass through the first opening 113d and the second opening to contact the bottom of the material storage container 130d located in the bearing position 121d. Here, the feeding part 141d and the material storage container 130d cooperate with each other through a detachable structure, such as a magnetic matching structure, a snap-fit structure, etc., which is not limited in this embodiment. Exemplarily, an iron sheet is provided at the bottom of the material storage container 130d, and an electromagnet is provided on the feeding part 141d. When the electromagnet is energized, it can adsorb the iron sheet to achieve the connection between the feeding part 141d and the material storage container 130d; when the electromagnet is de-energized, the magnetic adsorption force between the electromagnet and the iron sheet disappears, and the connection between the feeding part 141d and the material storage container 130d is released.

Here, the bearing piece 120d and the material storage container 130d thereon move along the first direction X when driven by the driving assembly. For the material storage container 130d moved to the upper side of the feeding part 141d, the feeding part 141d can be detachably connected to the material storage container 130d, and then drive the material storage container 130d to turn over and realize the feeding of materials to the cooking assembly. The detachable connection can be a magnetic fit, for example, a magnet is provided on the feeding part 141d, and a magnet is correspondingly provided on the bottom of the material storage container 130d, and the two magnets can be magnetically fitted with each other; or, a suction cup is provided on the feeding part 141d for connecting to the material storage container 130d; or, a corresponding snap-on structure is provided between the feeding part 141d and the material storage container 130d, etc., and this embodiment does not limit it.

Specifically, when in use, please refer to FIG. 40, in the initial state, the material storage container 130d is located at the first position, that is, the material storage container 130d is located in the bearing position 121d. Here, the direction in which the material storage container 130d approaches the cooking container 200d is the forward direction, and accordingly, the side of the material storage container 130d close to the cooking container 200d is the front side, and the side away from the cooking assembly is the rear side. Please refer to FIG. 41, the feeding part 141d can drive the rear part of the material storage container 130d to flip forward, and the material storage container 130d is in the second position when it moves forward. In the second position, the food in the material storage container 130d can be poured forward from the material storage container 130d into the cooking container 200d. Of course, this embodiment only illustrates the motion state and position by way of example, and does not constitute an undue restriction on the rotation angle of each position.

Here, the relative position between the feeding apparatus 100d and the cooking container 200d needs to be determined, otherwise the food and/or seasoning in the material storage container 130d will not be accurately put into the cooking container 200d, which will cause the food and/or seasoning to leak out, not only resulting in a waste of food and/or seasoning, but also causing pollution to the external environment. Therefore, in the embodiment of the present disclosure, please refer to FIG. 38, the feeding apparatus 100d also includes a connecting piece 150d, please refer to FIG. 42, the connecting piece 150d is provided with a limiting part and a connecting part 155d. The limiting part is used to cooperate with the body to achieve the positioning between the connecting piece 150d and the body; the connecting part 155d is used to cooperate with the cooking container 200d to achieve the positioning between the connecting piece 150d and the cooking container 200d, and then through the connecting piece 150d, the relative position between the body and the cooking container 200d can be determined. That is, the connecting piece 150d is engaged with the body of the feeding apparatus 100d, for example, with the base 110d, through the limiting part, and then after the cooking container 200d is engaged with the connecting piece 150d, the relative position between the cooking container 200d and the body is fixed, and then after the user disassembles the cooking container 200d for cleaning and other operations, the cooking container 200d can be easily installed back to the preset position so that the feeding apparatus 100d can feed the cooking container 200d.

Here, please refer to FIG. 43, the limiting part includes a first limiting part 151d, a second limiting part 152d and a third limiting part 153d. Please refer to FIG. 44, the base 110d of the body is correspondingly provided with a first matching part 114d, a second matching part 116d and a third matching part 117d. Specifically, the first matching part 114d, the second matching part 116d and the third matching part 117d are provided on the support part 111d of the base 110d. The first limiting part 151d is mainly used to cooperate with the first matching part 114d to limit the relative position between the base 110d and the connecting piece 150d in the first direction X; the second limiting part 152d is mainly used to cooperate with the second matching part 116d to limit the relative position between the base 110d and the connecting piece 150d in the second direction Y; the third limiting part 153d is mainly used to cooperate with the third matching part 117d to limit the relative position between the base 110d and the connecting piece 150d in the third direction Z. Of course, it is understandable that, in other embodiments, the first matching part 114d, the second matching part 116d and the third matching part 117d may also be provided on other assemblies of the body, and this embodiment does not limit them.

Please refer to FIGs. 42 and 43. In some embodiments, the first limiting part 151d is a protrusion part, which protrudes outward in the second direction Y, and a limiting slide rail 154d is arranged on the protrusion part along the protruding direction of the protrusion part. The limiting slide rail 154d extends along the protruding direction (i.e., the second direction Y), and two limiting slide rails 154d are arranged on both sides of the protrusion along the first direction X. Here, please refer to FIGs. 44 and 45 again. The protrusion part specifically protrudes along the second direction Y toward the side of the base 110d close to the body.

Please continue to refer to FIGs. 44 and 45. Here, the support part 111d of the base 110d is provided with the first matching part 114d corresponding to the protruding part on the side close to the connecting piece 150d. The first matching part 114d is a recessed part recessed in the second direction Y. The shape and position of the recessed part are adapted to the shape and position of the protruding part. In this embodiment, the recessed part and the protruding part are both roughly rectangular. Of course, in other embodiments, both may be other shapes, which are not limited by this embodiment. Here, a limiting buckle 115d is arranged in the recessed part, and the number and position of the limiting buckle 115d correspond to the limit slide rail 154d. Here, the limiting buckle 115d can be engaged with the limiting slide rail 154d, so that the connecting piece 150d can move along the second direction Y relative to the base 110d under guidance, so that the protrusion is engaged with the recessed part. Here, please refer to FIGs. 46 and 47, which are schematic diagrams showing the state in which the protrusion is fitted into the recessed part. The relative position between the connecting piece 150d and the base 110d in the first direction X is limited by the cooperation between the protruding part and the recessed part, and the cooperation between the limiting buckle 115d and the limiting slide rail 154d.

Of course, it is understandable that in other embodiments, the first limiting part 151d may be a recessed part, and the first matching part 114d may be a protruding part; and/or the limiting slide rail 154d is arranged on the first matching part 114d, and the limiting buckle 115d is arranged on the first limiting part 151d, or, the limiting slide rail 154d and the limiting buckle 115d may not be arranged, and this embodiment does not limit it.

Please refer to FIG. 43 again. Here, a second limiting part 152d is provided on the first limiting part 151d. The second limiting part 152d extends along the third direction Z. Here, the third direction Z is the direction toward the outside of the paper. Here, the second limiting part 152d is two buckles symmetrically arranged along the first direction X, and is recessed toward the inner side of the first limiting part 151d along the third direction Z. Of course, the number and position of the second limiting parts 152d are not limited to the above examples, and in other embodiments, the first limiting parts 151d may also be disposed at other positions of the connecting piece 150d. Please refer to FIGs. 44 and 45 again. A second matching part 116d is provided on the support part 111d of the base 110d corresponding to the second limiting part 152d. The number and position of the second matching part 116d correspond to the second limiting part 152d. Here, it can be made of a material with a certain flexible deformation ability such as plastic, metal spring sheet, etc. so that it can be deformed in the third direction Z, or a spring can be provided to enable the second matching part 116d to move in the third direction Z, and then be able to cooperate with the second limiting part 152d to achieve relative fixation in the second direction Y. In this embodiment, the second matching part 116d is specifically a buckle. Here, when the first limiting part 151d is matched with the first matching part 114d, the buckle can be buckled into the buckle position along the third direction Z, so that the relative position between the connecting piece 150d and the base 110d in the second direction Y is limited.

It is understandable that, in other embodiments, the second limiting part 152d may be an elastic buckle, the second matching part 116d may be a buckle position, and the second limiting part 152d may be matched in the second matching part 116d, which is not limited in this embodiment.

Here, please refer to FIG. 43 again, a third limiting part 153d is further provided on the outer side of the first limiting part 151d in the second direction Y. Referring to FIG. 45, the third limiting part 153d is located on a side of the first limiting part 151d close to the support part 111d. Specifically, here, the third limiting part 153d is a positioning pin. Please refer to FIG. 44. A third matching part 117d is arranged on the support part 111d. The position and number of the third matching part 117d correspond to the third limiting part 153d in the aforementioned FIG. 45. Here, the third matching part 117d is a slot. When the first limiting part 151d cooperates with the first matching part 114d, the positioning pin can be inserted into the slot, and the positioning pin is limited by the inner wall of the slot on both sides of the third direction Z, thereby limiting the relative position between the connecting piece 150d and the base 110d in the third direction Z. It is understandable that, in other embodiments, the third limiting part 153d may be a slot, the third matching part 117d may be a positioning pin, and the third matching part 117d may be matched into the third limiting part 153d and restricted by the third limiting part 153d so as to be unable to generate displacement in the third direction Z. This embodiment does not limit this.

Here, due to the cooperation between the first limiting part 151d and the first matching part 114d, the cooperation between the second limiting part 152d and the second matching part 116d, and the cooperation between the third limiting part 153d and the third matching part 117d, the connecting piece 150d has no freedom in the first direction X, the second direction Y, and the third direction Z relative to the base 110d, and the relative position between the connecting piece 150d and the base 110d is limited.

It can be understood that, among the cooperation between the first limiting part 151d and the first matching part 114d, the cooperation between the second limiting part 152d and the second matching part 116d, and the cooperation between the third limiting part 153d and the third matching part 117d, when only two of them are provided, the relative position between the base 110d and the connecting piece 150d can be determined to a certain extent. The provision of the third one helps to more effectively and accurately determine the relative position of the two. However, in other embodiments, only two matching parts may be provided to form a corresponding matching relationship, and this embodiment does not limit this.

As mentioned above, please refer to FIGs. 42 and 43, a connecting part 155d is also provided on the connecting piece 150d. Here, two connecting parts 155d are provided on the connecting piece 150d along the first direction X. Exemplarily, the connecting part 155d is a connection hole. Please refer to FIG. 46. After the relative position between the connecting piece 150d and the base 110d is defined, the relative position between the connecting part 155d and the base 110d is also defined. Of course, it is understandable that in other embodiments, other numbers of the connecting parts 155d may be provided, and each connecting part 155d is not limited to being provided along the first direction X.

Please refer to FIG. 38, the cooking container 200d includes a base 220d and a pot body 210d, where the pot body 210d is arranged on the base 220d, and the base 220d may further have a structure such as an electromagnetic heating assembly to achieve heating of the pot body 210d. Here, an adapter 230d is provided on the base 220d, the number and position of the adapter 230d correspond to the connecting part 155d, and the adapter 230d is used to cooperate with the connecting part 155d to achieve the fixation of the relative position between the cooking container 200d and the connecting piece 150d. In this embodiment, a plurality of legs is provided at the bottom of the base 220d, and some of the legs are simultaneously used as the adapter 230d. In other embodiments, all of the legs may also be used as the adapter 230d. Here, please refer to FIG. 46. The connecting piece 150d is provided with two connecting holes as the connecting part 155d, and the two supporting legs correspondingly close to the feeding apparatus 100d are used as the adapter 230d, and the two supporting legs are provided corresponding to the two connecting holes. Here, the connecting hole is a strip hole, see FIG. 48, and the two legs are connected in the two strip holes and abut against the side walls of the two strip holes that are away from each other along the first direction X to achieve positioning. Here, the relative position between the cooking container 200d and the connector 150d is defined by the cooperation between the adapter 230d and the connecting part 155d.

Of course, it is understandable that, in other embodiments, an adapter 230d may be additionally provided on the base 220d, or the adapter 230d may be provided on other assemblies of the cooking container 200d. Furthermore, the adapter 230d may be a connecting hole, and the connecting part 155d may be a protruding structure arranged corresponding to the connecting hole. In addition, in other embodiments, the shapes of the adapter 230d and the connecting part 155d may also be configured to be compatible with each other so that the two cooperate with each other and limit the relative position between the cooking container 200d and the connecting piece 150d.

Here, since the relative position between the connecting piece 150d and the base 110d is determined, the relative position between the connecting piece 150d and the cooking container 200d is determined, and therefore the relative position between the base 110d and the cooking container 200d is also determined, and further the relative position between the material storage container 130d set at a fixed position on the base 110d and the pot body 210d located at a fixed position in the cooking container 200d is also determined. Therefore, after the user disassembles the feeding apparatus 100d and the cooking container 200d and installs them again, the relative position relationship between the feeding apparatus 100d and the cooking container 200d can still be maintained at the preset position relationship, and the feeding apparatus 100d can accurately feed the cooking container 200d to avoid spilling the material.

The present disclosure also provides a feeding method for a cooking device, and the feeding method for the cooking device can adopt the aforementioned feeding apparatus 100d, that is, the aforementioned cooking device 10d can be used to implement the feeding method. Of course, this embodiment does not constitute an undue limitation thereto.

Here, through the aforementioned structure or through other means, the spacing between the base 110d of the feeding apparatus 100d and the pot body 210d of the cooking container 200d in the second direction Y is set to y, and the relative position relationship between the base feeding apparatus 100d and the cooking container 200d is determined.

As mentioned above, please refer to FIGs. 49 and 50. The feeding assembly 140d drives the material storage container 130d to flip by rotating to achieve feeding. Here, the projection of the rotation axis of the feeding assembly 140d (i.e., the rotation axis of the material storage container 130d) on the reference plane is point O, and when the material storage container 130d is turned over by the feeding part 141d and collides with the pot body 210d, the projection of the contact point between the two on the reference plane is point F. An auxiliary line HF is established along the second direction Y, and the line segment HF is perpendicular to the line segment OH. Here, the length of OH is h, which is the distance between point F and point O in the third direction Z. On the line segment HF, a boundary point G of the outer wall of the base 110d close to the cooking container 200d is selected, and the length of the line segment FG is the distance y between the base 110d and the pot body 210d in the second direction Y. Take point A, line segment AO is parallel to line segment FG.

Take the projection of the midpoint of the open mouth side of the pot body 210d on the reference plane as point C, and take a point B, the line segment BC coincides with the projection of the central axis of the pot body 210d on the reference plane, and take a point D on the line segment BC, and then take a point E, so that the line segments EC, FD, and OB are parallel, and the line segment BC is perpendicular to the line segment EC. Here, OG is connected and an auxiliary line IF is established. Line segment IF is parallel to line segment OG, and point I is located on line segment OB.

Here, ∠AOB is the flip angle $\alpha$ of the material storage container 130d. Driven by the feeding assembly 140d, the material storage container 130d flips forward by $\alpha$ and reaches the contact point with the pot body 210d. ∠HFD is equal to LAOB, let ∠IFH be $\alpha$ 1, let angle IEC be $\beta$, and line segment HG is the projection of the distance between the outer wall of the base 110d and the rotation axis of the feeding assembly 140d along the third direction Z, which is a constant $\varepsilon$.

From this we can see that:

$$\alpha = \alpha_1 + \beta = arctan\frac{h}{\varepsilon} + \beta$$

Among them, $\alpha$1 is the supplementary angle of $\alpha$, h is the distance between point F and point O in the third direction Z, $\varepsilon$ is the length of the line segment HG, and $\beta$ can be roughly taken as the angle between the projection of the edge line of the opening side of the material storage container 130d and the tangent line of the edge of the side wall of the material storage container 130d at the contact point on the reference plane.

Through this formula, the flip angle $\alpha$ when the feeding assembly 140d drives the material storage container 130d can be determined. The formula here shows the maximum value of $\alpha$. In actual use, the flip angle will be set to no greater than $\alpha$ to prevent the material storage container 130d from colliding with the pot body 210d. However, the closer the actual value of $\alpha$ is to the above maximum value, the larger the flip angle of the material storage container 130d, and it is less likely for food and/or seasoning to remain in the material storage container 130d.

Of course, in other embodiments, the value of the flip angle $\alpha$ may be determined by other means, such as through actual flip tests or past experience, to determine an angle that enables the material storage container 130d to achieve a larger flip without further colliding with the cookware. Of course, it is more convenient to obtain the flip angle $\alpha$ through the above formula, and it provides a universal formula that is generally applicable to different feeding devices 100d and cooking containers 200d, which has better universal applicability.

The feeding method of the cooking device provided in the present disclosure may adopt the aforementioned feeding apparatus 100d. Here, when the feeding method of the cooking device is used to feed the cooking container 200d, the feeding assembly 140d of the feeding apparatus 100d has different flipping speeds and/or flipping stages, so as to more fully allow the food and/or seasoning to separate from the material storage container 130d and enter the cooking container 200d, and reduce the outward splashing of the food and/or seasoning.

Here, exemplarily, the feeding apparatus 100d has a first stage and a second stage in the feeding process. The absolute angle at which the feeding assembly 140d drives the material storage container 130d to flip in the first stage is $\delta$, and the absolute angle at which the feeding assembly 140d drives the material storage container 130d to flip in the second stage is $\theta$, where $\delta$ is smaller than $\theta$. Here, in some embodiments, $\theta$ may be the aforementioned flip angle $\alpha$. Of course, $\theta$ may also be other values, which is not limited in this embodiment. Here, the absolute angle refers to the absolute flip angle of the material storage container 130d after flipping compared to the absolute flip angle when the material storage container 130d is initially located on the bearing piece 120d. Exemplarily, in some embodiments, $\delta$ is taken as 3/4$\alpha$, and $\theta$ is taken as $\alpha$.

Furthermore, the speed at which the feeding assembly 140d drives the material storage container 130d to flip in the first stage is $W_1$, and the speed at which the feeding assembly 140d drives the material storage container 130d to flip in the second stage is $W_2$, and $W_2$ is greater than $W_1$. Here, the flipping speed in the first stage is slow, and the flipping speed in the second stage is fast, which helps to make the speed of the food and/or seasoning in the material storage container 130d in the second direction Y smaller, and thus its displacement along the second direction Y will be smaller, the parabola of the food and/or seasoning during movement is smaller, and the food and/or seasoning is not easily thrown out of the cooker. At the same time, the faster flipping speed in the second stage also helps to make the food and/or seasoning faster in the third direction Z, thereby reducing the water entry angle of the food and/or seasoning, which helps to reduce splashing caused by waves when falling into the pot body 210d. In some embodiments, in the second stage, when the feeding assembly 140d drives the material storage container 130d to flip to the maximum flip angle $\theta$, it stays for a preset time so that the ingredients and/or seasonings in the material storage container 130d can fall into the cooker more fully.

In some embodiments, the feeding apparatus 100d further has a third stage, in which the feeding assembly 140d drives the material storage container 130d to shake back and forth along the flipping direction. Exemplarily, the absolute angle of the back-and-forth shaking is between $\delta$ and $\theta$, that is, the feeding assembly 140d drives the material storage container 130d to shake back and forth between the two flip angles of $\delta$ and $\theta$. When shaking, with W as the reference speed, the flipping speed when moving toward the cooking container 200d is W, and the flipping speed when moving away from the cooking container 200d is 70% W, that is, the speed when flipping in the tipping direction is faster, so as to better achieve tipping.

Wherein, illustratively, after the shaking is completed, it is possible to stay at the maximum flip angle for a preset time so that the food and/or seasoning in the material storage container 130d can fall into the pot more fully.

In some embodiments, the feeding apparatus 100d further has a fourth stage. In the fourth stage, the feeding assembly 140d drives the material storage container 130d to flip back to the initial position, that is, to return to the position where the flip angle is 0. Exemplarily, in the fourth stage, the feeding assembly 140d drives the material storage container 130d to return to its original position at a turning speed $W_4$. The turning speed $W_4$ is set to be slow to prevent the material storage container 130d from clamping the user or other objects when rotating.

Here, exemplarily, the feeding apparatus 100d has a first mode and a second mode. In the first mode, the feeding apparatus 100d provides solid food and/or seasoning to the cooking container 200d; in the second mode, the feeding apparatus 100d provides liquid food and/or seasoning to the cooking container 200d. The setting of different modes can help to solve the problems of solid and liquid dumping residue and splashing in a targeted manner.

In some embodiments, the turnover speed $W_{11}$ of the first stage in the first mode is greater than the turnover speed $W_{12}$ of the first stage in the second mode. Exemplarily, a reference driving speed W is set, and in the first mode, the flipping speed $W_{11}$ is 50%W. In the second mode, the flip speed $W_{12}$ takes 30%W. Here, the fluidity of the solid is relatively poor, while the fluidity of the liquid is relatively good, and it is easy to flow out of the material storage container 130. Here, different turnover speeds are set for solids and liquids in the first stage, which helps to avoid splashing caused by excessively fast liquid flow and speeds up the process of solids falling out.

In some embodiments, the turnover speed $W_{21}$ of the second stage in the first mode is greater than the turnover speed $W_{22}$ of the second stage in the second mode. Exemplarily, a reference driving speed W is set, and in the first mode, the flipping speed $W_{21}$ takes 100%W. **In** the second mode, the flip speed $W_{22}$ takes 70%W. Here, the solid has less adhesion, and as the material storage container 130 is turned over in the first stage, the solid has basically fallen outward into the pot. Therefore, in order to speed up the speed of feeding out, the turning speed is relatively large in the second stage. However, if the liquid is added at a faster speed in the second stage, the liquid in the material storage container 130d may generate waves when poured and surge outward with the waves. This situation may increase the speed of the liquid in the second direction Y and may also cause the entry angle to increase, causing the liquid to splash outward. Therefore, in the second mode, the flipping speed $W_{22}$ of the second stage needs to be set relatively smaller than the flipping speed $W_{21}$ of the second stage in the first mode.

**In** some embodiments, the feeding apparatus 100d also has a third mode, in which the feeding apparatus 100d provides viscous ingredients and/or seasonings to the cooking container 200d, where viscous ingredients and/or seasonings refer to ingredients and/or seasonings having a viscosity higher than a preset value. Illustratively, in the third mode, the feeding apparatus 100d provides egg liquid to the cooking container 200d. Through this targeted setting, the problem of dumping residue and wall sticking of sticky ingredients such as egg liquid and/or seasonings can be effectively solved.

Here, in the third mode, different from the first mode and the second mode, the flipping speed in the second stage is slower than the flipping speed in the first stage. This is because viscous ingredients and/or seasonings such as egg liquid are highly viscous and are not easy to leave the material storage container 130d. When poured quickly, the egg liquid will adhere to the side wall of the material storage container 130d due to its viscosity. Therefore, in order to ensure that it can more fully leave the material storage container 130d and fall into the pot, a slower flipping speed is adopted in both the second stage and the first stage. Moreover, since the absolute flipping angle is larger in the second stage, the egg liquid is easier to leave the material storage container 130d, so the flipping speed at this time is set to be smaller so that the egg liquid is more in the stage where it is easier to leave the material storage container 130d. Moreover, here, in the third mode, the absolute flip angle of the first stage is set smaller than the absolute flip angle of the first stage in the first mode and the second mode, so that the egg liquid is in the flipping and feeding time longer, so that the egg liquid can be more fully put into the pot.

Furthermore, in the third stage of the third mode, after the shaking is completed, the material storage container 130d is still maintained at the current flip angle for a preset time so that the egg liquid can leave the material storage container 130d more fully.

In the fourth stage of the third mode, the feeding assembly 140d drives the material storage container 130d to return to its original position at a flipping speed $W_{43}$, and the flipping speed $W_{43}$ is smaller than the flipping speed $W_{41}$ of the third stage in the first mode and the flipping speed $W_{42}$ of the third stage in the second mode. Therefore, even if there is residual egg liquid, it can continue to flow outward during this process, so that the egg liquid can flow into the pot more fully.

Application Example 6

In application example 6, a feeding apparatus 100d is provided, which is used to feed a cooking container 200d. The feeding apparatus 100d includes a base 110d and a connecting piece 150d. The connecting piece 150d is provided with a limiting part and a connecting part 155d, and the base 110d is provided with a matching part, which is used to cooperate with the limiting part to determine the relative position relationship between the connecting piece 150d and the base 110d, and the connecting part 155d is used to detachably cooperate with the cooking container 200d to determine the relative position relationship between the connecting piece 150d and the cooking container 200d.

Application Example 7

In application example 7, a feeding apparatus 100d is provided, which is substantially the same as the feeding apparatus 100d provided in application example 6. The difference is that the limiting part specifically includes a first limiting part 151d, a second limiting part 152d and a third limiting part 153d. The matching part includes a first matching part 114d, a second matching part 116d and a third matching part 117d. The first limiting part 151d cooperates with the first matching part 114d to mainly limit the relative position relationship between the connecting piece 150d and the base 110d in the first direction X. The second limiting part 152d cooperates with the second matching part 116d to mainly limit the relative position relationship between the connecting piece 150d and the base 110d in the second direction Y. The third limiting part 153d cooperates with the third matching part 117d to mainly limit the relative position relationship between the connecting piece 150d and the base 110d in the third direction Z.

Application Example 8

In application example 8, a feeding apparatus 100d is provided, which is substantially the same as the feeding apparatus 100d provided in application example seven. The difference is that the first limiting part 151d is a protruding part protruding along the second direction Y, and the first matching part 114d is a recessed part recessed along the second direction Y. In addition, limiting slide rails 154d are arranged on both sides of the protruding part, and limiting lock buckles are arranged on both sides of the recessed part corresponding to the limiting slide rails 154d.

Application Example 9

In application example 9, a feeding apparatus 100d is provided, which is substantially the same as the feeding apparatus 100d provided in application example 7 or 8. The difference is that the second limiting part 152d is a slot arranged along the third direction Z to form a buckle position, and the second matching part 116d is a buckle with elastic deformation along the third direction Z, and the buckle can be buckled in the buckle position.

Application Example 10

In application example 10, a feeding apparatus 100d is provided, which is substantially the same as the feeding apparatus 100d provided in application example 8. The difference is that the third limiting part 153d is a positioning pin protruding from the protruding part along the second direction Y, and the third matching part 117d is a slot. When the protruding part is inserted into the recessed part, the positioning pin is inserted into the slot, and the inner wall of the slot along the third direction Z limits the movement of the positioning pin along the third direction Z.

Application Example 11

In application example 11, a cooking device 10d is provided, which includes the feeding apparatus 100d and the cooking container 200d provided in any one of the aforementioned application examples 6 to 10.

Application Example 12

In application example 12, a feeding method for cooking device is provided, which can adopt the feeding apparatus 100d or cooking device 10d provided in any application example of the aforementioned application examples 6 to 11.

The feeding method of the cooking device has a first mode, a second mode and a third mode, and has a first stage, a second stage, a third stage and a fourth stage. The relevant settings of each mode and stage are shown in Table 1, wherein the reference speed W and the reference angle $\alpha$ can be determined according to actual needs, and the reference angle $\alpha$ can preferably be determined using the formula provided in the aforementioned embodiment.

Table 1

|  | First mode | Second mode | Third mode |
|---|---|---|---|
| First stage turnover speed (base speed: W) | $W_{11}$ (40~60 % W) | $W_{12}$ (20~40%W) | $W_{13}$ (20~40%W) |
| First stage absolute turnover speed (base angle: $\alpha$) | 1/2~3/4 | 1/2~3/4 | 1/7~1/6 |

(continued)

|  | First mode | Second mode | Third mode |
|---|---|---|---|
| Second stage turnover speed (base speed: W) | $W_{21}$ (100%W) | $W_{22}$ (60~80%W) | $W_{23}$ (10%~30% W) |
| Second stage absolute turnover angle (base angel: $\alpha$) | 1 | 1 | 1 |
| residence time when run to the maximum flip angle in the second stage (unit: ms) | 0~500 | 1000~3000 | 9000~11000 |
| flip angle range of jitter in the third stage (base angle: $\alpha$) | 3/4~1 | 3/4~1 | 3/4~1 |
| jitter speed of the third stage (base speed: W) | $W_{31}$ ( 60~80 % W) | $W_{32}$ (60~80%W) | $W_{33}$ (60~80%W) |
| residence time when run to the maximum flip angle in the third stage (unit: ms) | 0~500 | 0~500 | 3000~5000 |
| turnover speed of reset in the fourth stage (base speed: W) | $W_{41}$ ( 60~70 % W) | $W_{42}$ (60~70%W) | $W_{43}$ (20~30%W) |

Application Example 13

In application example 13, a feeding method for a cooking device is provided, which differs from application example 12 in that specific parameters are set, as shown in Table 2.

Table 2

|  | First mode | Second mode | Third mode |
|---|---|---|---|
| First stage turnover speed (base speed: W) | $W_{11}$ (50%W) | $W_{12}$ (30%W) | $W_{13}$ (30%W) |
| First stage absolute turnover speed (base angle: $\alpha$) | 3/4 | 3/4 | 1/6 |
| Second stage turnover speed (base speed: W) | $W_{21}$ (100%W) | $W_{22}$ (70%W) | $W_{23}$ (20%W) |
| Second stage absolute turnover angle ( base angle: $\alpha$) | 1 | 1 | 1 |
| residence time when run to the maximum flip angle in the second stage (unit: ms) | 0 | 2000 | 10000 |
| flip angle range of jitter in the third phase (base angle: $\alpha$) | 3/4~1 | 3/4~1 | 3/4~1 |
| jitter speed of the third stage (base speed: W) | $W_{31}$ (70%W) | $W_{32}$ (70%W) | $W_{33}$ (70%W) |
| residence time when jitter to the maximum flip angle in the third stage (unit: ms) | 0 | 0 | 4000 |
| turnover speed of reset in the fourth stage (base speed: W) | $W_{41}$ (70%W) | $W_{42}$ (70%W) | $W_{43}$ (30%W) |

Here, according to the test, the residual percentage during specific use is shown in Table 3.

Table 3

| ingredient | ingredient weigh in grams (g) | Residual percentage | ingredient | Ingredient weigh in grams | Residual percentage |
|---|---|---|---|---|---|
| spring onion in section | 15 | 0.15% | lettuce | 255 | 2.81% |
| chopped green onion | 20 | 0.08% | egg juice | 271 | 0.61% |
| potato chunk | 403 | 0.00% | milk | 380 | 0.04% |
| eggplant | 338 | 0.00% | shredded meat | 272 | 0.61% |
| potato shred | 264 | 1.12% | minced meat | 675 | 0.19% |
| long bean | 260 | 0.00% | rib | 753 | 0.00% |

(continued)

| ingredient | ingredient weigh in grams (g) | Residual percentage | ingredient | Ingredient weigh in grams | Residual percentage |
|---|---|---|---|---|---|
| pterocladia tenuis | 171 | 0.43% | clam meat | 205 | 0.00% |
| rice with egg mixture | 200 | 30.01% | | | |

Egg liquid and egg liquid rice adopt the third mode, milk adopts the second mode, and the remaining ingredients adopt the first mode.

Application Example 14

In Application Example 14, a feeding method for a cooking device is provided, which differs from Application Example 12 in that specific parameters are set, as shown in Table 4.

Table 4

| | First mode | Second mode | Third mode |
|---|---|---|---|
| First stage turnover speed (base speed: W) | $W_{11}$ (40%W) | $W_{12}$ (20%W) | $W_{13}$ (20%W) |
| First stage absolute turnover speed (base angle: $\alpha$) | 1/2 | 1/2 | 1/7 |
| Second stage turnover speed (base speed: W) | $W_{21}$ (100%W) | $W_{22}$ (60%W) | $W_{23}$ (10%W) |
| Second stage absolute turnover angle ( base angle: $\alpha$) | 1 | 1 | 1 |
| residence time when run to the maximum flip angle in the second stage (unit: ms) | 0 | 1000 | 9000 |
| flip angle range of jitter in the third phase (base angle: $\alpha$) | 3/4~1 | 3/4~1 | 3/4~1 |
| jitter speed of the third stage (base speed: W) | $W_{31}$ (60%W) | $W_{32}$ (60%W) | $W_{33}$ (60%W) |
| residence time when jitter to the maximum flip angle in the third stage (unit: ms) | 0 | 0 | 3000 |
| turnover speed of reset in the fourth stage (base speed: W) | $W_{41}$ (60%W) | $W_{42}$ (60%W) | $W_{43}$ (20%W) |

Application Example 15

In application example 15, a feeding apparatus 100d is provided, which is used to implement the feeding method of the cooking apparatus involved in the aforementioned application examples 6 to 14 and/or the embodiments.

Here, normally the total weight of the material storage container 130d and the food therein is 942g, and the lever arm length of the feeding assembly 140d is 76.3mm. It can be seen that the torque is approximately 0.72Nm. In order to provide sufficient force to drive the feeding assembly 140d to move, it is necessary to set an amplification factor. Here, 2.5 is used as the amplification factor. It can be seen that the required output torque is 1.8Nm. Here, the feeding speed (i.e., the reference turning speed W) is preferably about 138°/s, which is about 2.4r/s. Therefore, in this embodiment, a motor with the following parameters is selected as the driving piece of the feeding assembly, with a rotation speed of 4000 rpm, a reduction ratio of 170: 1, and an output torque of 0.0123 Nm. Through this setting, better feeding effect can be obtained.

In order to solve the technical problem in the prior art that the vegetable box of the feeding system is easy to fall off, an embodiment of the present disclosure provides a feeding apparatus for a cooking device. The feeding apparatus comprises a device body. The feeding device also includes a feeding piece, which is flippably arranged on the device body. The feeding apparatus also includes a movable magnetic assembly, which can be movably arranged on the feeding piece. The feeding apparatus also includes a material holding piece, which is used to hold materials and has a target magnetic assembly. The target magnetic assembly is configured to be able to be adsorbed on the movable magnetic assembly, so that the material holding piece is adsorbed on the material feeding piece and can be turned over with the material feeding piece to put the material in the material holding piece into the cooking device. This is explained in detail below.

Please refer to FIG. 51, which is a schematic cross-sectional structure diagram of an embodiment of a feeding device applied to a cooking device of the present disclosure. In one embodiment, the cooking system includes a cooking apparatus and a feeding apparatus 10e applied to the cooking apparatus. The cooking apparatus is a main assembly for performing cooking operations in a cooking system, for example, the cooking apparatus may be a frying pan or the like. The feeding apparatus 10e can automatically feed the materials into the cooking apparatus, and then the cooking apparatus cooks the materials. The cooking methods of the cooking apparatus include but are not limited to stir-frying, boiling, steaming, frying, and deep-frying. The working principle of the cooking apparatus is within the scope of understanding of those skilled in the art and will not be described in detail here. The materials fed into the cooking apparatus by the feeding apparatus 10e can be ingredients to be cooked or auxiliary materials required for cooking, etc. The auxiliary materials can be seasonings such as salt, monosodium glutamate, soy sauce, etc.

The feeding apparatus 10e of the embodiment of the present disclosure is described below.

Please refer to FIG. 52, which is a schematic structural diagram of an embodiment of a material holding piece of the present disclosure.

In one embodiment, the feeding apparatus 10e includes an apparatus body 11e. The apparatus body 11e is the basic carrier of the feeding apparatus 10e, and the apparatus body 11e plays a role in carrying and protecting other assemblies of the feeding apparatus 10e. The feeding apparatus 10e further includes a feeding piece 20e, and the feeding piece 20e is flippably arranged on the apparatus body 11e. The feeding apparatus 10e further includes a material holding piece 12e, and the material holding piece 12e is used for holding materials. The material holding piece 12e can be turned over along with the feeding piece 20e so as to put the material in the material holding piece 12e into the cooking apparatus. Furthermore, the apparatus body 11e may be provided with a tray, and the tray is used to place the material holding piece 12e.

In one embodiment, the material holding piece 12e has a target magnetic assembly 121e. The feeding apparatus 10e further includes a movable magnetic assembly 30e, and the movable magnetic assembly 30e is movably disposed on the feeding piece 20e. The target magnetic assembly 121e is configured to be able to be adsorbed on the movable magnetic assembly 30e, so that the material holding piece 12e is adsorbed on the material feeding piece 20e, and the material holding piece 12e can be turned over with the material feeding piece 20e to put the material in the material holding piece 12e into the cooking device.

In the above manner, when the material holding piece 12e is placed on the material feeding piece 20e, the target magnetic assembly 121e and the movable magnetic assembly 30e are attracted to each other under the action of magnetic force. The movable magnetic assembly 30e can adaptively adjust its own position and posture under the action of magnetic force to adsorb the material container 12e. Specifically, the movable magnetic assembly 30e adaptively adjusts its own position and posture. Even if the movable magnetic assembly 30e has processing errors and assembly errors, it can still reliably adsorb the material holding container 12e, thereby reducing the risk of the material container 12e falling off.

In one embodiment, the feeding apparatus 10e further includes a fixed magnetic assembly 40e. The fixed magnetic assembly 40e is fixed to the feeding piece 20e, and is used to cooperate with the movable magnetic assembly 30e to adsorb the target magnetic assembly 121e of the material holding piece 12e. The fixed magnetic assembly 40e cooperates with the movable magnetic assembly 30e to adsorb the material holding part 12e, which can increase the adsorption force between the feeding part 20e and the material holding part 12e, and further reduce the risk of the material holding part 12e falling off. The fixed magnetic assembly 40e also serves to fix the material holding piece 12e. When the fixed magnetic assembly 40e cooperates with the target magnetic assembly 121e for adsorption, since the position of the fixed magnetic assembly 40e itself on the feeding piece 20e is fixed, the position of the material holding piece 12e on the feeding piece 20e can be fixed, so that the material holding piece 12e can be stably and reliably adsorbed on the feeding piece 20e.

Please refer to FIG. 53 as well. For the case where at least two groups of magnetic assemblies 60e are set for the feeding piece 20e to adsorb the material holding piece 12e, if each group of magnetic assemblies 60e is fixed to the feeding piece 20e, due to the inevitable processing errors and assembly errors of the magnetic assemblies 60e, there will be more or less problems with flatness, height difference, cylindricity, etc. between different magnetic assemblies 60e, and it cannot be guaranteed that the surfaces of different magnetic assemblies 60e used to adsorb the material holding piece 12e are coplanar. For example, the surfaces of the left and right groups of magnetic assemblies 60e used to adsorb the material holding piece 12e in Figure 53 are not coplanar. This means that only part of the magnetic assembly 60e can be adsorbed with the material holding part 12e, while the remaining magnetic assembly 60e cannot be adsorbed with the material holding part 12e. The magnetic assembly 60e on the left in FIG. 53 is adsorbed with the material holding part 12e, while the magnetic assembly 60e on the right cannot be adsorbed with the material holding part 12e, resulting in the adsorption force between the feeding part 20e and the material holding part 12e being much smaller than the theoretical value, and the material holding part 12e has a higher risk of falling off.

In view of this, in this embodiment, the material holding piece 12e is fixed to the feeding piece 20e by means of a fixed magnetic assembly 40e, and at the same time, the movable magnetic assembly 30e is movably arranged relative to the material feeding piece 20e. The movable magnetic assembly 30e can adaptively adjust its own posture under the action of magnetic force. Even if there are processing errors and assembly errors, the movable magnetic assembly 30e can be adjusted to the surface used to adsorb the material holding piece 12e (i.e., the first surface 311e described below) and the surface used to adsorb the material holding piece 12e (i.e., the second surface 411e described below) of the fixed magnetic assembly 40e are coplanar. The fixed magnetic assembly 40e and the movable magnetic assembly 30e cooperate with each other and can both reliably adsorb the material holding piece 12e, thereby reducing the risk of the material holding piece 12e falling off. In other words, this embodiment has relatively low requirements on the processing accuracy and assembly accuracy of the fixed magnetic assembly 40e and the movable magnetic assembly 30e, thereby reducing the design cost and production cost to a certain extent.

It should be noted that the number of the movable magnetic assembly 30e is at least one group, and the number of the fixed magnetic assembly 40e is one group. In other words, the embodiment of the present disclosure allows the feeding piece 20e to be provided with one or two or more groups of active magnetic assemblies 30e, and each movable magnetic assembly 30e can adaptively adjust its own posture under the action of magnetic force to adsorb the material holding piece 12e.

Please refer to FIGs. 54 and 55 together. FIG. 54 is a structural diagram of the feeding device A area shown in FIGs. 51 and 55 is a structural diagram of an embodiment of the feeding piece of the present disclosure.

In one embodiment, the feeding apparatus 10e is defined with a set direction (as indicated by arrow Z in FIG. 51, and the same below). When the material holding piece 12e is placed on the feeding apparatus 10e, the apparatus body 11e and the material holding piece 12e are stacked along a set direction. The movable magnetic assembly 30e includes a movable magnetic part 31e, and the target magnetic part 121e is configured to be able to be attracted to the movable magnetic part 31e. The movable magnetic assembly 30e also includes a connecting piece 32e, and the movable magnetic assembly 31e is movably connected to the feeding piece 20e via the connecting piece 32e. The movable magnetic part 31e can move along a set direction relative to the feeding piece 20e, and/or the movable magnetic part 31e can swing along a direction perpendicular to the set direction relative to the feeding piece 20e, so that the movable magnetic part 31e can adaptively adjust its own posture under the action of magnetic force to adsorb the target magnetic assembly 121e of the feeding piece 12e.

Specifically, the feeding piece 20e has a first mounting part 21e. The movable magnetic assembly 31e is movably connected to the first mounting part 21e via a connecting piece 32e. The first mounting part 21e defines a first mounting hole 211e, and the connecting piece 32e passes through the first mounting hole 211e, with a gap between the connecting piece 32e and the hole wall of the first mounting hole 211e. Furthermore, the feeding piece 20e also has a first mounting groove 23e, the first mounting part 21e is located at the bottom of the first mounting groove 23e, and the movable magnetic assembly 31e is movably embedded in the first mounting groove 23e.

The connecting piece 32e includes a connecting part 321e and a limiting part 322e. The connecting part 321e is connected to the movable magnetic assembly 31e, and the connecting part 321e passes through the first mounting hole 211e. The movable magnetic assembly 31e and the limiting part 322e are respectively located on both sides of the first mounting part 21e in the set direction, and the limiting part 322e is used to limit the connecting piece 32e from being separated from the first mounting hole 211e along the set direction.

The distance D1 between the movable magnetic assembly 31e and the limiting part 322e is greater than the length D2 of the first mounting part 21e in the setting direction, as shown in FIG. 54. The movable magnetic part 31e and the limiting part 322e are spaced apart from each other in the set direction, and the length of the gap between the movable magnetic part 31e and the limiting part 322e in the set direction is greater than the length of the first mounting part 21e in the set direction, which means that this embodiment allows the movable magnetic part 31e to move relative to the feeding piece 20e along the set direction. Furthermore, there is a gap between the connecting piece 32e and the hole wall of the first mounting hole 211e, which means that this embodiment also allows the movable magnetic assembly 31e to swing relative to the feeding piece 20e in a direction perpendicular to the set direction. In this embodiment, the movable magnetic assembly 31e moves along a set direction and swings in a direction perpendicular to the set direction, so that the movable magnetic assembly 31e can adaptively adjust its own posture under the action of magnetic force to adsorb the material holding piece 12e.

The limiting part 322e and the first mounting hole 211e both have a cross section perpendicular to the set direction. The cross-sectional area of the limiting part 322e is greater than the cross-sectional area of the first mounting hole 211e. In other words, when the limiting part 322e moves to the first mounting part 21e along the set direction with the movable magnetic assembly 31e, the limiting part 322e abuts against the first mounting part 21e around the first mounting hole 211e to form a limit, which can limit the connecting piece 32e from detaching from the first mounting hole 211e along the set direction.

Furthermore, the connecting piece 32e also includes an adjusting sleeve 323e. The adjusting sleeve 323e is sleeved on the outer periphery of the connecting part 321e, and the adjusting sleeve 323e is sandwiched between the movable magnetic assembly 31e and the limiting part 322e. There is a gap between the outer wall of the adjusting sleeve 323e and the hole wall of the first mounting hole 211e, and the length of the adjusting sleeve 323e in the set direction is greater than the length of the first mounting part 21e in the set direction, so that the movable magnetic assembly 31e can move along the set direction and swing in a direction perpendicular to the set direction.

In the above manner, in this embodiment, the distance between the movable magnetic assembly 31e and the limiting part 322e is controlled by adjusting the sleeve 323e. According to the length of the first mounting part 21e in the set direction, the adjusting sleeve 323e is reasonably selected to control a reasonable distance between the movable magnetic part 31e and the limiting part 322e, so that the movable magnetic part 31e has sufficient movement in the set direction, thereby providing sufficient activity for the movable magnetic part 31e to adjust its own posture, thereby ensuring that the movable magnetic part 31e can reliably adsorb the material container 12e.

It should be noted that the connecting piece 32e can be a fastening element such as a screw. The connecting part 321e may be a screw of the connecting piece 32e, and the limiting part 322e may be a nut of the connecting piece 32e. The adjusting sleeve 323e is a hollow structure, and the connecting piece 32e passes through the adjusting sleeve 323e and is embedded in the movable magnetic assembly 31e. Of course, in other embodiments of the present disclosure, the design of the adjusting sleeve 323e can be omitted, and the depth of the connecting piece 32e embedded in the movable magnetic part 31e can be adjusted to control the distance between the movable magnetic part 31e and the limiting part 322e, which is not limited here.

Furthermore, the movable magnetic assembly 30e also includes an elastic supporting piece 33e. The elastic supporting piece 33e is arranged between the movable magnetic assembly 31e and the feeding piece 20e. Specifically, the elastic supporting piece 33e is sandwiched between the movable magnetic assembly 31e and the first mounting part 21e. The elastic supporting piece 33e is used to provide elastic support to the movable magnetic assembly 31e. The elastic supporting piece 33e is in a compressed state, and the elastic supporting piece 33e can support the movable magnetic assembly 31e in response to its own elastic restoring force, so that the movable magnetic assembly 31e can reliably adsorb the material holding piece 12e. Furthermore, the elastic supporting piece 33e is also used to seal the gap between the movable magnetic assembly 31e and the feeding piece 20e.

Optionally, the elastic supporting piece 33e may be an assembly having elastic deformation capability and sealing performance, such as an elastic sealing ring, which is not limited here.

Please also refer to FIG. 56, which is a schematic structural diagram of the feeding device B area shown in FIG. 51.

In one embodiment, the feeding piece 20e further has a second mounting part 22e. The fixed magnet assembly 40e includes a fixed magnet assembly 41e and a fastener 42e. The target magnetic assembly 121e is configured to be able to be attracted to the fixed magnetic assembly 41e. The fixed magnetic assembly 41e is fixed to the second mounting part 22e by a fastener 42e. Furthermore, the feeding piece 20e also has a second mounting groove 24e, the second mounting part 22e is located at the bottom of the second mounting groove 24e, and the fixed magnetic assembly 41e is fixed in the second mounting groove 24e. The second mounting part 22e defines a second mounting hole 221e, and the fastener 42e locks the fixed magnetic assembly 41e to the second mounting part 22e through the second mounting hole 221e.

In one embodiment, the movable magnetic assembly 31e has a first surface 311e facing away from the first mounting part 21e, and the fixed magnetic assembly 41e has a second surface 411e facing away from the second mounting part 22e. When the material holding piece 12e is not adsorbed to the feeding piece 20e, the first surface 311e is higher than the second surface 411e, so that the movable magnetic assembly 31e can be adsorbed to the target magnetic assembly 121e of the material holding piece 12e before the fixed magnetic assembly 41e.

When the material holding piece 12e is not adsorbed to the material feeding piece 20e, by reasonably selecting the elastic supporting piece 33e, the elastic supporting piece 33e can lift the movable magnetic assembly 31e, so that the first surface 311e of the movable magnetic assembly 31e is higher than the second surface 411e of the fixed magnetic assembly 41e, which means that the movable magnetic assembly 31e can be adsorbed to the material holding piece 12e before the fixed magnetic assembly 41e. In the process of placing the material holding piece 12e on the material feeding piece 20e, the target magnetic assembly 121e on the material holding piece 12e is first adsorbed on the movable magnetic assembly 31e, and the material holding piece 12e at least presses down the movable magnetic assembly 31e under the action of its own gravity until the target magnetic assembly 121e on the material holding piece 12e is adsorbed on the fixed magnetic assembly 41e. At this point, the material holding piece 12e is reliably adsorbed on the material feeding piece 20e, and the first surface 311e and the second surface 411e are arranged co-planarly.

When the first surface 311e of the movable magnetic part 31e is lower than the second surface 411e of the fixed magnetic assembly 41e, the fixed magnetic assembly 41e is adsorbed to the material container 12e before the movable magnetic part 31e. At this time, the active space provided to the movable magnetic part 31e is small, which is not conducive to the movable magnetic part 31e adjusting its own posture, and may easily cause the movable magnetic part 31e to be unable to reliably adsorb the material container 12e. Different from this, in this embodiment, when the material holding piece 12e is not adsorbed to the feeding piece 20e, the first surface 311e is higher than the second surface 411e, so that the movable magnetic assembly 31e can be adsorbed to the material holding piece 12e before the fixed magnetic assembly 41e, and sufficient space for the movable magnetic assembly 31e to move is provided, which is conducive to the movable magnetic assembly 31e to adjust its own position, thereby ensuring that both the fixed magnetic assembly 41e and the movable magnetic assembly 31e can reliably adsorb the material holding piece 12e.

In one embodiment, the first mounting part 21e has a third surface 212e facing the movable magnetic assembly 31e, and the second mounting part 22e has a fourth surface 222e facing the fixed magnetic assembly 41e. The third surface 212e is not higher than the fourth surface 222e, so that the target magnetic assembly 121e can be attracted to the movable magnetic assembly 31e and the fixed magnetic assembly 41e at the same time.

In this embodiment, the third surface 212e of the first mounting part 21e is lower than the fourth surface 222e of the second mounting part 22e, or the third surface 212e of the first mounting part 21e is flush with the fourth surface 222e of the second mounting part 22e, so that after the material holding piece 12e presses down the movable magnetic assembly 31e, the target magnetic assembly 121e on the material holding piece 12e can be adsorbed on the fixed magnetic assembly 41e, to ensure that both the fixed magnetic assembly 41e and the movable magnetic assembly 31e can reliably adsorb the material holding piece 12e. If the third surface 212e of the first mounting part 21e is higher than the fourth surface 222e of the second mounting part 22e, even if the material holding piece 12e presses the movable magnetic assembly 31e to the maximum extent, the target magnetic assembly 121e on the material holding piece 12e still cannot be adsorbed by the fixed magnetic assembly 41e.

In one embodiment, a first protrusion 231e is protruded from a side wall of the first mounting groove 23e. Specifically, there may be a plurality of first protrusions 231e, and the first protrusions 231e are sequentially spaced apart along the circumference of the first mounting groove 23e. The first protrusion 231e is used to guide the movable magnetic assembly 31e to be embedded in the first installation groove 23e, and the first protrusion 231e can limit the position of the movable magnetic assembly 31e in the first installation groove 23e to a certain extent. Similarly, a second protrusion 241e is protruded from the side wall of the second installation groove 24e. Specifically, there may be a plurality of second protrusions 241e, and the second protrusions 241e are sequentially spaced apart along the circumference of the second mounting groove 24e. The second protrusion 241e is used to guide the fixed magnetic assembly 41e to be embedded in the second installation groove 24e, and the second protrusion 241e can limit the position of the fixed magnetic assembly 41e in the second installation groove 24e to a certain extent.

The height of the first protrusion 231e is smaller than the height of the second protrusion 241e. In other words, the height of the first protrusion 231e protruding relative to the side wall of the first installation groove 23e is smaller than the height of the second protrusion 241e protruding relative to the side wall of the second installation groove 24e. In this way, in this embodiment, after the movable magnetic part 31e is embedded in the first mounting groove 23e, there is a large distance between the first protrusion 231e and the movable magnetic part 31e, so as to provide sufficient activity space for the movable magnetic part 31e to adjust its own position in the first mounting groove 23e, thereby ensuring that the movable magnetic part 31e can reliably adsorb the material container 12e.

Please refer to FIGs. 57 and 58 together. FIG. 57 is a structural diagram of an embodiment of a movable magnetic assembly of the present disclosure, and FIG. 58 is a structural diagram of an embodiment of a fixed magnetic assembly of the present disclosure.

In one embodiment, one of the first mounting part 21e and the movable magnetic assembly 31e is provided with a first anti-rotation column 511e, and the other is provided with a first anti-rotation hole 512e. The first anti-rotation column 511e can be embedded in the first anti-rotation hole 512e to cooperate with the first anti-rotation hole 512e to limit the rotation of the movable magnetic assembly 31e. The figure exemplarily shows that the first mounting part 21e is provided with a first anti-rotation column 511e, and the movable magnetic assembly 31e is provided with a first anti-rotation hole 512e.

Similarly, one of the second mounting part 22e and the fixed magnetic assembly 41e is provided with a second anti-rotation column 521e, and the other is provided with a second anti-rotation hole 522e, and the second anti-rotation column 521e can be embedded in the second anti-rotation hole 522e to cooperate with the second anti-rotation hole 522e to limit the rotation of the fixed magnetic assembly 41e. The figure exemplarily shows that the second mounting part 22e is protrudingly provided with a second anti-rotation column 521e, and the fixed magnetic assembly 41e is provided with a second anti-rotation hole 522e.

In one embodiment, the movable magnetic assembly 31e may be a magnetic assembly such as an electromagnet. The first mounting part 21e defines a first wire passing hole 213e. The movable magnetic assembly 31e has a first wire 312e. The first wire 312e passes through the first wire passing hole 213e. Similarly, the fixed magnetic assembly 41e can also be a magnetic assembly such as an electromagnet. The second mounting part 22e defines a second wire passing hole 223e. The fixed magnetic assembly 41e has a second wire 412e. The second wire 412e passes through the second wire passing hole 223e.

In one embodiment, the fixed magnetic assembly 40e further includes a sealing piece 43e. The sealing piece 43e is disposed between the fixed magnetic assembly 41e and the feeding piece 20e, and the sealing piece 43e is used to seal the gap between the fixed magnetic assembly 41e and the feeding piece 20e. When the fixed magnetic assembly 41e is fixed to the second mounting part 22e of the feeding piece 20e by the fastener 42e, the sealing piece 43e is clamped between the fixed magnetic assembly 41e and the second mounting part 22e, so that the sealing piece 43e seals the gap between the fixed magnetic assembly 41e and the feeding piece 20e.

Optionally, the sealing piece 43e may be an elastic sealing ring, etc., which is not limited here.

In one embodiment, the present embodiment is different from the above-mentioned embodiment in that the feeding apparatus 10e of the present embodiment includes a set of fixed magnetic assemblies 40e and at least two sets of movable magnetic assemblies 30e. The fixed magnetic assembly 40e and the at least two sets of movable magnetic assemblies 30e are distributed on the feeding piece 20e at intervals. The fixed magnetic assembly 41e of the fixed magnetic assembly 40e is fixed to the feeding piece 20e, and plays a positioning role, so that the material holding piece 12e can be stably adsorbed on the feeding piece 20e. Furthermore, the movable magnetic part 31e of each movable magnetic assembly 30e can adaptively adjust its own posture under the action of magnetic force to adsorb the material holding part 12e. Even if there are processing errors and assembly errors between the fixed magnetic assembly 40e and the movable magnetic assembly 30e, the material holding part 12e can still be reliably adsorbed, thereby reducing the risk of the material holding part 12e falling off.

It should be noted that the fixed magnetic assembly 40e and the movable magnetic assembly 30e of this embodiment have been described in detail in the above embodiments and will not be repeated here.

The technical solution provided in the embodiment of the present disclosure is described below in conjunction with specific application scenarios.

Application scenario 5:

The feeding apparatus 10e includes an apparatus body 11e. The feeding apparatus 10e further includes a feeding piece 20e, and the feeding piece 20e is flippably arranged on the apparatus body 11e. The feeding apparatus 10e further includes a material holding piece 12e, and the material holding piece 12e is used for holding materials. The material holding piece 12e can be turned over along with the material throwing piece 20e so as to put the material in the material holding piece 12e into the cooking device. The apparatus body 11e is provided with a tray, and the tray is used to place the material holding piece 12e.

The material holding piece 12e has a target magnetic assembly 121e. The feeding apparatus 10e further includes a set of movable magnetic assemblies 30e, and the movable magnetic assemblies 30e are movably arranged on the feeding piece 20e. The feeding apparatus 10e further includes a set of fixed magnetic assemblies 40e. The fixed magnetic assembly 40e is fixed to the feeding piece 20e, and is used to cooperate with the movable magnetic assembly 30e to adsorb the target magnetic assembly 121e of the material holding piece 12e. The material holding piece 12e is fixed to the material feeding piece 20e by a fixed magnetic assembly 40e, and the movable magnetic assembly 30e is movably arranged relative to the material feeding piece 20e. The movable magnetic assembly 30e can adaptively adjust its own posture under the action of magnetic force. Even if there are processing errors and assembly errors, the movable magnetic assembly 30e can be adjusted to the surface (i.e., the first surface 311e) used to adsorb the material holding piece 12e and the surface (i.e., the second surface 411e) used to adsorb the material holding piece 12e of the fixed magnetic assembly 40e are coplanar. The fixed magnetic assembly 40e and the movable magnetic assembly 30e cooperate with each other and can reliably adsorb the material holding piece 12e, thereby reducing the risk of the material holding piece 12e falling off. Furthermore, the fixed magnetic assembly 40e and the movable magnetic assembly 30e have lower requirements on processing accuracy and assembly accuracy, which reduces the design cost and production cost to a certain extent.

The movable magnetic assembly 30e includes a movable magnetic assembly 31e and a connecting piece 32e. The movable magnetic assembly 31e is movably connected to the feeding piece 20e via the connecting piece 32e. The movable magnetic assembly 30e further includes an elastic supporting piece 33e. The elastic supporting piece 33e is arranged between the movable magnetic assembly 31e and the feeding piece 20e. The fixed magnetic assembly 40e includes a fixed magnetic assembly 41e and a fastener 42e, and the fixed magnetic assembly 41e is fixed to the feeding piece 20e through the fastener 42e. When the material holding piece 12e is not adsorbed to the material feeding piece 20e, by reasonably selecting the elastic supporting piece 33e, the elastic supporting piece 33e can lift the movable magnetic assembly 31e, so that the first surface 311e of the movable magnetic assembly 31e is higher than the second surface 411e of the fixed magnetic assembly 41e, which means that the movable magnetic assembly 31e can be adsorbed to the material holding piece 12e before the fixed magnetic assembly 41e. In the process of placing the material holding piece 12e on the material feeding piece 20e, the target magnetic assembly 121e on the material holding piece 12e is first adsorbed on the movable magnetic assembly 31e, and the material holding piece 12e at least presses down the movable magnetic assembly 31e under the action of its own gravity until the target magnetic assembly 121e on the material holding piece 12e is adsorbed on the fixed magnetic assembly 41e. At this point, the material holding piece 12e is reliably adsorbed on the material feeding piece 20e, and the first surface 311e and the second surface 411e are arranged co-planarly.

Application scenario 6:

The feeding apparatus 10e includes an apparatus body 11e. The feeding apparatus 10e further includes a feeding piece 20e, and the feeding piece 20e is flippably arranged on the apparatus body 11e. The feeding apparatus 10e further includes a material holding piece 12e, and the material holding piece 12e is used for holding materials. The material holding piece 12e can be turned over along with the material feeding piece 20e so as to put the material in the material holding piece 12e into the cooking device. The apparatus body 11e is provided with a tray, and the tray is used to place the material holding piece 12e.

The material holding piece 12e has a target magnetic assembly 121e. The feeding apparatus 10e further comprises two sets of movable magnetic assemblies 30e, and each movable magnetic assembly 30e can be movably disposed on the feeding piece 20e. The feeding apparatus 10e further includes a set of fixed magnetic assemblies 40e. The fixed magnetic assembly 40e is fixed to the feeding piece 20e, and is used to cooperate with the movable magnetic assembly 30e to adsorb the target magnetic assembly 121e of the material holding piece 12e. The material holding piece 12e is fixed to the material feeding piece 20e by a fixed magnetic assembly 40e, and at the same time, each movable magnetic assembly 30e is movably arranged relative to the material feeding piece 20e. Each movable magnetic assembly 30e can adaptively adjust its own posture under the action of magnetic force. Even if there are processing errors and assembly errors, the movable magnetic assembly 30e can be adjusted to the surface (i.e., the first surface 311e) used to adsorb the material holding piece 12e and the surface (i.e., the second surface 411e) used to adsorb the material holding piece 12e of the fixed magnetic assembly 40e are coplanar. The fixed magnetic assembly 40e and the movable magnetic assembly 30e cooperate with each other and can reliably adsorb the material holding piece 12e, thereby reducing the risk of the material holding piece 12e falling off. Furthermore, the fixed magnetic assembly 40e and the movable magnetic assembly 30e have lower requirements on processing accuracy and assembly accuracy, which reduces the design cost and production cost to a certain extent.

Various embodiments of the present disclosure have been described above, and the above description is exemplary, not exhaustive, and is not limited to the disclosed embodiments. Many modifications and variations will be apparent to those of ordinary skill in the art without departing from the scope and spirit of the described embodiments. The terms used in this document are selected to best explain the principles of the embodiments, practical applications or technical improvements in the marketplace, or to enable other ordinary technicians in this technical field to understand the embodiments disclosed herein. The scope of the present disclosure is defined by the appended claims.

**Claims**

1. A cooking device, comprising a feeding apparatus, wherein the feeding apparatus comprises:

   a seasoning box assembly (1a), wherein the seasoning box assembly (1a) comprises a frame (11a) and at least one seasoning box (12a) arranged in sequence on the frame (11a) along an X-axis direction; a top of the seasoning box (12a) is higher than a top of the frame (11a);
   a feeding box assembly (2a), wherein the feeding box assembly (2a) comprises a housing (21a) mounted on the frame (11a), at least one feeding box (22a) located on the top of the housing (21a), and a motion apparatus located in an inner cavity of the housing (21a) and constructed to drive the feeding box (22a) to move along the X-axis direction; the motion apparatus comprises a motion mechanism (23a) controlled by a driving mechanism (24a); and projections of the motion mechanism (23a) and the seasoning box (12a) on a vertical plane parallel to the X-axis respectively partially overlap with the driving mechanism (24a).

2. The cooking device according to claim 1, wherein the housing (21a) comprises an avoidance area (211a) corresponding to the seasoning box (12a), and an extension area (212a) matched with the top of the frame (11a) and extending downward relative to the avoidance area (211a);
   the seasoning box (12a) extends into the avoidance area (211a), the motion mechanism (23a) is located at a position in the inner cavity of the housing (21a) corresponding to the avoidance area (211a), and the driving mechanism (24a) is arranged at a position in the inner cavity of the housing (21a) corresponding to the extension area (212a).

3. The cooking device according to claim 2, wherein the cooking device further comprises a pot body assembly, and the pot body assembly is arranged on a side of the feeding apparatus; in a Y-axis direction perpendicular to the X-axis, the extension area (212a) is located on a side close to the pot body assembly relative to the avoidance area (211a).

4. The cooking device according to claim 3, wherein a central axis a of the motion mechanism (23a) in a vertical direction, a central axis b of the seasoning box (12a) in the vertical direction, a central axis c of the feeding box (22a) in the vertical direction and a central axis d of the driving mechanism (24a) in the vertical direction are arranged in sequence in the Y-axis direction.

5. The cooking device according to claim 4, wherein the feeding box assembly (2a) further comprises a feeding apparatus (26a), the feeding apparatus (26a) is arranged in the housing (21a) and is configured to drive a corresponding feeding box (22a) to flip toward a side of the pot body assembly, to feed materials into the pot body assembly;
   a rotation axis of the feeding apparatus (26a) is configured to extend in the X-axis direction and is located on a side close to the pot body assembly relative to the central axis d of the feeding box (22a), and a free end of the feeding apparatus (26a) is configured to extend in the avoidance area (211a) to correspond to a central position of the feeding box (22a).

6. The cooking device according to claim 5, wherein the feeding box assembly (2a) further comprises a feeding rotating mechanism (27a), the feeding rotating mechanism (27a) is configured to drive the feeding apparatus (26a) to rotate, and the feeding rotating mechanism (27a) is located in the extension area (212a).

7. The cooking device according to claim 6, wherein the feeding rotating mechanism (27a), the feeding apparatus (26a) and the driving mechanism (24a) are distributed in sequence in the X-axis direction.

8. The cooking device according to claim 5, wherein the motion mechanism (23a) comprises a synchronous belt assembly (231a) and a magnetic bracket (232a), and the synchronous belt assembly (231a) is configured to drive the magnetic bracket (232a) to move along the X-axis direction on the housing (21a) under the drive of the driving mechanism (24a);
in the Y-axis direction, a distance between the driving mechanism (24a) and the synchronous belt assembly (231a) is greater than a width of each seasoning box (12a).

9. The cooking device according to claim 8, wherein the synchronous belt assembly (231a) is connected with the driving mechanism (24a) through a transmission shaft (25a) in a transmission way, and the transmission shaft (25a) extends from above the avoidance area (211a) to the extension area (212a).

10. The cooking device according to claim 8, wherein the synchronous belt assembly (231a) comprises a pulley (2312a), a pulley bracket (2313a), and a rotating shaft (2314a) connecting the pulley to the pulley bracket (2313a) in a rotation way; and further comprises bearings (2315a) sleeved on the rotating shaft (2314a) and respectively located on two sides of the pulley (2312a); and outer rings of the bearings (2315a) are fixed on the pulley bracket (2313a), and inner rings are fixed with the rotating shaft (2314a).

11. The cooking device according to claim 10, wherein the bearings (2315a) are flange bearings, and flange edge (23151a) of the outer rings of the flange bearings abut against a side wall of the pulley bracket (2313a).

12. The cooking device according to claim 3, wherein the seasoning box assembly (1a) further comprises a delivering mechanism (14a), and the delivering mechanism (14a) is configured to deliver seasoning in the seasoning box (12a) into the pot body assembly;
the frame (11a) comprises a seasoning box area (15a) at a side away from the pot body assembly and a pipeline area (16a) at a side adjacent to the pot body assembly; the seasoning box (12a) is arranged in the seasoning box area (15a), the delivering mechanism (14a) is arranged in the pipeline area (16a), and the pipeline area (16a) is located at a corresponding position below the extension area (212a).

13. The cooking device according to claim 12, wherein the seasoning box area (15a) is arranged with a receiving groove, the seasoning box (12a) is constructed to be arranged in the receiving groove along the X-axis direction, and the top of the seasoning box (12a) protrudes from the receiving groove and is higher than an end surface of the frame (11a).

14. The cooking device according to claim 12, wherein gaps are formed between two sides of the seasoning box (12a) and the frame (11a), and between the top of the seasoning box (12a) and the feeding box assembly (2a).

15. A feeding apparatus, comprising:

a seasoning box assembly (1a), wherein the seasoning box assembly (1a) comprises a frame (11a) and at least one seasoning box (12a) arranged in sequence on the frame (11a) along an X-axis direction; a top of the seasoning box (12a) is higher than a top of the frame (11a);
a feeding box assembly (2a), wherein the feeding box assembly (2a) comprises a housing (21a) mounted on the frame (11a), at least one feeding box (22a) located on a top of the housing (21a), and a motion apparatus located in an inner cavity of the housing (21a) and constructed to drive the feeding box (22a) to move along the X-axis direction; the motion apparatus comprises a motion mechanism (23a) controlled by a driving mechanism (24a); projections of the motion mechanism (23a) and the seasoning box (12a) on a vertical plane parallel to the X-axis respectively partially overlap with the driving mechanism (24a).

16. A feeding apparatus, used for feeding materials to a cooking assembly, comprising:

a bearing assembly, comprising a driving piece and a bearing piece, wherein the driving piece is connected to the bearing piece and is able to drive the bearing piece to move along a first direction;

at least two material storage containers, arranged on the bearing piece along the first direction, and the material storage containers have a discharge port; and

a feeding assembly, having a driving part and a feeding part, wherein the driving part is connected to the feeding part, and the feeding part is used to drive the material storage containers to move relative to the bearing piece, to supply material from the discharge port to the cooking assembly;

wherein, the material storage containers are provided with a guide part, the guiding part is located on a side of the discharge port close to the cooking assembly and comprises a guide section and an anti-backflow section arranged in sequence, the anti-backflow section extends from the guide section in a direction away from the discharge port, to form a bend at a junction of the guide section and the anti-backflow section, and a bending angle of the bend is greater than or equal to 90°.

17. The feeding apparatus according to claim 16, wherein the discharge port is located on an upper side of the material storage container, the guide section is an arc-shaped section protruding toward an inner side of the material storage container, and the anti-backflow section is located on a lower side of an end of the guide section.

18. The feeding apparatus according to claim 16, wherein a discharge flow channel is formed at the discharge port, the discharge flow channel gradually shrinks toward a middle along a direction approaching the cooking assembly, and the guide part is located at an outlet of the discharge flow channel.

19. The feeding apparatus according to claim 16, wherein a concave-convex structure is provided in the material storage container.

20. The feeding apparatus according to claim 19, wherein the concave-convex structure comprises a convex part and a guide rib, wherein:

the convex part is arranged on a bottom wall of the material storage container;

the guide rib is arranged on a side wall of the material storage container, and the guide rib extends from the bottom wall of the material storage container to the discharge port.

21. The feeding apparatus according to claim 16, wherein,

the bearing piece is provided with several receiving grooves arranged along the first direction, and each of the receiving grooves is used to accommodate one of the material storage containers;

a matching gap is formed between a side close to the cooking assembly of the material storage container and the receiving groove.

22. The feeding apparatus according to claim 21, wherein the matching gap gradually increases along a direction approaching the cooking assembly.

23. The feeding apparatus according to claim 21 or 22, wherein,

the receiving groove is provided with a guide surface at an inner wall of a side close to the cooking assembly;

corresponding to the guide surface, the material storage container is provided with a matching surface at a bottom of a side close to the cooking assembly, and the matching gap is located between the guide surface and the matching surface.

24. The feeding apparatus according to claim 23, wherein at least one of the guide surface and the matching surface is a curved surface.

25. The feeding apparatus according to claim 21, wherein the bearing piece is provided with a reinforcing connection part on a side close to the cooking assembly, and the reinforcing connection part closes a side of several receiving grooves close to the cooking assembly along the first direction.

26. A material storage container, comprising:

a discharge port;

a guide section, arranged at the discharge port, for forming a Coanda effect;

an anti-backflow section, arranged at an end of the guide section, wherein the anti-backflow section extends from the guide section in a direction away from the discharge port to form a bend at a junction of the guide section and the anti-backflow section.

27. The material storage container according to claim 26, wherein the discharge port is located on an upper side of the material storage container, the guide section is an arc-shaped section protruding toward the inner side of the material storage container, and the anti-backflow section is located on a lower side of the end of the guide section.

28. The material storage container according to claim 26, wherein a discharge flow channel is formed at the discharge port, and the discharge flow channel gradually shrinks toward a middle along a direction away from the material storage container.

29. The material storage container according to claim 26, wherein a concave-convex structure is provided in the material storage container.

30. The material storage container according to claim 29, wherein the concave-convex structure comprises a convex part and a guide rib, wherein:

the convex part is arranged on a bottom wall of the material storage container;

the guide rib is arranged on a side wall of the material storage container, and the guide rib extends from the bottom wall of the material storage container to the discharge port.

31. A cooking device, comprising a feeding apparatus, wherein the feeding apparatus comprises a frame (1c), a feeding box (2c) and a feeding mechanism, and the feeding mechanism is configured to drive the feeding box (2c) to feed; the feeding mechanism comprises:

a feeding arm (41c), wherein the feeding arm (41c) is connected to the frame (1c) in a rotation way;

an electromagnet (42c), wherein the electromagnet (42c) is arranged on the feeding arm (41c) and is configured to adsorb the feeding box (2c) when being powered;

a conductive apparatus (43c), wherein the conductive apparatus (43c) comprises a rotor (431c) and a stator (432c) being connected in a rotation way and electrically conductive, the stator (432c) is fixed on the frame (1c), the rotor (431c) is constructed to rotate synchronously with the feeding arm (41c); the rotor (431c) is provided with a conductive wire (434c) rotating synchronously with the rotor (431c) and the feeding arm (41c), the conductive wire (434c) is constructed to extend from a position connected with the rotor (431c) to a position connected with the electromagnet (42c).

32. The cooking device according to claim 31, wherein the conductive apparatus (43c) further comprises a pin shaft (435c), the pin shaft (435c) is arranged to penetrate the rotor (431c), and a first clamping end (4351c) is arranged on a side of the pin shaft (435c) close to the feeding arm (41c);

the feeding arm (41c) is constructed to be hinged on the frame (1c) via a hinge shaft (411c); a second clamping end (4111c) mutually clamped with the first clamping end (4351c) is provided on a side of the hinge shaft (411c) close to the rotor (431c).

33. The cooking device according to claim 32, wherein the feeding mechanism further comprises a bearing (412c), an inner ring of the bearing (412c) is sleeved on an end of the hinge shaft (411c) passing through the feeding arm (41c), and an outer ring is fixedly connected to the frame (1c).

34. The cooking device according to claim 33, wherein a feeding arm groove (11c) is opened on the frame (1c) and extends to a top of the frame (1c), the feeding arm (41c) is arranged in the feeding arm groove (11c), the hinge shaft (411c) passes through a groove wall of the feeding arm groove (11c), and the outer ring of the bearing (412c) is fixed in a bearing seat arranged on the inner wall of the feeding arm groove (11c).

35. The cooking device according to claim 31, wherein the feeding apparatus comprises a tray (3c) arranged on the top of the frame (1c), the feeding box (2c) is arranged on the tray (3c), and the tray (3c) is provided with a feeding hole (31c) through which the feeding arm (41c) passes, and a blocking edge (32c) is provided at an end of the feeding hole (31c) facing a feeding direction.

36. The cooking device according to claim 35, wherein the feeding arm (41c) comprises a hinge section (413c) and an adsorption section (414c), and the electromagnet (42c) is arranged on the adsorption section (414c); the hinge section (413c) is constructed to be in an arch shape bending in a direction away from the feeding box (2c), and is constructed to avoid the blocking edge (32c) when the feeding arm (41c) rotates to a feeding position.

37. The cooking device according to claim 36, wherein a rotation axis of the feeding arm (41c) is located directly below the blocking edge (32c).

38. The cooking device according to claim 35, wherein the feeding apparatus further comprises a motion mechanism, the motion mechanism is arranged in the frame (1c) and is configured to drive the tray (3c) to move on the frame (1c) to move the feeding box (2c) to a position above the feeding arm (41c).

39. The cooking device according to claim 32, wherein the rotor (431c) is provided with a magnetic piece, and the magnetic piece is configured to rotate synchronously with the feeding arm (41c); the feeding mechanism further comprises an angle detection unit (437c), the angle detection unit (437c) is arranged at a position corresponding to the magnetic piece and is configured to obtain a rotation angle of the rotor (431c).

40. The cooking device according to claim 39, wherein the magnetic piece is an annular magnet (436c), and the annular magnet (436c) is arranged at an end of the rotor (431c) away from the feeding arm (41c), and the angle detection unit (437c) is constructed to be arranged opposite to the annular magnet (436c).

41. The cooking device according to claim 40, wherein a flange (4352c) is provided on a side of the pin shaft (435c) away from the feeding arm (41c), and the annular magnet (436c) is sleeved on the pin shaft (435c), with an end abutting against the flange (4352c) and the other end abutting against the rotor (431c).

42. The cooking device according to claim 41, wherein the feeding mechanism further comprises a connecting bracket (438c), and the conductive apparatus (43c) and the angle detection unit (437c) are respectively arranged on the connecting bracket (438c), so that the angle detection unit (437c) and the magnetic piece are arranged opposite to each other, and a gap is formed between the angle detection unit (437c) and the magnetic piece.

43. The cooking device according to claim 42, wherein the connecting bracket (438c) comprises a first bracket body (4381c) and a second bracket body (4382c), the conductive apparatus (43c) is arranged on the first bracket body (4381c), the angle detection unit (437c) is arranged on the second bracket body (4382c), and the first bracket body (4381c) and the second bracket body (4382c) are constructed to be detachably connected.

44. A feeding apparatus, comprising a frame (1c), a feeding box (2c) and a feeding mechanism, wherein the feeding mechanism is configured to drive the feeding box (2c) to feed; the feeding mechanism comprises:

a feeding arm (41c), wherein the feeding arm (41c) is connected to the frame (1c) in a rotation way; an electromagnet (42c), wherein the electromagnet (42c) is arranged on the feeding arm (41c) and configured to adsorb the feeding box (2c) when powered; a conductive apparatus (43c), wherein the conductive apparatus (43c) comprises a rotor (431c) and a stator (432c) being connected in a rotation way and electrically conductive, the stator (432c) is fixed on the frame (1c), the rotor (431c) is constructed to rotate synchronously with the feeding arm (41c); the rotor (431c) is provided with a conductive wire (434c) rotating synchronously with the rotor (431c) and the feeding arm (41c), and the conductive wire (434c) is constructed to extend from a position connected with the rotor (431c) to a position connected with the electromagnet (42c).

45. A feeding apparatus, comprising a frame (1c), a feeding box (2c), a tray (3c) and a feeding mechanism, wherein the tray (3c) is arranged on a top of the frame (1c), the feeding box (2c) is arranged on the tray (3c), the tray (3c) is provided with a feeding hole (31c), a blocking edge (32c) is arranged at an end of the feeding hole (31c) facing a feeding direction, and the feeding mechanism is configured to drive the feeding box (2c) to feed through the feeding hole (31c); the feeding mechanism comprises a feeding arm (41c) connected to the frame (1c) in a rotation way; the feeding arm (41c) comprises a hinge section (413c) and an adsorption section (414c); the hinge section (413c) is constructed to be in an arch shape bending in a direction away from the feeding box (2c), and is constructed to avoid the blocking edge (32c) when the feeding arm (41c) rotates to a feeding position.

46. A feeding method for a cooking device, wherein there are a first stage and a second stage in a feeding process, a feeding assembly drives a material storage container to flip at an absolute angle of $\delta$ in the first stage, the feeding assembly drives the material storage container to flip at an absolute angle of $\theta$ in the second stage, and $\delta$ is less than $\theta$; wherein, a speed at which the feeding assembly drives the material storage container to flip in the first stage is $W_1$, a speed at which the feeding assembly drives the material storage container to flip in the second stage is $W_2$, and $W_2$ is greater than $W_1$.

47. The feeding method for the cooking device according to claim 46, wherein in the second stage, when the feeding assembly drives the material storage container to flip to a position of an absolute angle $\theta$, the material storage container is maintained at this position for a preset time.

48. The feeding method for the cooking device as according to claim 46, wherein there is further a third stage in the feeding process, and in the third stage, the material storage container is driven to shake back and forth along a flipping direction.

49. The feeding method for the cooking device according to claim 48, wherein at the end of the third stage, the material storage container is maintained at the maximum flip angle and stays for a preset time.

50. The feeding method of the cooking device according to claim 48, wherein:

    a first mode and a second mode are further provided;
    in the first mode, solid food materials and/or seasonings are provided by the feeding method of the cooking device;
    in the second mode, liquid ingredients and/or seasonings are provided by the feeding method of the cooking device;
    a turnover speed $W_{11}$ of the first stage in the first mode is greater than a turnover speed $W_{12}$ of the first stage in the second mode.

51. The feeding method of the cooking device according to claim 50, wherein a turnover speed $W_{21}$ of the second stage in the first mode is greater than the turnover speed $W_{22}$ of the second stage in the second mode.

52. The feeding method of the cooking device according to claim 50, wherein a third mode is further provided, in third mode, viscous food materials and/or seasonings are provided by the feeding method of the cooking device, the viscous food materials and/or seasonings refer to food materials and/or seasonings having a viscosity higher than a preset value;
    in the third mode, the turnover speed $W_{23}$ in the second stage is slower than the flip speed $W_{21}$ in the first stage.

53. The feeding method of the cooking device according to claim 46, wherein $\alpha$ is set as the maximum turnover angle of the material storage container, $\theta$ is set to be less than or equal to $\alpha$, and the following formula is set to determine the value of $\alpha$:

$$\alpha = arctan\frac{h}{\varepsilon} + \beta$$

    wherein, the plane perpendicular to a rotation axis of the material storage container is a reference plane, a projection of the rotation axis on the reference plane is point O, a projection of a contact point of the material storage container and a pot body on the reference plane when the material storage container collides with the pot body after being flipped over by a feeding part is point F, h is a distance between the point F and the point O in a vertical direction; $\varepsilon$ is a projection of a distance from an outer wall of the feeding apparatus to the rotation axis along the vertical direction, and $\beta$ is an angle between an edge line of an opening side of the material storage container and a tangent line of the edge of a side wall of the material storage container at a contact point on the reference plane.

54. A cooking device, comprising a feeding apparatus, wherein the feeding apparatus comprises:

    a body, having a matching part; and
    a connecting piece, having a limiting part and a connecting part, wherein the limiting part is used to cooperate with the matching part to achieve positioning between the connecting piece and the body; and the connecting part is used to cooperate with a cooking container to achieve positioning between the connecting piece and the cooking container.

55. The cooking device according to claim 54, wherein the body comprises,

a base;
a bearing piece, arranged on the base and has several bearing positions along a first direction, wherein the bearing positions are used to bear a material storage container;
a driving assembly, connected to the bearing piece, and used to drive the bearing piece to move along a first direction; and
a feeding assembly, arranged on the base and is used to drive the material storage container on the bearing position to rotate so as to realize feeding.

56. The cooking device according to claim 54, wherein,

the limiting part comprises at least two of a first limiting part, a second limiting part and a third limiting part, and the feeding apparatus is provided with a first direction, a second direction and a third direction being perpendicular to each other;
when a first limiting part is provided, the matching part comprises a first matching part, and the first limiting part is used to match with the first matching part to limit a relative position between the body and the connecting piece in the first direction;
when a second limiting part is provided, the matching part comprises a second matching part, and the second limiting part is used to match with the second matching part to limit a relative position between the body and the connecting piece in the second direction;
when a third limiting part is provided, the matching part comprises a third matching part, and the third limiting part is used to match with the third matching part to limit a relative position between the body and the connecting piece in the third direction.

57. The cooking device according to claim 56, wherein the first limiting part is provided, and one of the first limiting part and the first matching part is a protruding part protruding toward the second direction, and the other is a recessed part recessed toward the second direction.

58. The cooking device according to claim 57, wherein a limiting slide rail is arranged on the protruding part along the second direction, and a limiting buckle is arranged on the recessed part corresponding to the limiting slide rail, and the limiting buckle is able to be engaged in the limiting slide rail and move along the second direction.

59. The cooking device according to claim 57, wherein the second limiting part is further provided, and the second limiting part is arranged on the first limiting part, and one of the second limiting part and the second matching part is a buckle position recessed along the third direction, and the other is a buckle arranged corresponding to the buckle position, and the buckle is able to be matched in the buckle position.

60. The cooking device according to claim 57, wherein the third limiting part is further provided, and the third limiting part is arranged on the first limiting part, and one of the third limiting part and the third matching part is a positioning pin, and the other is a slot, and the positioning pin is able to be matched in the slot.

61. The cooking device according to claim 54, wherein the connecting part is a connecting hole or a protruding structure.

62. The cooking device according to any one of claims 54 to 61, further comprising:
a cooking container, having an adapting part, wherein the adapting part is used to detachably cooperate with the connecting part of the feeding apparatus to limit a relative position between the cooking container and the feeding apparatus.

63. The cooking device according to claim 62, wherein when the connecting part of the feeding apparatus is a connecting hole, at least a part of legs of the cooking container is used as the adapting part.

64. The cooking device according to claim 54, wherein the cooking device is used to implement the feeding method of the cooking device according to any one of claims 46-53.

**65.** A feeding apparatus (10e) applied to a cooking apparatus, wherein the feeding apparatus (10e) comprises:

an apparatus body (11e);
a feeding piece (20e), arranged on the apparatus body (11e) in a flippable way;
a movable magnetic assembly (30e), movably arranged on the feeding piece (20e); and
a material holding piece (12e), used for holding materials, wherein the material holding piece (12e) has a target magnetic part (121e);
wherein, the target magnetic part (121e) is configured to be able to be adsorbed on the movable magnetic assembly (30e), so that the material holding piece (12e) is adsorbed on the material feeding piece (20e) and is able to flip with the material feeding piece (20e) to feed the material in the material holding piece (12e) into the cooking apparatus.

**66.** The feeding apparatus (10e) according to claim 65, wherein,

the feeding apparatus (10e) is defined with a set direction, and the apparatus body (11e) and the material holding piece (12e) are stacked along the set direction;
the movable magnetic assembly (30e) comprises:

a movable magnetic part (31e), wherein the target magnetic part (121e) is configured to be able to be absorbed to the movable magnetic part (31e); and
a connecting piece (32e), wherein the movable magnetic part (31e) is connected to the feeding piece (20e) in a rotation way via the connecting piece (32e);
wherein, the movable magnetic part (31e) is able to move relative to the feeding piece (20e) along the set direction, and/or the movable magnetic part (31e) is able to swing relative to the feeding piece (20e) along a direction perpendicular to the set direction.

**67.** The feeding apparatus (10e) according to claim 66, wherein,

the feeding piece (20e) has a first mounting part (21e), the first mounting part (21e) is provided with a first mounting hole (211e), the connecting piece (32e) is passed through the first mounting hole (211e), and a gap is provided between the connecting piece (32e) and a hole wall of the first mounting hole (211e);
the connecting piece (32e) comprises:

a connecting part (321e), connected to the movable magnetic part (31e) and passing through the first mounting hole (211e); and
a limiting part (322e), wherein the movable magnetic part (31e) and the limiting part (322e) are respectively located on two sides of the first mounting part (21e) in the set direction, the limiting part (322e) is used to limit the connecting piece (32e) from being separated from the first mounting hole (211e) along the set direction;
wherein, a distance between the movable magnetic part (31e) and the limiting part (322e) is greater than a length of the first mounting part (21e) in the set direction.

**68.** The feeding apparatus (10e) according to claim 67, wherein,
the connecting piece (32e) further comprises:

an adjusting sleeve (323e), sleeved on an outer periphery of the connecting part (321e), and the adjusting sleeve (323e) is sandwiched between the movable magnetic part (31e) and the limiting part (322e);
wherein, there is a gap between the outer wall of the adjusting sleeve (323e) and a hole wall of the first mounting hole (211e), and a length of the adjusting sleeve (323e) in the set direction is greater than a length of the first mounting part (21e) in the set direction.

**69.** The feeding apparatus (10e) according to claim 66, wherein,
the movable magnetic assembly (30e) further comprises:
an elastic supporting piece (33e), arranged between the movable magnetic part (31e) and the feeding piece (20e), wherein the elastic supporting piece (33e) is used to provide elastic support to the movable magnetic part (31e), and the elastic supporting piece (33e) is further used to seal the gap between the movable magnetic part (31e) and the feeding piece (20e).

**70.** The feeding apparatus (10e) according to claim 65, wherein,

the feeding apparatus (10e) further comprises:
a fixed magnetic assembly (40e), fixed to the feeding piece (20e), wherein the fixed magnetic assembly (40e) is used to cooperate with the movable magnetic assembly (30e) to adsorb the target magnetic part (121e).

71. The feeding apparatus (10e) according to claim 70, wherein,

the feeding piece (20e) comprises a first mounting part (21e) and a second mounting part (22e);
the movable magnetic assembly (30e) comprises:

a movable magnetic part (31e), wherein the target magnetic part (121e) is configured to be able to be absorbed to the movable magnetic part (31e); and
a connecting piece (32e), wherein the movable magnetic part (31e) is connected to the first mounting part (21e) in a rotation way via the connecting piece (32e);
the fixed magnetic assembly (40e) comprises:

a fixed magnetic part (41e), wherein the target magnetic part (121e) is configured to be able to be absorbed to the fixed magnetic part (41e); and
a fastener piece (42e), wherein the fixed magnetic part (41e) is fixed to the second mounting part (22e) via the fastener piece (42e).

72. The feeding apparatus (10e) according to claim 71, wherein,

the movable magnetic part (31e) has a first surface (311e) facing away from the first mounting part (21e), and the fixed magnetic part (41e) has a second surface (411e) facing away from the second mounting part (22e);
wherein, when the material holding piece (12e) is not adsorbed onto the material feeding piece (20e), the first surface (311e) is higher than the second surface (411e), so that the movable magnetic part (31e) is able to be adsorbed onto the target magnetic part (121e) before the fixed magnetic part (41e).

73. The feeding apparatus (10e) according to claim 71, wherein,

the first mounting part (21e) has a third surface (212e) facing the movable magnetic part (31e), and the second mounting part (22e) has a fourth surface (222e) facing the fixed magnetic part (41e);
wherein, the third surface (212e) is not higher than the fourth surface (222e), so that the target magnetic part (121e) is able to be simultaneously adsorbed on the movable magnetic part (31e) and the fixed magnetic part (41e).

74. The feeding apparatus (10e) according to claim 71, wherein,

the feeding piece (20e) further comprises a first mounting groove (23e) and a second mounting groove (24e), the first mounting part (21e) is located at a groove bottom of the first mounting groove (23e), and the movable magnetic part (31e) is movably embedded in the first mounting groove (23e), the second mounting part (22e) is located at a groove bottom of the second mounting groove (24e), and the fixed magnetic part (41e) is fixed in the second mounting groove (24e);
wherein, a first protrusion (231e) is protrudingly provided on a side wall of the first mounting groove (23e), a second protrusion (241e) is protrudingly provided on a side wall of the second mounting groove (24e), and a height of the first protrusion (231e) is smaller than a height of the second protrusion (241e).

75. The feeding apparatus (10e) according to claim 71, wherein,

a first anti-rotation column (511e) is protrudingly provided on one of the first mounting part (21e) and the movable magnetic part (31e), a first anti-rotation hole (512e) is provided on the other, and the first anti-rotation column (511e) is able to be embedded in the first anti-rotation hole (512e) to cooperate with the first anti-rotation hole (512e) to limit a rotation of the movable magnetic part (31e);
a second anti-rotation column (521e) is protrudingly provided on one of the second mounting part (22e) and the fixed magnetic part (41e), a second anti-rotation hole (522e) is provided on the other, and the second anti-rotation column (521e) is able to be embedded in the second anti-rotation hole (522e) to cooperate with the second anti-rotation hole (522e) to limit a rotation of the fixed magnetic part (41e).

**76.** The feeding apparatus (10e) according to claim 71, wherein,

the first mounting part (21e) is provided with a first wire passing hole (213e), the movable magnetic part (31e) has a first wire (312e), and the first wire (312e) is passed through the first wire passing hole (213e);
the second mounting part (22e) is provided with a second wire passing hole (223e), the fixed magnetic part (41e) has a second wire (412e), and the second wire (412e) is passed through the second wire passing hole (223e).

**77.** The feeding apparatus (10e) according to claim 70, wherein,
the fixed magnetic assembly (40e) comprises:

a fixed magnetic part (41e), fixed to the feeding piece (20e), wherein the fixed magnetic part (41e) is used to cooperate with the movable magnetic assembly (30e) to adsorb the target magnetic part (121e); and
a sealing piece (43e), provided between the fixed magnetic part (41e) and the feeding piece (20e), wherein the sealing piece (43e) is used to seal a gap between the fixed magnetic part (41e) and the feeding piece (20e).

**78.** The feeding apparatus (10e) according to any one of claims 70-77, wherein,
a group number of the movable magnetic assembly (30e) is at least one group, and the group number of the fixed magnetic assembly (40e) is one group.

**79.** A cooking system, comprising a cooking apparatus and a feeding apparatus (10e) according to any one of claims 65-78, wherein the feeding apparatus (10e) comprises:

an apparatus body (11e);
a feeding piece (20e), arranged on the apparatus body (11e) in a flippable way;
a movable magnetic assembly (30e), movably arranged on the feeding piece (20e); and
a material holding piece (12e), used for holding materials, wherein the material holding piece (12e) has a target magnetic part (121e);
wherein, the target magnetic part (121e) is configured to be able to be adsorbed on the movable magnetic assembly (30e), so that the material holding piece (12e) is adsorbed on the material feeding piece (20e) and is able to be turned over with the material feeding piece (20e) to feed materials in the material holding piece (12e) into the cooking apparatus.

Z axis

X axis

Y axis

area where the pot body
assembly located

FIG. 1

Y axis

X axis

FIG. 2

FIG. 3

FIG. 4

FIG. 5

FIG. 6

FIG. 7

FIG. 8

FIG. 9

10b

100b

210b(200b) X

211b

300b

FIG. 10

100b

141b

110b

131b

130b

120b

131b

FIG. 11

100b

110b

121b

122b } 120b

B

d

FIG. 12

100b

131b

131b

FIG. 13

100b

150b

151b

152b

FIG. 14

100b

211b    211b    211b

200b

300b

X

FIG. 15

100b
A
400b
210b

211b
310b

300b

forward
direction

FIG. 16

FIG. 17

FIG. 18

121b
122b
120b

α

FIG. 19

2c
3c
1c
5c

11c

1c

area where the pot body
assembly located

FIG. 20

FIG. 21

FIG. 22

FIG. 23

FIG. 24

FIG. 25

FIG. 26

FIG. 27

FIG. 28

2c

3c

31c

42c

42c

434c

432c

431c

438c

436c

1c

4111c

411c

412c

41c

4352c

437c

435c

FIG. 29

31c

3c

2c

32c

33c

FIG. 30

FIG. 31

436c

N pole

S pole

FIG. 32

FIG. 33

FIG. 34

FIG. 35

FIG. 36

FIG. 37

FIG. 38

100d

FIG. 39

FIG. 40

FIG. 41

150d

FIG. 42

FIG. 43

110d

111d

114d

115d

154d

150d

151d

Z

Y

X

117d 116d

FIG. 44

115d

114d

154d

153d

151d

115d

154d

111d

116d

Y

X

FIG. 45

FIG. 46

FIG. 47

210d

230d

154d

151d  150d  230d

155d

Z
Y
X

FIG. 48

130d

140d

120d

110d

111d

210d

200d

220d

230d

Z
Y

FIG. 49

FIG. 50

FIG. 51

FIG. 52

12e

20e

60e          60e

FIG. 53

12e
311e

Z

31e

212e

211e
33e

21e

D1    D2

322e
323e
321e    32e

FIG. 54

20e

241e        24e      23e
521e                        231e
22e                          511e
                              21e
                              211e
221e    223e    213e

FIG. 55

FIG. 56

31e

FIG. 57

41e

FIG. 58

## INTERNATIONAL SEARCH REPORT

| International application No. |
|---|
| **PCT/CN2023/123360** |

### A. CLASSIFICATION OF SUBJECT MATTER

A47J 27/00(2006.01)i; A47J 36/00(2006.01)i

According to International Patent Classification (IPC) or to both national classification and IPC

### B. FIELDS SEARCHED

Minimum documentation searched (classification system followed by classification symbols)

IPC:A47J

Documentation searched other than minimum documentation to the extent that such documents are included in the fields searched

Electronic data base consulted during the international search (name of data base and, where practicable, search terms used)

CNTXT, WPABSC, ENTXTC, VEN: 调料, 调味, 投料, 加料, 储料, 料盒, 高度, 高于, 体积, 容积, 容量, 驱动, 动力, 电机, 电动机, 马达, 重叠, 重合, 避让, 延伸, 移动, 运动, 平移, seasoning, flavoring, feed+, stock+, height+, high+, volume, capacity, motor+, mov???, overlap+, avoidance, extan+, driv+

### C. DOCUMENTS CONSIDERED TO BE RELEVANT

| Category* | Citation of document, with indication, where appropriate, of the relevant passages | Relevant to claim No. |
|---|---|---|
| PX | CN 218571995 U (TINECO INTELLIGENT TECHNOLOGY CO., LTD.) 07 March 2023 (2023-03-07) <br> claims 1-15 | 1-15 |
| X | CN 114766898 A (TINECO INTELLIGENT TECHNOLOGY CO., LTD.) 22 July 2022 (2022-07-22) <br> description, paragraphs 64-117, and figures 1-6 | 1-15 |
| A | CN 111956054 A (SICHUAN CHANGHONG INTELLIGENT MANUFACTURING TECHNOLOGY CO., LTD.) 20 November 2020 (2020-11-20) <br> entire document | 1-15 |
| A | CN 217471705 U (JIN, Longze) 23 September 2022 (2022-09-23) <br> entire document | 1-15 |
| A | CN 210961696 U (WUXI DINGFENGSHAN CATERING CO., LTD.) 10 July 2020 (2020-07-10) <br> entire document | 1-15 |

☑ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **12 January 2024** | **15 January 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2023/123360** |

**C.    DOCUMENTS CONSIDERED TO BE RELEVANT**

| Category* | Citation of document, with indication, where appropriate, of the relevant passages | Relevant to claim No. |
|---|---|---|
| A | KR 102075001 B1 (WISE BROTHERS CORP.) 07 February 2020 (2020-02-07)<br>entire document | 1-15 |

Form PCT/ISA/210 (second sheet) (July 2022)

## INTERNATIONAL SEARCH REPORT

| International application No. |
| --- |
| **PCT/CN2023/123360** |

**Box No. III    Observations where unity of invention is lacking (Continuation of item 3 of first sheet)**

This International Searching Authority found multiple inventions in this international application, as follows:

Independent claims 1 and 15 mainly relate to a charging device of a cooking apparatus; independent claim 16 relates to a supply device, and independent claim 26 relates to a storage container; independent claim 46 relates to a supply method for a cooking apparatus; independent claim 54 mainly relates to a supply device of a cooking apparatus; and independent claims 65 and 79 relate to a feeding device applied to a cooking device and a cooking system comprising the feeding device. Apart from the designation of the subject matter, the technical solutions defined in the five groups of independent claims do not have a same technical feature, and therefore said claims do not have a same or corresponding special technical feature therebetween.

Independent claim 31 relates to a cooking apparatus, and independent claim 44 relates to a charging device. Apart from the designation of the subject matter, independent claims 31 and 44 and independent claims 16, 26, 46 and 54 do not have a same technical feature. Independent claims 31 and 44 and independent claims 1 and 15 comprise the same technical feature of a charging device comprising a rack and a feeding box; independent claims 31 and 44 and independent claim 45 comprise the same or corresponding technical features of a charging device comprising a rack, a feeding box and a feeding mechanism, the feeding mechanism comprising a feeding arm rotationally connected to the rack; and independent claims 31 and 44 and independent claims 65 and 79 comprise the same or corresponding technical features of a containing member, and a feeding member being arranged on a device main body in an overturning manner. However, the same or corresponding technical features mentioned above are common general knowledge in the art. Therefore, independent claims 31 and 44 and the other six groups of independent claims do not have a same or corresponding special technical feature therebetween.

Independent claim 45 sets forth a charging device. Said claim and independent claims 16, 26, 46 and 54 do not have a same technical feature. Independent claim 45 and independent claims 1 and 15, and 65 and 75 comprise the same or corresponding technical feature of a charging device comprising a feeding box. However, the feature is common general knowledge in the art. Therefore, independent claim 45 and the five groups of independent claims do not have a same or corresponding special technical feature.

In summary, the technical solutions defined in the seven groups of independent claims do not have a same or corresponding special technical feature therebetween, and therefore said claims do not comply with the requirement of unity of invention.

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☑ No required additional search fees were timely paid by the applicant. Consequently, this international search report is restricted to the invention first mentioned in the claims; it is covered by claims Nos.: **1-15**

**Remark on Protest**    ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (July 2022)

## INTERNATIONAL SEARCH REPORT
### Information on patent family members

International application No.

**PCT/CN2023/123360**

| Patent document cited in search report | | | Publication date (day/month/year) | Patent family member(s) | Publication date (day/month/year) |
|---|---|---|---|---|---|
| CN | 218571995 | U | 07 March 2023 | None | |
| CN | 114766898 | A | 22 July 2022 | None | |
| CN | 111956054 | A | 20 November 2020 | None | |
| CN | 217471705 | U | 23 September 2022 | None | |
| CN | 210961696 | U | 10 July 2020 | None | |
| KR | 102075001 | B1 | 07 February 2020 | None | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211255359
- CN 202211255984
- CN 202211255667
- CN 202211394032
- CN 202211702898